# EUROPÄISCHE PATENTSCHRIFT

(11) **EP 0 837 888 B1**
(45) Veröffentlichungstag und Bekanntmachung des Hinweises auf die Patenterteilung: **08.03.2000**
(21) Anmeldenummer: 96923942.5
(22) Anmeldetag: 26.06.1996
(51) Int. Cl.: C08F 257/02, C08F 265/04, C08F 285/00

(54) **NEUE POLYMERZUSAMMENSETZUNGEN FÜR PFROPFCOPOLYMERISATE SOWIE DEREN MISCHUNGEN UND DIESE ENTHALTENDE THERMOPLASTISCHE MASSEN**
NEW POLYMER COMPOSITIONS FOR GRAFT COPOLYMERS AS WELL AS MIXTURES THEREOF AND THERMOPLASTIC COMPOUNDS CONTAINING THEM
NOUVELLES COMPOSITIONS POLYMERES POUR COPOLYMERES GREFFES AINSI QUE LEURS MELANGES ET LES MATIERES THERMOPLASTIQUES LES CONTENANT.

(30) Priorität: 26.06.1995 DE 19523080; 20.03.1996 DE 19610896; 20.03.1996 DE 19610897
(43) Veröffentlichungstag der Anmeldung: 29.04.1998
(73) Patentinhaber: BASF AKTIENGESELLSCHAFT, 67056 Ludwigshafen (DE)
(72) Erfinder: FISCHER, Michael, D-67071 Ludwigshafen (DE); KOCH, Jürgen, D-67141 Neuhofen (DE); ROSENAU, Bernhard, D-67434 Neustadt (DE); MC KEE, Graham, Edmund, D-67433 Neustadt (DE); GRABOWSKI, Sven, D-67061 Ludwigshafen (DE); MOSBACH, Norbert, D-67133 Maxdorf (DE); FISCHER, Wolfgang, D-67067 Ludwigshafen (DE); HECKMANN, Walter, D-69469 Weinheim (DE)
(74) Vertreter: Isenbruck, Günter, Dr.
(86) Internationale Anmeldenummer: EP9602793
(87) Internationale Veröffentlichungsnummer: WO9701588

(56) Entgegenhaltungen:
- EP-A- 0 256 391
- DE-A- 4 132 497

## Beschreibung

Die Erfindung betrifft ein Pfropfcopolymer (P1), in beliebiger Reihenfolge enthaltend
P1.1) ein Hartsegment mit einer Glastemperatur von mindestens 11 °C, das ein vinylaromatisches Monomer als Monomer oder als eines von zwei oder mehr miteinander copolymerisierbaren Monomeren sowie eine Vernetzerkomponente mit mindestens Dihydrodicyclopentadienylacrylat als einen Vernetzer mit zwei oder mehr funktionellen Gruppen unterschiedlicher Reaktivität und mindestens einen Vernetzer mit zwei oder mehr funktionellen Gruppen gleicher Reaktivität beinhaltet, und
P1.2) ein Weichsegment mit einer Glastemperatur von höchstens 10 °C, das mindestens ein Acrylat als Monomer oder als eines von zwei oder mehr miteinander copolymerisierbaren Monomeren beinhaltet.

Weiterhin betrifft die vorliegende Erfindung ein Verfahren zur Herstellung dieser Segmente sowie deren Verwendung zur Herstellung von Pfropfcopolymerisaten, Verfahren zur Herstellung dieser Pfropfcopolymerisate, deren Verwendung in Mischungen, Pfropfcopolymerisate enthaltende Mischungen, Verfahren zur Herstellung dieser Mischungen sowie die Verwendung dieser Pfropfcopolymerisate und Mischungen zur Herstellung thermoplastischer Massen und diese thermoplastischen Massen. Bevorzugte Ausführungsformen sind sowohl den Unteransprüchen als auch der Beschreibung zu entnehmen. Zudem betrifft die Erfindung Formkörper, Folien, Fasern und Beschichtungen, die die erfindungsgemäßen Pfropfcopolymerisate, Mischungen sowie Massen enthalten oder verwenden.

Pfropfcopolymerisate, die häufig auch als "Kern-Schale"-Teilchen bezeichnet werden, sind beispielsweise als Schlagzähmodifier für Kunststoffe wie Styrol-Acrylnitril-Copolymere, Polyvinylchlorid (PVC), Polymethylmethacrylat oder Polycarbonat bekannt. Sie können zwei oder mehrstufig aufgebaut sein. Die Pfropfgrundlage, der "Kern", kann aus elastomerem "weichem" Segment, d.h. solchem mit Glasübergangstemperaturen von weniger als ca. 24°C, z.B. weniger als 0°C, oder nicht elastomeren, "hartem" Segment, d.h. solchem mit Glasübergangstemperaturen von mehr als etwa 25°C, z.B. mehr als 50°C, bestehen. Die Pfropfauflage, "Schale" oder "Hülle", kann entsprechend hart bzw. weich oder im Fall von mehrstufigen Pfropfcopolymerisaten abwechselnd hart oder weich bzw. weich oder hart sein.

Die Glastemperatur der einzelnen Stufen kann jeweils durch die Wahl der Monomeren und zusätzlich durch Zugabe eines oder mehrerer Vernetzer beeinflußt werden. Vernetzend wirken z.B. Monomere, die zwei oder mehr funktionelle Gruppen aufweisen, die mit den die Pfropfgrundlage oder -auflage aufbauenden Monomeren reagieren können. Reagieren alle funktionellen Gruppen des polyfunktionellen Monomeren gleichschnell ab, so wirken diese Monomere nur vernetzend. Enthalten die Vernetzer jedoch funktionelle Gruppen unterschiedlicher Reaktivität, so können die nicht abreagierten funktionellen Gruppen als Pfropfstellen, beispielsweise für die Anbindung einer Pfropfauflage an die Pfropfgrundlage dienen. Derartige Vernetzer wirken also nicht nur vernetzend sondern auch pfropfaktiv.

Für welche Zwecke Pfropfcopolymerisate eingesetzt werden können, wie sie beispielsweise optische Qualität, Einfärbbarkeit, Witterungsstabilität oder Schlagrißbildung sowie Spannungsrißkorrosion in Formmassen beeinflussen, hängt von deren Aufbau aber auch von deren Größe und Morphologie ab.

Bislang war es nicht möglich, Pfropfcopolymerisate (z.B. solche aufgebaut aus einem Polystyrolkern, einer ersten Schale aus Polybutylacrylat und einer zweiten Schale aus Styrol-Acrylnitril-Copolymeren) großer Teilchengröße mit wirklicher Kern-Schale-Struktur herzustellen, wenn Kern- und Schalenmaterialien miteinander unverträglich waren (siehe z.B. H.Okubo, Makromol. Chem., Macromol. Symp.35/36 (1990) 307-325). Ab bestimmten Teilchendurchmessern der Pfropfgrundlage (ab ca. 100 bis 150 nm und Gesamtteilchengrößen ab ca. 200 nm) zeigt sich nämlich bei derartigen Pfropfcopolymerisaten, daß Pfropfgrundlage und -auflage keine definierte Kern-Schale-Struktur bilden. Dabei ist der Kern nicht vollständig und im wesentlichen konzentrisch von der Pfropfauflage umhüllt. Die Pfropfgrundlage und -auflage sind teilweise vermischt oder das Kernmaterial bildet zum Teil die äußere Phasengrenze des "Kern-Schale"-Teilchens. Hierdurch entsteht eine himbeerartige Morphologie.

Deshalb weisen die bislang bekannten Pfropfcopolymerisate mit definierter Kern-Schale-Struktur, deren Kern- und Schalenmaterialien miteinander unverträglich sind, nur kleine bzw. im Verhältnis zur Gesamtgröße der Pfropfcopolymerisate nur kleine Kerndurchmesser auf oder sie enthalten eine Pfropfgrundlage aus Material, das mit dem der Pfropfauflage verträglich ist.

Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der makromolekularen Chemie, Band IV, S. 222 ff, E. Vollmert-Verlag 1979).

Zwei Polymere sind umso besser verträglich, je geringer die Differenz ihrer Löslichkeitsparameter ist. Derartige Parameter sowie die Mischungsenthalpie sind nicht einheitlich für alle Polymeren bestimmbar, so daß die Löslichkeit nur indirekt, z.B. durch Torsions-Schwingungs- oder Differential-Thermo-Analyse-Messungen (DTA) bestimmbar ist.

Von einem mischbaren, d.h. verträglichen System aus zwei oder mehreren Polymeren kann zumindest dann ausgegangen werden, wenn dieses mindestens eines der folgenden Kriterien erfüllt:
- optische Klarheit
   Ein Film aus miteinander verträglichen Polymeren erscheint optisch klar, sind diese aber unverträglich, so erscheint der Film optisch trübe. Im Zweifelsfall kann eine elektronenmikroskopische Untersuchung den Grad der Entmischung ermitteln.
- Glastemperatur:
   Miteinander mischbare, d.h. verträgliche Polymere zeigen bei thermischen Belastungen (DTA- oder Differential-Scanning-Calorimetry-Messungen (DSC)) nur eine Glastemperatur, die zwischen denen der Ausgangspolymeren liegt. Bei teilverträglichen Polymeren können zwei verschiedene Glastemperaturen nachgewiesen werden.
- Kernspinresonanz-(NMR)-Relaxation:
   Eine sehr empfindliche Methode ist die Bestimmung der Polymermischbarkeit durch NMR-Relaxationszeitmessungen. Im Falle nicht mischbarer Polymere werden die Spin-Spin- bzw. Spin-Gitter-Relaxationszeiten der reinen Polymere gemessen, im Falle mischbarer Polymere treten andere Relaxationszeiten auf.
- sonstige Methoden:
   Andere anwendbare Verfahren, die zur Bestimmung der Mischbarkeit von Polymeren herangezogen werden können, sind Trübungsmessungen, Streumethoden (Lichtstreuung), IR-Spektroskopie und Fluoreszenztechniken (L.A. Utracki "Polymer Alloys and Blends", S.34-42, New York 1989).

Beispiele für miteinander mischbare Polymere sind in verschiedenen Monographien (z.B. J.Brandrup, E.H. Immergut: Polymer Handbook, 3rd Edition, 1989) ausführlich dokumentiert.

So war der US-A-4 108 946 eine Pfropfgrundlage mit einer Teilchengröße bis 240 nm aus vernetzten Monomerengemischen aus Styrol/Acrylnitril oder Styrol/Acrylnitril/Methylmethacrylat zu entnehmen, die mit einer Pfropfauflage aus Acrylestern versehen ist. Reines Polystyrol als Pfropfgrundlage wird als nicht wünschenswert bezeichnet.

Aus der DE-A-33 00 526 waren Pfropfcopolymerisate bekannt, die jeweils aus einem nichtelastischen Kern mit Durchmessern bis 500 nm, bevorzugt bis 200 nm, und einer vernetzten Acrylesterhülle aufgebaut sind. Für das Monomermaterial des Kerns wird bevorzugt überwiegend Methylmethacrylat eingesetzt.

Ebenso waren in der US-A-3 793 402 Pfropfcopolymerisate offenbart, deren Pfropfgrundlagen vernetzt sind. Als Vernetzer für Pfropfgrundlagen, die bevorzugt aus Styrol oder substituierten Styrolen bestehen, werden Polyvinylbenzole wie Divinyl- oder Trivinylbenzol beschrieben, jedoch die erfindungsgemäßen, vorteilhaften Vernetzerkombinationen nicht eingesetzt.

Darüber hinaus waren der DE-A-22 44 519 Pfropfcopolymerisate zu entnehmen, die je eine Pfropfgrundlage auf der Basis vinylaromatischer Verbindungen und bis zu 10 Gew.-% vernetzender Monomerer enthalten. Ferner waren in der DE-A-41 32 497 Pfropfcopolymerisate veröffentlicht, deren Pfropfgrundlagen überwiegend aus vinylaromatischen Monomeren aufgebaut sind und die vernetzend als auch pfropfaktiv wirkende Vernetzer enthalten können. Nach dem dort beschriebenen Verfahren können entweder Pfropfcopolymerisate erhalten werden, die kleine Kerne (bis ca. 150 nm) enthalten, oder solche, die keine definierte Kern-Schale-Morphologie aufweisen.

Um zu schlagzähen, thermoplastischen Massen zu gelangen, gibt man Pfropfkautschuke zu den bei Raumtemperatur spröden, die Matrix bildenden Polymerisaten. Die Herstellung solcher Schlagzähmodifizierer ist seit langem bekannt und beispielsweise in DE-A-12 60 135, DE-A-23 11 129 und DE-A-28 26 925 beschrieben. Besteht die Matrix aus Polystyrol oder Styrolcopolymeren, so läßt sich beobachten, daß die Wirksamkeit der Pfropfcopolymerisate bezüglich ihrer schlagzähmodifizierenden Wirkung mit zunehmender Größe der Pfropfcopolymerisate zunimmt. Bei Einsatz von kleinteiligen Pfropfkautschuken besteht gleichzeitig das Problem, daß die Zähigkeit der schlagzähmodifizierenden Massen stark von der Verarbeitungstemperatur abhängt.

Massen mit verbesserter Schlagzähigkeit bei gleichbleibend guter Einfärbbarkeit können durch Zumischen einer großteiligen zu einer kleinteiligen Kautschukkomponente (bimodale Kautschukteilchen) erhalten werden, wie in der DE-A-28 26 925 beschrieben. Oftmals reicht die dort erzielte Schlagzähigkeit, insbesondere die Tieftemperaturschlagzähigkeit, der Massen für hohe Beanspruchung nicht aus. Zudem kann die Schlagzähigkeit nicht durch beliebige Zugabe der großteiligen Kautschukmenge erhöht werden, da sonst die Einfärbbarkeit deutlich verschlechtert wird.

Aufgabe der vorliegenden Erfindung war es, Kunststoffe, insbesondere thermoplastische Massen zur Verfügung zu stellen, die vor allem bei tiefen Temperaturen, beispielsweise unter 0°C, bevorzugt unabhängig von der Verarbeitungstemperatur, bessere Schlagzähigkeit, Spannungsrißkorrosion und insbesondere bessere multiaxiale Zähigkeiten aufweisen und sich leichter einfärben lassen sowie widerstandsfähigere Oberflächen aufweisen, und deren Oberflächenbeschaffenheit, insbesondere Glanz und Mattheit, sich leicht einstellen lassen.

In diesem Zusammenhang war es eine weitere erfindungsgemäße Aufgabe, Pfropfcopolymerisate zur Verfügung zu stellen, bei denen sich die Teilchengröße und ein definierter Phasenübergang einstellen läßt, wobei der Einstellung von kleinen Teilchen (< 200 nm) und großen Teilchen (≥ 200 nm) bei definierten Phasenübergängen besondere Bedeutung zukommt.

Zudem lag eine erfindungsgemäße Aufgabe darin, daß Mischungen von Pfropfcopolymerisaten zur Verfügung gestellt werden, die die zuvor genannte Pfropfcopolymerisate enthalten, wobei Mischungen vorzugsweise aus klein- und großteiligen Pfropfcopolymerisaten bevorzugt zur Verfügung gestellt werden sollen.

Der vorliegenden Erfindung lag ferner die Aufgabe zugrunde, witterungsbeständige Produkte auf Basis von Acrylnitril-Styrol-Acrylestern(ASA)-Polymerisaten, insbesondere solche mit einer Polystyrol-co-Acrylnitril-Matrix, zu schaffen, welche neben den günstigen Eigenschaften der bekannten Massen, wie Witterungs- und Alterungsbeständigkeit, eine sehr gute Zähigkeit bei guter Einfärbbarkeit sowie eine Unabhängigkeit der Zähigkeit von den Verarbeitungstemperaturen aufweisen.

Diese Aufgaben werden überraschend durch die eingangs definierten Pfropfcopolymerisate sowie die diese enthaltenden Pfropfcopolymerisatmischungen und durch die Pfropfcopolymerisate und/oder Mischungen enthaltende thermoplastische Massen gelöst.

Die Pfropfcopolymerisate werden mit "P" bezeichnet. Die auf P folgende Zahl nummeriert die Pfropfcopolymerisate fortlaufend durch. Die darauf folgende Zahl nummeriert die Segmente durch, die das Pfropfcopolymerisat beinhaltet. Bei bevorzugten erfindungsgemäßen Pfropfcopolymerisaten, bei denen die Reihenfolge der aufeinanderfolgenden Segmente nicht beliebig ist, sondern feststeht, bezeichnen die Zahl 1 die Pfropfgrundlage und die Zahlen 2, 3 usw. die auf die Pfropfgrundlage folgenden Pfropfauflagen in ihrere Abfolge. Die dritte auf P folgende Zahl bezeichnet die von dem Segment beinhalteten Monomere, Vernetzer oder Vernetzerkomponenten.
Für die erfindungsgemäßen Mischungen steht "M". Die auf M folgende Zahl nummeriert die Mischungen fortlaufend durch. Die auf M an zweiter Stelle folgende römische Zahl in Großbuchstaben bezeichnet die Pfropfcopolymerisate, die die Mischung beinhaltet.
"T" bezeichnet die erfindungsgemäßen thermoplatischen Massen. Die auf T folgende Zahl nummeriert die thermoplastischen Massen fortlaufend durch. Die in Kleinbuchstaben geschriebenen römischen Zahlen bezeichnen die von den Massen beinhalteten Bestandteile.

Erfindungsgemäße Pfropfcopolymere P1, vorzugsweise mit Kern-Schale-Morphologie, enthalten vorzugsweise als Pfropfgrundlage ein Hartsegment P1.1 mit einer Glastemperatur von mindestens 11 °C, das mindestens ein vinylaromatisches Monomer als Monomer oder als eines von zwei oder mehr miteinander copolymerisierbaren Monomeren sowie eine Vernetzerkomponente mit mindestens Dihydrodicyclopentadienylacrylat als einen Vernetzer mit zwei oder mehr funktionellen Gruppen unterschiedlicher Reaktivität und mindestens einen Vernetzer mit zwei oder mehr funktionellen Gruppen gleicher Reaktivität beinhaltet, und als Pfropfauflage ein Weichsegment P1.2 mit einer Glastemperatur von höchstens 10 °C, das mindestens ein Alkylacrylat als Monomer oder als eines von zwei oder mehr miteinander copolymerisierbaren Monomeren beinhaltet, wobei der Phasenübergang zwischen den Segmenten vorzugsweise definiert, d.h. entweder scharf oder diffus ist.

Die erfindungsgemäßen Hartsegmente P1.1 besitzen vorzugsweise eine Glastemperatur von mindestens 11, bevorzugt mindestens 25 und besonders bevorzugt mindestens 50°C, wobei erfindungsgemäß insbesondere bevorzugt ist, wenn die Hartsegmente eine Glastemperatur von 80 bis 130°C aufweisen.

In einer bevorzugten Ausführungsform, in der das Hartsegment P1.1 als kernförmige Pfropfgrundlage verwandt wird, besitzt dieses eine mittlere Teilchengröße (d₅₀) von 200 - 2.000, insbesondere von 250 - 1.000 und besonders bevorzugt von 350 - 800 nm.

In einer anderen erfindungsgemäßen Ausführungsform besitzt das Hartsegment P1.1, wenn es als kernförmige Pfropfgrundlage eingesetzt wird, eine mittlere Teilchengröße (d₅₀) von 40 - 200, insbesondere von 50 - 150 und besonders bevorzugt von 60 - 120 nm.

Bei der Angabe der mittleren Teilchengröße handelt es sich in allen Fällen um das Gewichtsmittel der Teilchengröße, wie sie mittels einer analytischen Ultrazentrifuge entsprechend der Methode von E. Scholtan und H. Lange, Kolloid-Z. und Z.-Polymere 250, 782-796 (1972) bestimmt werden. Die Ultrazentrifugenmessungen liefern die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe besitzen. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser besitzen, als der Durchmesser, der dem d₅₀-Wert entspricht. Ferner besitzen 50 Gew.-% der Teilchen einen größeren Durchmesser als der d₅₀-Wert.

Die einen bevorzugten erfindungsgemäßen Ausführungsformen der Hartsegmente P1.1 beinhalten vorzugsweise mindestens ein vinylaromatisches Monomer als Monomer oder als eines von zwei oder mehreren miteinander copolymerisierbaren Monomeren sowie eine Vernetzerkomponente, die mindestens Dihydrodicyclopentadienylacrylat als einen Vernetzer mit zwei oder mehr funktionellen Gruppen unterschiedlicher Reaktivität und mindestens Divinylbenzol, als Vernetzer mit zwei oder mehr funktionellen Gruppen gleicher Reaktivität, aufweist.

Weitere bevorzugte Ausführungsformen der erfindungsgemäßen Hartsegmente P1.1 beinhalten vorzugsweise mindestens ein vinylaromatisches Monomer als Monomer oder als eines von mehreren miteinander copolymerisierbaren Monomeren sowie eine Vernetzerkomponente, die mindestens Dihydrodicyclopentadienylacrylat als einen Vernetzer mit zwei oder mehr funktionellen Gruppen unterschiedlicher Reaktivität und mindestens Butandioldiacrylat als Vernetzer mit zwei oder mehr funktionellen Gruppen gleicher Reaktivität aufweist.

Besonders bevorzugte Ausführungsformen der erfindungsgemäßen Hartsegmente P1.1 beinhalten vorzugsweise mindestens ein vinylaromatisches Monomer als Monomer oder als eines von zwei oder mehreren miteinander copolymerisierbaren Monomeren, sowie eine Vernetzerkomponente, die Dihydrodicyclopentadienylacrylat sowie Divinylbenzol und/oder Butandioldiacrylat enthält.

Hartsegmente P1.1 sind vorzugsweise aufgebaut aus 50 bis 99,8, bevorzugt 60 bis 99, besonders bevorzugt 60 bis 98 Gew.-%, bezogen auf die Komponenten P1.1.1 bis P1.1.4, mindestens eines vinylaromatischen Monomers P1.1.1.

Erfindungsgemäße vinylaromatische Monomere vorzugsweise mit maximal 20 Kohlenstoffatomen sind beispielsweise Styrol, α-Methylstyrol oder kernalkylierte Styrole, wie p-Methylstyrol oder p-t-Butylstyrol, wobei Styrol, α-Methylstyrol oder p-Methylstyrol oder deren Mischungen bevorzugt und besonders bevorzugt Styrol verwendet wird.

Die erfindungsgemäßen Hartsegmente P1.1 können beispielsweise neben dem Monomeren P1.1.1 auch damit copolymerisierbare, vorzugsweise nichtvinylaromatische, Monomere P1.1.2 aufweisen.

Monomere P1.1.2 vorzugsweise mit maximal 20 Kohlenstoffatomen sind beispielsweise n-Butylacrylat, Acrylnitril, Methacrylnitril, Acrylsäure, Methacrylsäure- Methylmethacrylat, Glycidylmethacrylat, Maleinsäureanhydrid, tert.-Butylacrylat oder Vinylmethylether sowie deren Mischungen. Erfindungsgemäß bevorzugte Monomere P1.1.2 sind Acrylnitril und Methylmethacrylat. Der Anteil der Monomeren P1.1.2 beträgt 0 bis 49,8, bevorzugt 0 bis 39, besonders bevorzugt 0 bis 38 Gew.-%, bezogen auf die Komponenten P1.1.1 bis P1.1.4.

Weiterhin beinhalten die Hartsegmente P1.1 vorzugsweise eine Vernetzerkomponente P1.1.3 in einer Menge von 0,1 bis 25, bevorzugt 0,5 bis 10, besonders bevorzugt 1 bis 5 Gew.-%, bezogen auf die Komponenten P1.1.1 bis P1.1.4.

Die Vernetzerkomponente kann Dihydrodicyclopentadienylacrylat (α) der Formel Ia und Ib 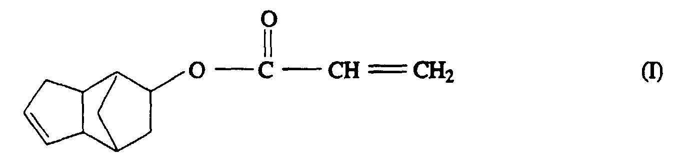 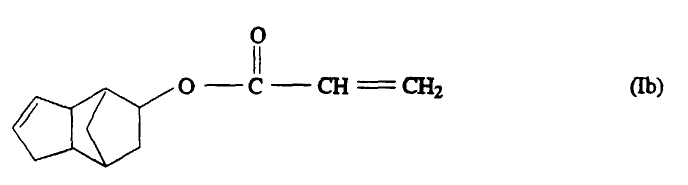 alleine oder in Kombination mit mindestens einem anderen Vernetzer mit funktionellen Gruppen unterschiedlicher Reaktivität (β) enthalten.

Erfindungsgemäß besteht die Vernetzerkomponente vorzugsweise aus 0,1 bis 100, bevorzugt 25 bis 100 und besonders bevorzugt 50 bis 100 Gew.-%, bezogen auf α und β, aus α sowie 0 bis 99,9, bevorzugt 0 bis 75, besonders bevorzugt 0 bis 50 Gew.-%, bezogen auf α und β, aus β.

Beispiele geeigneter Vernetzer β sind ethylenisch ungesättigte Monomere, die Epoxy-, Hydroxy-, Carboxyl-, Amino- oder Säureanhydridgruppen tragen. Hierzu zählen Hydroxyalkylacrylate oder Hydroxyalkylmethacrylate wie Hydroxy-C₁-bis C₁₀-alkyl- oder Hydroxy-C₁- bis C₁₀-methacrylate, insbesondere Hydroxyethylacrylat oder Hydroxy-n-propylacrylat. Vorzugsweise kommen Allylmethacrylat, Methallylmethacrylat, Acryloylalkoxysilane oder Methacryloylalkyloxysilane der allgemeinen Formel II 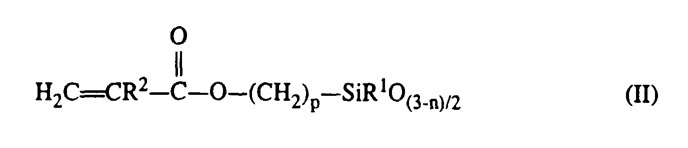 in Betracht, worin R¹ C₁- bis C₃- Alkyl oder Phenyl, bevorzugt Methyl bedeutet, R² Wasserstoff oder Methyl ist, n eine ganze Zahl von 0 bis 2 und p eine ganze Zahl von 1 bis 6, bevorzugt von 1 bis 4 darstellt. Als bevorzugte Beispiele seien genannt:
β-Methacryloyloxyethyldimethoxymethylsilan,
γ-Methacryloyloxy-n-propylmethoxydimethylsilan,
γ-Methacryloyloxy-n-propylmethoxymethylsilan,
γ-Methacryloyloxy-n-propyltrimethoxylsilan,
γ-Methacryloyloxy-n-propyldimethoxymethylsilan,
γ-Methacryloyloxy-n-propyldiethoxymethylsilan,
δ-Methacryloyloxy-n-butyldiethoxymethylsilan.

Zu den bevorzugten Mischungen der Vernetzer α und β zählen Dihydrodicyclopentadienylacrylat und Hydroxyethylacrylat; Dihydrodicyclopentadienylacrylat und Allylmethacrylat, Dihydrodicyclopentadienylacrylat, Hydroxyethylacrylat und Allylmethacrylat; Dihydrodicyclopentadienylacrylat, Allylmethacrylat und β-Methacrylolyloxy-ethyldimethoxymethylsilan; Dihydroxydicyclopentadienylacrylat und β-Methacrylolyloxyethyldimethoxymethylsilan.

Ein erfindungsgemäßes Hartsegment P1.1 weist vorzugsweise als P1.1.4 0,1 bis 25, bevorzugt 0,5 bis 10 und besonders bevorzugt 1 bis 7 Gew.-%, bezogen auf die Komponenten P1.1.1 bis P1.1.4 mindestens Divinylbenzol, als Vernetzer mit zwei oder mehr funktionellen Gruppen gleicher Reaktivität, auf.

Ein weiteres erfindungsgemäßes Hartsegment P1.1 weist 0,1 bis 25, bevorzugt 0,5 bis 10 und besonders bevorzugt 1 bis 7 Gew.-%, bezogen auf die Komponenten P1.1.1 bis P1.1.4, mindestens Butandioldiacrylat, als Vernetzer mit zwei oder mehr funktionellen Gruppen gleicher Reaktivität auf.

Geeignete Vernetzer P1.1.4, die zusätzlich zu Divinylbenzol und/oder Butandioldiacrylat, jedoch auch für sich eingesetzt werden können, sind beispielsweise Mono-, Di-, Tri- oder Tetra-Alkylenglycoldiacrylate, bevorzugt C₁- bis C₄-Mono-alkylenglycoldiacrylate wie Ethylenglykoldiacrylat, n-Propylenglycoldiacrylat, 1,3-n-Butylenglycoldiacrylat oder 1,4-n-Butylenglycoldiacrylat. Ebenso kommen Mono-, Di-, Tri- oder Tetra-alkylenglykoldimethacrylate in Betracht, bevorzugt C₁- bis C₄-Mono-alkylenglykoldimethacrylate wie Ethylenglykoldimethacrylat, n-Propylenglycoldimethacrylat, 1,3-n-Butylenglycoldimethacrylat oder 1,4-n-Butylenglycoldimethacrylat. Acrylate oder Methacrylate von Glycerin, Trimethylolpropan, Pentaerythrit, Inosit oder ähnlicher Zukkeralkohole sind auch geeignete Vernetzer P1.1.4. Als weitere geeignete Vernetzer P1.1.4 sind Acryl- oder Methacrylamide von Ethylendiamin oder anderen aliphatischen Di- oder Polyaminen zu nennen. Darüber hinaus können Diallylmaleat, Diallylfumarat oder Diallylphthalat, Triacryl- oder Trimethacrylamide, Triallycyanurat oder Triallylisocyanurat sowie Trivinylbenzol als Vernetzer P1.1.4 verwendet werden.

Vorzugsweise weisen die Hartsegmente P1.1 50 bis 99,8 mindestens eines vinylaromatischen Monomeren (P1.1.1), 0 bis 49,8 Gew.-% mindestens eines mit den Monomeren P1.1.1 copolymerisierbaren Monomeren (P1.1.2), 0,1 bis 25 Gew.-% einer Vernetzerkomponente mit 0,1 bis 100 Gew.-% mindestens eines Vernetzers mit zwei oder mehr funktionellen Gruppen und unterschiedlicher Reaktivität (P1.1.3) und 0,1 bis 25 Gew.-% Divinylbenzol und/oder Butandioldiacrylat (P1.1.4) auf.

Darüber hinaus weist ein bevorzugtes erfindungsgemäßes Hartsegment P1.1 0,1 bis 25, bevorzugt 0,5 bis 10 und besonders bevorzugt 1 bis 7 Gew.-%, bezogen auf die Komponenten P1.1.1 bis P1.1.4, Divinylbenzol und/oder Butandioldiacrylat auf.

Ein zusätzliches erfindungsgemäßes Hartsegment P1.1 unterscheidet sich vorzugsweise von der vorangegangenen dahingehend, daß die Komponente P1.1.3 mindestens (α) 0,1 bis 100 Gew.-% Dihydrodicyclopentadienylacrylat und (β) 0 bis 99,9 Gew.-% mindestens eines weiteren Vernetzers mit zwei oder mehr funktionellen Gruppen unterschiedlicher Reaktivität aufweist.

In einem weiteren erfindungsgemäßen Hartsegment P1.1 wird vorzugsweise 0,1 bis 100, bevorzugt 25 bis 75 und besonders bevorzugt 50 bis 70 Gew.-% Dihydrodicyclopentadienylacrylat als Komponente P1.1.3 und als Komponente P1.1.4 0,1 bis 25, bevorzugt 0,5 bis 10 und besonders bevorzugt 1 bis 5 Gew.-% Divinylbenzol und/oder Butandioldiacrylat eingesetzt.

Die Summen der Gewichtsprozente von α und β sowie die Summen der Gewichtsprozente von P1.1.1 bis P.1.1.4 sollten jeweils 100 ergeben.

Die Wahl der Vernetzer richtet sich danach, welche Gestalt das Netzwerk des Hartsegments aufweisen soll. Ein kompaktes Netzwerk ergibt sich beispielsweise, wenn der vorangegangene Vernetzer α mit Divinylbenzol verwendet wird, während ein relativ lockeres Netzwerk entsteht, wenn beispielsweise Vernetzer α zusammen mit Tetraethylenglycoldiacrylat oder - dimethylacrylat eingesetzt wird.

Zu den besonders bevorzugten Vernetzermischungen zählen Dihydrodicyclopentadienylacrylat und Butandioldiacrylat; Dihydrodicyclopentadienylacrylat und Divinylbenzol; Dihydrodicyclopentadienylacrylat und Ethylenglycoldiacrylat; sowie Dihydrodicyclopentadienylacrylat und Tetraethylenglycoldimethacrylat. Weitere bevorzugte Vernetzermischungen sind Dihydrodicyclopentadienylacrylat, Butandioldiacrylat und Allylmethacrylat; Dihydrodicyclopentadienylacrylat, Butandioldiacrylat und Hydroxyethylacrylat; Dihydrodicyclopentadienylacrylat, Butandioldiacrylat und Divinylbenzol; Dihydrodicyclopentadienylacrylat, Hydroxyethylacrylat und Divinylbenzol oder Diethylenglycoldiacrylat oder Tetraethylenglycoldimethacrylat; Dihydrodicyclopentadienylacrylat, Hydroxyethylacrylat, Allylmethacrylat und Divinylbenzol oder Diethylenglycoldiacrylat oder Tetraethylenglycoldimethacrylat; Dihydrodicyclopentadienylacrylat, Allylmethacrylat, β-Methacrylolyloxyethyldimethoxymethylsilan und Divinylbenzol oder Diethylenglycoldiacrylat oder Tetraethylenglycoldimethacrylat; Dihydroxydicyclopentadienylacrylat, β-Methacrylolyloxyethyldimethoxymethylsilan und Divinylbenzol oder Diethylenglycoldiacrylat oder Tetraethylenglycoldimethacrylat.

Andere erfindungsgemäße Hartsegmente P1.1 enthalten vorzugsweise P1.1.4 in Mengen von 0,5 bis 5 Gew.-%, bezogen auf die Komponenten P1.1.1 bis P1.1.4. Prinzipiell können die Komponenten P1.1.3 und P1.1.4 in jedem Verhältnis zueinander stehen. Bevorzugte Hartsegmente P1.1 enthalten jedoch die Komponenten P1.1.3 und P.1.1.4 in einem Verhältnis von 1:0,5 bis 1:3. Der Anteil der Komponente P1.1.4 kann jedoch gleichfalls darunter liegen und beispielsweise 1:0,3 betragen. Gleichfalls kommen höhere Anteile an P1.1.4 in Betracht, beispielsweise von P1.1.3 zu P1.1.4 bis zu 1:10, wobei die Verhältnisse von P1.1.3 zu P1.1.4 bevorzugt von 1:0,5 bis 1:3 oder 1:1 bis 1:3, insbesondere von 1:0,5 bis 1:2 und besonders bevorzugt von 1:0,75 bis 1:1 betragen.

Die erfindungsgemäßen Hartsegmente P1.1 werden vorzugsweise durch ein Verfahren hergestellt, worin in einem ersten Schritt mindestens ein vinylaromatisches Monomer als Monomer oder als eines von zwei oder mehreren miteinander copolymerisierbaren Monomeren und einer Vernetzerkomponente, die mindestens einen Vernetzer mit zwei oder mehr funktionellen Gruppen unterschiedlicher Reaktivität, vorzugsweise mindestens Dihydrodicyclopentadienylacrylat, aufweist, und in einem zweiten Schritt mit mindestens einem vinylaromatischen Monomer als Monomer oder als eines von zwei oder mehreren miteinander copolymerisierbaren Monomeren und einer Vernetzerkomponente, die mindestens einen Vernetzer mit zwei oder mehr funktionellen Gruppen unterschiedlicher Reaktivität, vorzugsweise mindestens Dihydrodicyclopentadienylacrylat, und mindestens einen Vernetzer mit zwei oder mehr funktionellen Gruppen gleicher Reaktivität, vorzugsweise mindestens Divinylbenzol oder Butandioldiacrylat, aufweist, polymerisiert werden. Das in diesem Abschnitt beschriebene Verfahren kommt bevorzugt zur Anwendung, wenn die Hartsegmente als Pfropfgrundlage eingesetzt werden.

Die beiden Schritte zur Herstellung der erfindungsgemäßen Hartsegmente P1.1 werden bevorzugt als Emulsionspolymerisation, vorzugsweise in einer wäßrigen Phase, in Gegenwart eines oder mehrerer Emulgatoren und Initiatoren, die für jeden der Schritte gleich oder unterschiedlich sein können bei für jeden Schritt gleichen oder unterschiedlichen Temperaturen im Bereich von 30 bis 90, bevorzugt 50 bis 80, besonders bevorzugt 55 bis 75°C, durchgeführt.

Für die Herstellung der Hartsegmente P1.1 werden vorzugsweise zunächst in einem ersten Schritt ein vernetzter Saatlatex aus einem Monomer P1.1.1, bevorzugt Styrol, und einem Vernetzer α und/oder β, bevorzugt Dihydrodicyclopentadienylacrylat, erzeugt. Im allgemeinen hat der erfindungsgemäße Saatlatex vorzugsweise eine mittlere Teilchengröße (d₅₀) von 20 bis 150, bevorzugt 50 bis 100 nm. Anschließend wird der Saatlatex in einer zweiten Stufe mit weiteren Monomeren P1.1.1, bevorzugt Styrol, und Vernetzer, bevorzugt Vernetzer mit zwei oder mehr funktionellen Gruppen unterschiedlicher Reaktivität und/oder gleicher Reaktivität, Emulgatoren, Polymerisationshilfsstoffen und Initiatoren zu den erfindungsgemäßen Hartsegmenten P1.1 umgesetzt.

Es ist gleichfalls möglich, das Hartsegment P1.1 in einem einstufigen Verfahren herzustellen. In einem solchen Verfahren wird mindestens ein vinylaromatisches Monomer als Monomer oder als eines von zwei oder mehr miteinander copolymerisierbaren Monomeren und eine Vernetzerkomponente, die mindestens einen Vernetzer mit zwei oder mehr funktionellen Gruppen unterschiedlicher Reaktivität, vorzugsweise mindestens Dihydrodicyclopentadienylacrylat, und einen Vernetzer mit zwei oder mehr funktionellen Gruppen gleicher Reaktivität, vorzugsweise mindestens Divinylbenzol und/oder Butandioldiacrylat, aufweist, polymerisiert. Weiterhin können geeignete Emulgatoren, Initiatoren und Polymerisationshilfsstoffe wie oberflächenaktive Substanzen zugegen sein.

Ferner kann der oben beschriebene Schritt 2 auch vor dem Schritt 1 erfolgen. In diesem Fall wird zuerst mindestens ein vinylaromatisches Monomer als Monomer oder als eines von zwei oder mehreren miteinander copolymerisierbaren Monomeren und einer Vernetzerkomponente, die mindestens einen Vernetzer mit zwei oder mehr funktionellen Gruppen unterschiedlicher Reaktivität, vorzugsweise mindestens Dihydrodicyclopentadienylacrylat, und mindestens einen Vernetzer mit zwei oder mehr funktionellen Gruppen gleicher Reaktivität, vorzugsweise mindestens Divinylbenzol und/oder Butandioldiacrylat, aufweist, und in einem darauffolgenden Schritt mindestens ein vinylaromatisches Monomer als Monomer oder als eines von zwei oder mehreren miteinander copolymerisierbaren Monomeren und einer Vernetzerkomponente, die mindestens einen Vernetzer mit zwei oder mehr funktionellen Gruppen unterschiedlicher Reaktivität, vorzugsweise mindestens Dihydrodicyclopentadienylacrylat, aufweist, polymerisiert.

Weiterhin lassen sich die erfindungsgemäßen Hartsegmente P1.1 auch durch Verfahren mit mehr als zwei Schritten, beispielsweise drei, vier, fünf, sechs und sieben Schritten herstellen. Bei diesen vielschrittigen Herstellungsverfahren sind die Schrittabfolgen beliebig kombinierbar.

Die Morphologie des Hartsegments P1.1 hängt von der Herstellungsweise ab. So besitzt das Verfahren, das in einem Schritt hergestellt wurde, eine einheitliche Morphologie. Die Hartsegmente P1.1, die in Zwei- oder Mehrschritt-Verfahren hergestellt wurden, besitzen in Abhängigkeit der Zahl der Schritte verschiedene Bereiche unterschiedlicher Morphologie.

In einer erfindungsgemäßen Ausführungsform wird das als Pfropfgrundlage in einem Pfropfcopolymerisat verwendete Hartsegment vorzugsweise in zwei oder mehr Schritten hergestellt. Besonders bevorzugt ist hierbei ein erster Herstellungsschritt, in dem mindestens ein Vernetzer mit zwei oder mehr funktionellen Gruppen unterschiedlicher Reaktivität und in einem zweiten Schritt eine Vernetzerkomponente mit mindestens einem Vernetzer mit zwei oder mehr funktionellen Gruppen unterschiedlicher Reaktivität und mindestens einem Vernetzer mit zwei oder mehr funktionellen Gruppen gleicher Reaktivität eingesetzt wird, wobei die erste Stufe bevorzugt einen Saatlatex bildet.

In einer anderen erfindungsgemäßen Ausführungsform wird das eine Pfropfgrundlage in einem Pfropfcopolymerisat bildende Hartsegment P1.1 vorzugsweise in einem Schritt hergestellt, wobei bevorzugt eine Vernetzerkomponente mit mindestens einem Vernetzer mit zwei oder mehr funktionellen Gruppen unterschiedlicher und mindestens einem Vernetzer mit zwei oder mehr funktionellen Gruppen gleicher Reaktivität eingesetzt wird.

Wird das erfindungsgemäße Hartsegment P1.1 als Pfropfauflage verwandt, wird das Verfahren vorzugsweise in einem Schritt durgeführt.

Die Hartsegmente P1.1 besitzen vorzugsweise Gelgehalte von mindestens 90, bevorzugt mindestens 95%, wobei der Gelgehalt als Verhältnis von im Lösungsmittel (Toluol) unlöslicher Masse zur Gesamtmasse definiert ist. Als Quellungsindex wird das Verhältnis von im Lösungsmittel (Toluol) gequollener zu ungequollener Masse bezeichnet und beträgt für die Hartsegmente P1.1 im allgemeinen von 7 bis 15.

Die erfindungsgemäßen Hartsegmente P1.1 lassen sich vorzugsweise für Pfropfcopolymerisate, insbesondere zu deren Herstellung verwenden, wobei die Verwendung als Pfropfgrundlage sowie als Pfropfauflage besonders bevorzugt ist.

Die aus Hartsegment P1.1 bestehenden Pfropfgrundlagen weisen vorzugsweise eine mittlere Teilchengröße (d₅₀) von bis zu 120, insbesondere 40 bis 110 und besonders bevorzugt 50 bis 100 nm auf.

Die Hartsegmente P1.1 können jedoch gleichfalls Pfropfgrundlagen mit einer mittleren Teilchengröße (d₅₀) von 100 bis 2000, bevorzugt 350 bis 1000 und besonders bevorzugt 400 bis 550 nm bilden.

Die erfindungsgemäßen Weichsegmente P1.2 weisen vorzugsweise eine Glasübergangstemperatur von höchstens 0, bevorzugt höchstens -20 und insbesondere bevorzugt von -100 bis -30°C auf. Die mittlere Teilchengröße (d₅₀) der Weichsegmente P1.2 beträgt bis zu 120 nm, insbesondere 40 bis 110 nm und besonders bevorzugt 50 bis 100 nm, wenn diese als Pfropfgrundlagen in einem Pfropfcopolymerisat eingesetzt werden.

Gleichfalls kann die mittlere Teilchengröße (d₅₀) der Weichsegmente P1.2 100 bis 2000, bevorzugt 350 bis 1000 und besonders bevorzugt 400 bis 550 nm betragen, wenn diese als Pfropfgrundlagen in einem Pfropfcopolymerisat eingesetzt werden.

Die erfindungsgemäßen Weichsegmente P1.2 sind vorzugsweise aufgebaut aus 50 bis 99,9, bevorzugt 75 bis 99,9 und besonders bevorzugt 90 bis 99,9 Gew.-% eines Acrylats (P1.2.1); 0 bis 50, bevorzugt 0 bis 25 und besonders bevorzugt 0 bis 10 Gew.-% eines mit dem Monomeren P1.2.1 copolymerisierbaren Monomeren (P1.2.2); sowie 0,1 bis 20, bevorzugt 0,1 bis 5 und besonders bevorzugt 0,1 bis 3 Gew.-% mindestens eines Vernetzers (P1.2.3).

Weitere erfindungsgemäße Weichsegmente P1.2 enthalten vorzugsweise mindestens ein Alkylacrylat P1.2.1 und gewünschtenfalls mindestens ein mit den Monomeren P1.2.1 copolymerisierbares Monomer P1.2.2 sowie mindestens ein Vernetzer α oder β oder deren Mischung (P1.2.3). Dabei beträgt der Anteil der Alkylacrylate P1.2.1 erfindungsgemäß vorzugsweise von 30 bis 99,9 Gew.-%, der der Monomeren P1.2.2 von 0,1 bis 50 Gew.-% und der der Vernetzer P1.2.3 0 bis 20 Gew.-%. Bevorzugt beinhalten die Weichsegmente P1.2 60 bis 99,9, insbesondere 65 bis 99 Gew.-% P1.2.1, 0 bis 39,9, bevorzugt 0 bis 30 Gew.-% P1.2.2 und 0,1 bis 10, bevorzugt 1 bis 5 Gew.-% P1.2.3. Die Gewichtsangaben sind jeweils auf die Summe der Komponenten P1.2.1 bis P1.2.3 bezogen.

Als Monomere P1.2.1, vorzugsweise Acrylate, besonders bevorzugt Alkylacrylate mit maximal 20 C-Atomen, kommen Acrylsäurealkylester, Acrylsäurephenylalkylester oder Acrylsäurephenoxyalkylester mit bis zu 18 C-Atomen, insbesondere solche mit 2 bis 8 C-Atomen im Alkylrest allein oder in Mischung in Betracht. Insbesondere sind Acrylsäure-n-butylester und Acrylsäureethylhexylester, z.B. Acrylsäurethyl-n-hexylester geeignet. Weiterhin können alle ansonsten bekannten Kautschukelastomeren bildenden Monomere wie Diene, beispielsweise 1,3-Butadien, und Organosiloxane wie Dimethylsiloxane verwendet werden.

Beispiele für die Monomeren P1.2.2, vorzugsweise mit maximal 20 C-Atomen, sind von P1.2.1 unterschiedliche Acrylsäure- oder Methacrylsäurederivate, darunter bevorzugt deren Ester oder Amide. Daneben kommen bevorzugt Styrol, kernsubstituierte Styrole, α-Methylstyrol, Acrylnitril, Diene wie Butadien oder Isopren als copolymerisierbare Monomere P1.2.2 in Betracht. Es können selbstverständlich auch Mischungen unterschiedlicher Monomerer P1.2.2 verwendet werden. Die Monomere P1.2.2 sollten mit den Monomeren P1.2.1 copolymerisierbar sein.

Als Vernetzer P1.2.3 kommen vorzugsweise ein oder mehrere der üblicherweise verwendeten, vernetzend wirkenden Monomere in Betracht, die sowohl einzeln als auch als Mischung miteinander eingesetzt werden können. Eine bevorzugte Vernetzerkomponente kann Dihydrodicyclopentadienylacrylat (α) allein oder in Kombination mit mindestens einem anderen Vernetzer mit zwei oder mehr funktionellen Gruppen unterschiedlicher Reaktivität (β) enthalten. Erfindungsgemäß bestehen die Vernetzerkomponenten vorzugsweise aus 0,1 bis 100, bevorzugt 25 bis 100 und besonders bevorzugt 30 bis 100 Gew.-%, bezogen auf α und β, aus a und aus 0 bis 99,9 bevorzugt 0 bis 75 und besonders bevorzugt 0 bis 70 Gew.-%, bezogen auf α und β, aus β. Besonders bevorzugt enthält die Vernetzerkomponente von 50 bis 100 Gew.-% α und von 0 bis 50 Gew.-% β.

Beispiele geeigneter Vernetzer α und β für das Weichsegment P1.2 stimmen mit den für P1.1 aufgeführten Vernetzern α und β überein. Die bei P1.1 bevorzugten Mischungen der Vernetzer α und β sind hier gleichfalls bei P1.2 bevorzugt. Die Aufzählung weiterer geeigneter Vernetzer P1.1.4 gilt gleichfalls für geeignete Vernetzer P.1.2.3 mit zwei oder mehr funktionellen Gruppen gleicher Reaktivität.

Die Wahl des Vernetzers P1.2.3 richtet sich beispielsweise danach, welches Netzwerk das Weichsegment P1.2 entweder als Pfropfgrundlage oder als Pfropfauflage aufweisen soll. Ein kompaktes Netzwerk ergibt sich beispielsweise, wenn Vernetzer α zusammen mit Divinylbenzol verwendet wird. Während ein relativ lockeres Netzwerk erhalten wird, wenn beispielsweise Vernetzer α mit Tetraethylenglycoldiacrylat oder -dimethacrylat eingesetzt wird. Zu den besonders bevorzugten Vernetzermischungen zählen Dihydrodicyclopentadienylacrylat und Butandioldiacrylat; Dihydrodicyclopentadienylacrylat und Divinylbenzol; Dihydrodicyclopentadienylacrylat und Diethylenglycoldiacrylat; sowie Dihydrodicyclopentadienylacrylat und Tetraethylenglycoldimethacrylat. Weitere Vernetzermischungen für die Weichsegmente P1.2 entsprechen den Auflistungen für Vernetzermischungen für das Hartsegment P1.1.

In den Weichsegmenten P1.2 können somit Vernetzer mit zwei oder mehr funktionellen Gruppen gleicher Reaktivität und Vernetzer mit zwei oder mehr funktionellen Gruppen unterschiedlicher Reaktivität jeweils für sich oder in Kombination vorliegen.

Die Weichsegmente P1.2 lassen sich sowohl in einem als auch in mehreren Schritten, beispielsweise zwei, drei, vier, fünf oder sechs, bevorzugt zwei und drei und besonders bevorzugt zwei Schritten herstellen. Eine Ausführungsform der Ein-Schritt-Synthese des Weichsegments P1.2 liegt dann vor, wenn entweder ein Vernetzer mit zwei oder mehr funktionellen Gruppen gleicher Reaktivität oder ein Vernetzer mit zwei oder mehr funktionellen Gruppen unterschiedlicher Reaktivität verwendet wird. In einer weiteren Ausführungsform können bei der Ein-Schritt-Synthese ein oder mehrere Vernetzer beider Gattungen verwendet werden. Die Ein-Schritt-Synthese kann sowohl zur Herstellung von Pfropfgrundlagen als auch von Pfropfauflagen aus dem Weichsegment P1.2 verwendet werden. Gleichfalls können Pfropfgrundlagen und Pfropfauflagen aus dem Weichsegment P1.2 durch eine Mehr-Schritt-Synthese hergestellt werden. Die Ein- oder Mehr-Schritt-Synthese erfolgt analog zu den entsprechenden Synthesen von P1.1 unter Verwendung der zuvor für P1.2 beschriebenen Monomeren und Vernetzer. Erfolgt die Synthese in einem Schritt, besitzt das Weichsegment in der Regel eine einheitliche Morphologie. Wenn die Synthese in mehreren Schritten durchgeführt wird, kann das Weichsegment eine Morphologie mit unterschiedlichen Phasen aufweisen.

In der in einem Schritt verlaufenden Synthese wird mindestens ein Alkylacrylat mit einem oder mehreren Vernetzern umgesetzt.

Bei der Herstellung der Weichsegmente P1.2 in mehreren Schritten werden mindestens ein Alkylacrylat mit einem Vernetzern vorpolymerisiert und das Vorpolymerisat in einem weiteren Schritt mit mindestens einem weiteren Monomeren umgesetzt.

Die Weichsegmente P1.2 besitzen in der Regel Gelgehalte von mindestens 90%, bevorzugt mindestens 95%, und Quellungsindices im allgemeinen von 7 bis 15.

Die erfindungsgemäßen Segmente P1.1 und P1.2 lassen sich vorzugsweise für Pfropfcopolymerisate, insbesondere zu deren Herstellung verwenden, wobei die Verwendung als Pfropfgrundlage sowie als Pfropfauflage besonders bevorzugt ist.

Ferner können die erfindungsgemäßen Pfropfcopolymerisate P1 vorzugsweise mindestens ein, bevorzugt 1 bis 7 und besonders bevorzugt 1 bis 3 zusätzliche Segmente (P2.3) enthalten. Das Segment P2.3 enthält vorzugsweise mindestens ein vinylaromatisches Monomer, wie beispielsweise unter P1.1.1 aufgeführt. Darüber hinaus kann P2.3 eines oder mehrere weitere Monomere enthalten, wobei Monomere bevorzugt sind, die mit dem vinylaromatischen Monomer copolymerisierbar sind. Gegebenenfalls kann das Segment P2.3 einen oder mehrere Vernetzer enthalten, beispielsweise können die für die Hartsegmente P1.1 verwendeten Vernetzer und Vernetzermischungen eingesetzt werden. Bevorzugt besteht P2.3 aus einer oder mehreren Polymerzusammensetzungen P2.3.1 und P2.3.2 in beliebiger Reihenfolge. Erfindungsgemäß ist es besonders bevorzugt, wenn die Polymerzusammensetzungen P2.3.1 und P2.3.2 mit P2.3.1 beginnend alternierend aufeinanderfolgen. Die Zahl der aufeinanderfolgenden und bevorzugt alternierend aufeinanderfolgenden Polymerzusammensetzungen P2.3.1 und P2.3.2 beträgt von 2 bis 10, bevorzugt von 2 bis 7 und besonders bevorzugt von 2 bis 5.

Ein besonders bevorzugtes Segment P2.3 beinhaltet in beliebiger, bevorzugt in dieser Reihenfolge eine Polymerzusammensetzung P2.3.1, enthaltend
- P2.3.1.1): 30 bis 99,9 Gew.-% mindestens eines vinylaromatischen Monomeren,
- P2.3.1.2): 0 bis 50 Gew.-% mindestens eines mit P2.3.1 copolymerisierbaren Monomeren, und
- P2.3.1.3): 0,1 bis 20 Gew.-% eines Vernetzers α oder β oder deren Mischungen
und/oder, bevorzugt und, eine zweite Polymerzusammensetzung P2.3.2, enthaltend
- P2.3.2.1): 50 bis 100 Gew.-% mindestens eines vinylaromatischen Monomeren und
- P2.3.2.2): 0 bis 50 Gew.-% mindestens eines mit P2.3.2.1 copolymerisierbaren Monomeren enthält, wobei die Summe der Gewichtsprozente von P2.3.1.1 bis P2.3.1.3 und von P2.3.2.1 bis P2.3.2.2 jeweils 100 ergibt.

Für den Fall, daß mehrere Polymerzusammensetzungen P2.3.1 und/oder P2.3.2 aufeinander folgen, ist es erfindungsgemäß bevorzugt, daß die Zusammensetzungen der einzelnen Bestandteile der aufeinanderfolgenden Polymerzusammensetzungen innerhalb der oben angegebenen Grenzen variieren können.

Die Herstellung des Segments P2.3 kann in einem Schritt oder in mehreren Schritten erfolgen. Eine Synthese in einem Schritt ist dann bevorzugt, wenn kein oder nur ein Vernetzer eingesetzt wird. Eine in mehreren Schritten erfolgende Herstellung ist dann vorteilhaft, wenn zwei und mehr Vernetzer verwendet werden. Besonders bevorzugt ist das in mehreren Schritten erfolgende Herstellungsverfahren für Polymerzusammensetzungen des Typs P2.3.1. Für die in mehreren Schritten erfolgende Herstellung gelten gleichfalls die Ausführungen zur Herstellung des Hartsegmentes P1.1.

Ein erfindungsgemäßes Pfropfcopolymerisat P3 ist vorzugsweise aufgebaut aus mindestens
- P3.1): einem Weichsegment mit einer Glastemperatur von höchstens 0 °C aus mindestens einem Alkylacrylat und mindestens einem Vernetzer als Pfropfgrundlage und als Pfropfauflagen aus den Segmentfolgen der zuvor beschriebener Pfropfcopolymerisate P1 und P2.

Besonders bevorzugt bestehen Pfropfcopolymerisate P3 aus dem zuvor beschriebenen Weichsegment P3.1, mindestens einem Hartsegment P3.2, das in seinem Aufbau dem Hartsegment P1.1 bzw. P2.1 entspricht, sowie mindestens aus einem Weichsegment P3.3, das in seinem Aufbau dem Weichsegment P1.2 bzw. P2.2 entspricht.

Gegebenenfalls können zusätzliche Pfropfauflagen P3.4, die den Pfropfauflagen P2.3 entsprechen, vorhanden sein.

Ein weiteres erfindungsgemäßes Weichsegment P3.1 zeichnet sich vorzugsweise durch eine Glastemperatur von höchstens 0°C aus und beinhaltet mindestens ein Alkylacrylat und mindestens einen Vernetzer.

Bevorzugt enthält das Weichsegment P3.1
- P3.1.1): 30 bis 99,9 Gew.-% mindestens eines Acrylats, bevorzugt eines Alkylacrylats,
- P3.1.2): 0 bis 50 Gew.-% mindestens eines mit den Monomeren P3.1.1 copolymerisierbaren Monomeren und
- P3.1.3): 0,1 bis 20 Gew.-% mindestens eines Vernetzers, wobei die Summe der Gewichtsprozente von P3.1.1 bis P3.1.3 100 ergibt.

Für Monomer- und Vernetzerauswahl, Teilchengröße sowie für das Herstellungsverfahren gelten die Ausführungen zu Weichsegment P1.2.

Die Weichsegmente P3.1 besitzen in der Regel Gelgehalte von mindestens 90%, bevorzugt mindestens 95%, und Quellungsindices im allgemeinen von 7 bis 15.

Das Weichsegment P3.1 kann als Pfropfgrundlage oder als Pfropfauflage verwandt werden. Pfropfcopolymerisate enthalten Weichsegmente, bevorzugt Weichsegmente P3.1 als Pfropfgrundlage in Mengen von 0,01 bis 99, bevorzugt 0,1 bis 50 und besonders bevorzugt 0,1 bis 20 Gew.-%. Es hat sich als besonders vorteilhaft erwiesen, das Weichsegment, insbesondere P3.1 in einer Menge von 0,1 bis 10, bevorzugt 0,1 bis 5 und besonders bevorzugt 0,2 bis 4 Gew.-% in ein Pfropfcopolymerisat als Pfropfgrundlage einzuarbeiten.

In den vorangegangenen Abschnitten beschriebene Hart- und Weichsegmente sowie das zusätzlich beschriebene Segment können in beliebiger Kombination beliebig häufig in Pfropfcopolymerisaten enthalten sein.

Mit der Bezeichnung H (hart) für Segment P1.1, W (weich) für Segment P1.2 und W'(weich) für Segment P3.1 sowie Z für das zusätzliche Segment sind die folgenden Kombinationen für erfindungsgemäße Pfropfcopolymerisate bevorzugt, wobei das zuerst genannte stets die Pfropfgrundlage und die darauffolgend aufgeführten, die Pfropfauflage oder -auflagen bezeichnen:

HW, HW', WH, W'H, WZ, W'Z, HWZ, HW'Z, WHZ, W'HZ, WHW, W'HW, WHW', W'HW', WHWZ, W'HWZ, WHW'Z, W'HW'Z, WW, W'W, WW', W'W', WWZ, W'WZ, WW'Z, W'W'ZW, W', HHW, HHW', HHWZ, HHW'Z, HWHW, HW'HW, HWHW', HW'HW', HWHWZ, HW'HWZ, HWHW'Z, HW'HW'Z und besonders bevorzugt WH, W'H, WZ, W'Z, HWZ, HW'Z, WHZ, W'HZ, WHWZ, W'HWZ, WHW'Z, W'HW'Z, WWZ, W'WZ, WW'Z, HHWZ, HHW'Z, HWHWZ, HW'HWZ, HWHW'Z, HW'HW'Z.

Die erfindungsgemäßen Pfropfcopolymerisate sind vorzugsweise aus einer Pfropfgrundlage und einer oder mehreren Pfropfauflagen aufgebaut und besitzen vorzugsweise eine Kern-Schalen-Morphologie, die bevorzugt definierte Phasenübergänge aufweist. Unter den erfindungsgemäßen definierten Phasenübergängen werden sowohl scharfe als auch diffuse Phasenübergänge verstanden. Bei einem scharfen Phasenübergang grenzen die Phasen der einzelnen Segmente unmittelbar aneinander, wobei kein oder nur sehr geringe Mengen der Monomere der einzelnen Phasen bzw. Segmente miteinander vorliegen. Bei diffusen Phasenübergängen liegt zwischen den einzelnen Segmenten ein Bereich, in dem die Monomere des einen Segments mit den Monomeren des anderen Segments gemeinsam vorliegen.

Die aus den Pfropfcopolymerisaten gebildeten Teilchen besitzen eine mittlere Teilchengröße (d₅₀) von 100 bis 2000, bevorzugt 350 bis 1000 und besonders bevorzugt 400 bis 550 nm. Weitere aus den Pfropfcopolymerisaten gebildete Teilchen besitzen eine mittlere Teilchengröße (d₅₀) von bis zu 180, insbesondere 40 bis 120 und besonders bevorzugt 50 bis 100 nm.

Erfindungsgemäße Pfropfcopolymerisate, die aus einem Hartsegment und einem Weichsegment, bevorzugt P1.1 und P1.2 aufgebaut sind, enthalten vorzugsweise jeweils auf beide Segmente bezogen 0,1 bis 90, bevorzugt 5 bis 55 und besonders bevorzugt 10 bis 50 Gew.-% eines Hartsegments sowie 10 bis 99,9, bevorzugt 45 bis 95 und besonders bevorzugt 50 bis 90 Gew.-% eines Weichsegments.

Erfindungsgemäße Pfropfcopolymerisate aus einem Hartsegment, bevorzugt P1.1, einem Weichsegment, bevorzugt P1.2, und mindestens einem zusätzlichen Segment P2.3 enthalten, bezogen auf die zuvor genannten Segmente, vorzugsweise 0,1 bis 99, bevorzugt 4 bis 60 und besonders bevorzugt 5 bis 30 Gew.-% eines Hartsegments als Pfropfgrundlage; 4,9 bis 98,9, bevorzugt 20 bis 95 und besonders bevorzugt 30 bis 70 Gew.-% eines Weichsegments sowie 1 bis 95, bevorzugt 1 bis 50 und besonders bevorzugt 25 bis 40 Gew.-% eines zusätzlichen Segments.

Erfindungsgemäße Pfropfcopolymerisate, die aus einem Weichsegment, bevorzugt P3.1, einem Hartsegment, bevorzugt P1.1, und einem Weichsegment, bevorzugt P1.2, sowie mindestens einem zusätzlichen Segment, bevorzugt P2.3, aufgebaut sind, enthalten, bezogen auf die zuvor genannten Segmente, vorzugsweise 0,1 bis 5, bevorzugt 1 bis 3 und besonders bevorzugt 1 bis 35 Gew.-% eines Weichsegments als Pfropfgrundlage, 1 bis 95, bevorzugt 10 bis 50 und besonders bevorzugt 10 bis 30 Gew.-% eines Hartsegments, 3,8 bis 98,8, bevorzugt 10 bis 69 und besonders bevorzugt 30 bis 60 Gew.-% eines Weichsegments und 0,1 bis 90, bevorzugt 20 bis 69 und besonders bevorzugt 37,5 bis 59 eines zusätzlichen Segments.

Zur Pfropfung der Pfropfgrundlagen aus Hartsegmenten, bevorzugt P1.1, werden die Bestandteile der Weichsegmente, bevorzugt P1.2, in Gegenwart der Hartsegmente polymerisiert. Hierbei ist es vorteilhaft, die Pfropfcopolymerisation zur Bildung der ersten Pfropfauflagen aus den Weichsegmenten wiederum als Emulsionspolymerisation, vorzugsweise in wäßriger Emulsion, durchzuführen. Es ist besonders vorteilhaft, diese in dem gleichen System, wie die Polymerisation der Pfropfgrundlagen aus den Hartsegmenten, vorzunehmen. Diese können ggf. mit den zur Herstellung der Hartsegmente verwendeten Emulgatoren bzw. Initiatoren übereinstimmen. Emulgatoren, Initiatoren und Polymerisationshilfsstoffe können jeweils allein oder in Mischung, gegebenenfalls zusammen mit der Emulsion der Pfropfgrundlagen aus den Hartsegmenten, vorgelegt werden. Sie können jedoch auch alleine oder in Mischung, gegebenenfalls zusammen mit den für die Pfropfauflagen aus den Weichsegmenten verwendeten Monomeren, zur Emulsion der Pfropfgrundlagen gegeben werden. Es können beispielsweise Initiatoren und als Polymerisationshilfsmittel Puffersubstanzen zusammen mit den Emulsionen der Pfropfgrundlagen vorgelegt werden und anschließend die Monomeren für die Pfropfauflagen aus den Weichsegmenten gemeinsam mit Emulgatoren zugetropft werden. Im allgemeinen, vorzugsweise wenn ein Weichsegment auf ein Hartsegment folgt, beträgt das Verhältnis der Zulaufraten (Z) der ein Hartsegment bildenden Monomere und Vernetzer zu den ein Weichsegment bildenden Monomeren und Vernetzern sowie das Verhältnis der Zulaufraten der Emulgatoren für dieses Hartsegment zu den Emulgatoren für dieses Weichsegment (Z1 bzw. Z2) unabhängig voneinander jeweils 0,05 bis 20, bevorzugt 0,1 bis 10 und besonders bevorzugt 0,2 bis 3.

Die Pfropfgrundlagen aus den Hartsegmenten und die Pfropfauflage aus der Weichsegmenten werden, bevorzugt nacheinander, in einem Einlaufverfahren polymerisiert. Dabei beträgt das Verhältnis der Zulaufraten Z1 und Z2 von 0,05 bis 20, bevorzugt von 0,1 bis 10 und besonders bevorzugt von 0,2 bis 3 bei 20 bis 80°C, wobei eine Reaktionstemperatur von 40 bis 80°C bevorzugt, und 60 bis 80°C besonders bevorzugt ist.

Dabei ist das Verhältnis der Zulaufraten beispielsweise anhand von P1 wie folgt definiert:
Z1 gleich Menge der Monomeren und Vernetzer P1.1.1 bis P1.1.4 [g/h]/Menge der Monomere P1.2.1 bis P1.2.3 [g/h];
Z2 gleich Menge Emulgator für P1.1 [g/h]/Menge Emulgator für P1.2 [g/h].

Die Pfropfcopolymerisation wird im allgemeinen so gesteuert, daß die Massenverhältnisse der Pfropfgrundlage aus den Hartsegmenten und den Pfropfauflagen aus den Weichsegmenten von 1:0,5 bis 1:20, bevorzugt von 1:1 bis 1:10 sich ergeben. Weiterhin bevorzugte erfindungsgemäße Pfropfcopolymerisate weisen ein Massenverhältnis von Hartsegment zu Weichsegment von 1:2 bis 1:8 auf.

Die erfindungsgemäßen Pfropfcopolymerisate mit den Hartsegmenten als Pfropfgrundlagen und den Weichsegmenten als Pfropfauflagen können beispielsweise eine oder mehrere, bevorzugt bis drei zusätzliche Segmente, vorzugsweise P2.3 enthalten. Diese sind in Mengen von 0,1 bis 90, bevorzugt 15 bis 50 und besonders bevorzugt von 25 bis 50 Gew.-%, bezogen auf alle Segmente, in den erfindungsgemäßen Pfropfcopolymerisaten enthalten. Zu den besonders bevorzugten Pfropfcopolymerisaten zählen solche mit einer oder zwei weiteren Pfropfauflagen aus zusätzlichen Segmenten. Bevorzugt werden Pfropfcopolymerisate, die von 0 bis 99,9, bevorzugt von 25 bis 95 und besonders bevorzugt von 30 bis 50 Gew.-%, bezogen auf die zusätzlichen Segmente einer zweiten Pfropfauflage mit einer Glastemperatur von mindestens 25°C (P2.3.1) sowie 0,1 bis 100, bevorzugt 25 bis 95 und besonders bevorzugt 50 bis 70 Gew.-%, bezogen auf die Pfropfauflagen aus den zusätzlichen Segmenten, einer weiteren Pfropfauflage mit einer Glastemperatur von mindestens 25°C (P2.3.2) in beliebiger Reihenfolge aufweisen.

Zur Pfropfung der Pfropfgrundlagen aus Weichsegmenten, bevorzugt P3.1, mit Hartsegmenten, bevorzugt P1.1, werden die Bestandteile der Hartsegmente in Gegenwart der Weichsegmentpfropfgrundlage polymerisiert. Hierbei ist es vorteilhaft, die Pfropfcopolymerisation zur Bildung der ersten Pfropfauflagen aus Hartsegmenten wiederum als Emulsionspolymerisation, vorzugsweise in wäßriger Emulsion, durchzuführen. Es ist besonders vorteilhaft, diese in dem gleichen System, wie die Polymerisation der Pfropfgrundlagen aus den Weichsegmenten, vorzunehmen. Diese können ggf. mit den zur Herstellung der Weichsegmente verwendeten Emulgatoren bzw. Initiatoren übereinstimmen. Emulgatoren, Initiatoren und Polymerisationshilfsstoffe können jeweils allein oder in Mischung, zusammen mit der Emulsion der Pfropfgrundlagen aus Weichsegmenten vorgelegt werden. Sie können jedoch auch alleine oder als Mischung, gegebenenfalls zusammen mit den für die Pfropfgrundlagen aus den Hartsegmenten verwendeten Monomeren, zu der Emulsion der Pfropfgrundlagen gegeben werden. Es können beispielsweise Initiatoren und als Polymerisationshilfsmittel Puffersubstanzen, gegebenenfalls zusammen mit den Emulsionen der Pfropfgrundlagen, vorgelegt werden und anschließend die Monomere für die Pfropfauflagen aus den Hartsegmenten gemeinsam mit Emulgatoren zugetropft werden. Die Pfropfgrundlagen aus den Weichsegmenten und die Pfropfauflagen aus den Hartsegmenten werden nacheinander in einem Einlaufverfahren polymerisiert. Dabei beträgt das Verhältnis der Zulaufraten Z1' und Z2' unabhängig voneinander vorzugsweise jeweils 0,05 bis 20, bevorzugt 0,1 bis 10 und besonders bevorzugt 0,2 bis 3, wobei Z1' gleich der Menge der Monomeren und Vernetzer des Weichsegments durch die Menge der Monomeren des Hartsegments und Z2' gleich der Emulgatormenge des Weichsegments durch die Emulgatormenge des Hartsegments jeweils in g/h ist.

Die Pfropfcopolymerisation wird im allgemeinen so gesteuert, daß die Massenverhältnisse der Pfropfgrundlagen aus den Weichsegmenten und der Pfropfauflagen aus den Hartsegmenten von 1 : 1 bis 1 : 100, bevorzugt von 1 : 10 bis 1 : 50 sich ergeben. Weiterhin bevorzugte erfindungsgemäße Pfropfcopolymerisate weisen ein Massenverhältnis von Weichsegment zu Hartsegment von 1 : 20 bis 1 : 40 auf.

Die erfindungsgemäßen Pfropfcopolymerisate mit den Weichsegmenten als Pfropfgrundlagen und den Hartsegmenten als Pfropfauflagen können beispielsweise eine oder mehrere bevorzugt bis drei zusätzliche Segmente enthalten. Diese sind in Mengen von 0,1 bis 90, bevorzugt 15 bis 50 und besonders bevorzugt 25 bis 50 Gew.-%, bezogen auf alle Segmente in den erfindungsgemäßen Pfropfcopolymerisaten enthalten.

Zu den besonders bevorzugten Pfropfcopolymerisaten zählen solche mit einer oder zwei weiteren Pfropfauflagen aus zusätzlichen Segmenten. Bevorzugt werden Pfropfcopolymerisate, die von 0 bis 99,9, bevorzugt von 25 bis 95 und besonders bevorzugt von 30 bis 80 Gew.-%, bezogen auf die zusätzlichen Segmente, bevorzugt P2.3, einer zweiten Pfropfauflage mit einer Glastemperatur von mindestens 25°C (P2.3.1) sowie 0,1 bis 100, bevorzugt 25 bis 75 und besonders bevorzugt 20 bis 70 Gew.-%, bezogen auf die Pfropfauflagen aus den zusätzlichen Segmenten, einer weiteren Pfropfauflage mit einer Glastemperatur von mindestens 25°C (P2.3.2) in beliebiger Reihenfolge aufweisen.

Die Pfropfung der Pfropfauflagen aus zusätzlichen Segmenten auf die erfindungsgemäßen Pfropfcopolymerisate kann in Suspension, Masse oder Lösung, jedoch bevorzugt als Emulsionspolymerisation erfolgen. Die Aufpfropfungen zusätzlicher Segmente werden bevorzugt in dem gleichen Polymerisationssystem des vorher hergestellten Pfropfcopolymeres vorgenommen, wobei vorzugsweise weitere Emulgatoren und Initiatoren zugegeben werden.

Die Pfropfauflagen der erfindungsgemäßen Pfropfcopolymerisate können prinzipiell jede Schichtdicke besitzen, wobei sie bevorzugt entweder eine mittlere Schichtdicke von bis zu 120, bevorzugt 10 bis 110 und besonders bevorzugt 20 bis 100 nm oder 120 bis 2000, bevorzugt 350 bis 1000 und besonders bevorzugt 450 bis 600 nm aufweisen. Die mittlere Schichtdicke wird entsprechend der mittleren Teilchengröße aus einzelnen Schichtdicken ermittelt.

Die Pfropfcopolymerisate können sowohl eine enge als auch eine breite Teilchengrößen- bzw. Schichtdickenverteilung aufweisen. Bevorzugt haben sie eine enge Teilchengrößen- bzw. Schichtdickenverteilung. Die Teilchengrößenverteilung ist definiert als der Quotient Q = (d₉₀-d₁₀)/d₅₀. Der d₁₀- bzw. d₉₀-Wert ist analog dem d₅₀-Wert definiert mit dem Unterschied, daß er auf 10 bzw. 90 Gew.-% der Teilchen bezogen ist. Weitere bevorzugte erfindungsgemäße Pfropfcopolymerisate weisen Q-Werte von 0,3 oder kleiner, bevorzugt 0,15 oder kleiner und besonders bevorzugt 0,15 bis 0,01 auf. Die vorstehende Ausführung gilt gleichfalls für die Schichtdickenverteilung.

Selbst bei großen Teilchengrößen der Pfropfgrundlage, beispielsweise im Bereich von 400 bis 800 nm, oder wenn im Verhältnis zur auf die Pfropfgrundlage folgenden Pfropfauflage deutlich mehr Pfropfgrundlage vorliegt, beispielsweise bei einem Gewichtsverhältnis von Pfropfgrundlage zur Pfropfauflage von 1 bis 50 : 1, bevorzugt 1 bis 50 : 1 und besonders bevorzugt 5 bis 20 : 1, haben die erfindungsgemäßen Pfropfcopolymerisate vorzugsweise eine nahezu perfekte Kern-Schale-Morphologie. Die Pfropfgrundlage bildet einen Kern mit definierter Phasengrenze zur Pfropfauflage. Er wird im wesentlichen konzentrisch von der Pfropfauflage umhüllt. In der Regel beträgt die Breite der Phasengrenzen von Pfropfgrundlage zur Pfropfauflage und zwischen den verschiedenen Pfropfauflagen im Mittel mindestens 50, bevorzugt mindestens 10 und besonders bevorzugt mindestens 5 nm oder liegt im Bereich zwischen 0,1 bis 50, bevorzugt 0,1 bis 10 und besonders bevorzugt 0,01 bis 5 nm.

Die Breite der Phasengrenze kann elektronenmikroskopisch ermittelt werden. Hierzu werden Schnitte einer Dicke von weniger als 100 nm mittels eines Kryo-Ultramikrotoms angefertigt und diese 20 Minuten bei 30°C mit Rutheniumtetroxid bedampft. Nur die jeweils am Äquator geschnittenen Teilchen werden ausgemessen und der Mittelwert des Abstands der zu beurteilenden Phasengrenzen von 10 Teilchen bestimmt.

Neben der Breite der Phasengrenze der erfindungsgemäßen Pfropfcopolymerisate läßt sich gleichfalls die Art des Übergangs an der Phasengrenze steuern. Es kann in den Pfropfcopolymerisaten ein scharfer Übergang oder ein diffuser Übergang vorliegen. Pfropfcopolymerisate mit einem scharfen Übergang weisen bevorzugt eine sehr enge Phasengrenze mit einem abrupten Übergang auf. Die Breite der Phasengrenze bei scharfen Übergängen beträgt 0,1 bis 10, bevorzugt 0,1 bis 5 und besonders bevorzugt 0,1 bis 3 nm. Unter den Pfropfcopolymeren mit einem diffusen Übergang sind die bevorzugt, bei denen der diffuse Übergang, entlang einer von der Pfropfgrundlage aus betrachtet von innen nach außen verlaufenden Geraden, möglichst gleichmäßig verläuft. Bei den diffusen Übergängen sind größere Phasengrenzenbereiche bevorzugt, beispielsweise 0,1 bis 5, bevorzugt 4 bis 10 und besonders bevorzugt 5 bis 50 nm. Die Breite der Phasengrenze sowie die Art des Übergangs an der Phasengrenze kann beispielsweise durch die Zulaufraten Z gesteuert werden.

Die Herstellung der erfindungsgemäßen Pfropfcopolymerisate kann nach den u.a. aus DE-B-12 60 135, DE-A-23 11 129, DE-A-28 26 925, EP-A-81 761, EP-A-450 485 sowie US-A-3 691 260 bekannten Methoden erfolgen.

Als erstes wird die Pfropfgrundlage aus ihren Bestandteilen, vorzugsweise in wäßriger Emulsion bei 20 bis 100, bevorzugt 40 bis 80 und besonders bevorzugt 50 bis 70°C, polymerisiert. Es können übliche Emulgatoren, beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man dafür die Kalium- oder Natriumsalze von Alkylsulfonaten oder von Fettsäuren mit 10 bis 18 Kohlenstoffatomen. Es ist günstig, die Emulgatoren in einer Menge von 0,1 bis 5, bevorzugt 0,2 bis 2 Gew.-%, bezogen auf das Gesamtgewicht der für die Herstellung der die Pfropfgrundlage bildenden Segmente verwendeten Monomere, einzusetzen.

Im allgemeinen wird bei einem Wasser/Monomer-Verhältnis von 4:1 bis 0,7:1, bevorzugt 2:1 bis 0,8:1 und besonders bevorzugt 1,5:1 bis 1:1 gearbeitet. Als Polymerisationsinitiatoren dienen insbesondere die gebräuchlichen Persulfate, wie beispielsweise Kaliumperoxodisulfat; es sind jedoch auch Redoxsysteme geeignet. Die Menge der Initiatoren - beispielsweise 0,1 bis 2,5 Gew.-%, bezogen auf das Gesamtgewicht der Monomere - richtet sich in bekannter Weise nach dem gewünschten Molekulargewicht. Als Polymerisationshilfsstoffe können übliche Puffersubstanzen, durch die pH-Wert-Bereiche von vorzugsweise 6 bis 9 eingestellt werden, beispielsweise Natriumbicarbonat und Natriumpyrophosphat, sowie bis 3 Gew.-% eines Molekulargewichtsreglers, wie Mercaptane, Terpinol oder α-Methylstyrol, verwendet werden.

Die erste Pfropfauflage wird auf die Pfropfgrundlage aufgebracht, indem in Gegenwart der bevorzugt einen Latex darstellenden Pfropfgrundlage die Bestandteile der die Pfropfauflage bildenden Segmente polymerisiert werden. Dieses erfolgt vorzugsweise in einer wäßrigen Emulsion unter den gleichen Bedingungen, wie bei der Herstellung der Pfropfgrundlage beschrieben.

Das Aufbringen der Pfropfauflage auf die Pfropfgrundlage kann in einem oder in mehreren Schritten erfolgen, wobei die Reaktion in fünf, bevorzugt drei und besonders bevorzugt zwei Schritten durchgeführt wird.

Die nächsten Pfropfauflagen werden auf das Copolymerisat, bestehend aus Pfropfgrundlage und erster Pfropfauflage, aufgebracht, indem in Gegenwart dieses Copolymers die Bestandteile der die weitere Pfropfauflage bildenden Segmente miteinander polymerisiert werden. Dieses erfolgt vorzugsweise in einer wäßrigen Emulsion, unter analogen Bedingungen, wie bei der Herstellung des Copolymerisats aus Pfropfgrundlage und erster Pfropfauflage beschrieben.

Es ist vorteilhaft die Pfropfcopolymerisation jeder zusätzlichen Pfropfauflage, beispielsweise P2.3, wiederum in wäßriger Emulsion in Gegenwart der aus Pfropfgrundlage und zwei Pfropfauflagen bestehenden Pfropfcopolymere durchzuführen. Die Pfropfcopolymerisation kann jedoch auch in Suspension, Masse oder Lösung erfolgen. Sie kann in dem System der ihr vorangegangenen Polymerisationen erfolgen, wobei vorzugsweise weiterer Emulgator und Initiator zugegeben werden kann, der nicht mit den zuvor eingesetzten übereinstimmen muß. Für die Auswahl und Kombination von Emulgatoren gelten die Ausführungen zur Herstellung der Pfropfgrundlage.

Die erfindungsgemäßen Pfropfcopolymerisate sind insbesondere nach einem Verfahren erhältlich, bei denen die die Pfropfgrundlage und die entsprechenden die Pfropfauflagen bildenden Segmente aus ihren Monomeren nacheinander in einer Emulsion bei Temperaturen von 20 bis 90, bevorzugt 55 bis 80 und besonders bevorzugt 60 bis 75°C polymerisiert werden. Erfindungsgemäß besonders bevorzugt kann es sein, wenn die Reaktionstemperaturen zur Herstellung oder Aufpfropfung eines Hartsegments 20 bis 80, bevorzugt 40 bis 80 und besonders bevorzugt 65 bis 80°C betragen. Für den Fall, daß ein Weichsegment hergestellt oder aufgepfropft wird, ist es besonders bevorzugt, daß die Reaktionstemperatur in einem Bereich von 20 bis 80, bevorzugt 40 bis 70 und besonders bevorzugt 60 bis 70°C liegt.

Die Art des Phasenübergangs zwischen zwei Segmenten kann durch die Menge an Restmonomer des zuerst polymerisierten Segments bei der Polymerisation des darauffolgenden Segments gesteuert werden. Je höher der Anteil an Restmonomeren ist, umso diffuser wird der Phasenübergang zwischen den beiden Segmenten.

Weiterhin können die erfindungsgemäßen Pfropfcopolymerisate Bestandteile von Mischungen aus Pfropfcopolymerisaten und anderen Polymeren bilden. In solchen Mischungen liegen die zuvor beschriebenen erfindungsgemäßen Pfropfcopolymerisate gegebenenfalls zusammen mit anderen Pfropfcopolymerisaten vor.

Diese Pfropfcopolymerisate können nach einem an sich bekannten Verfahren hergestellt werden, wie beispielsweise in US-A-3 055 895 und DE-B-1 260 135 beschrieben.

Die in der Mischung zusätzlich zu den zuvor beschriebenen Pfropfcopolymerisaten enthaltenden Pfropfcopolymerisate (P4) enthalten 30 bis 90, vorzugsweise 35 bis 80 und besonders bevorzugt 40 bis 75 Gew.-%, bezogen auf die Gesamtmenge der Segmente, mindestens ein kautschukelastisches Weichsegment (P4.1) als Pfropfgrundlage aus einem Material mit einer Glastemperatur von höchstens 0, bevorzugt höchstens -20°C. Als Kautschuk dient bevorzugt ein vernetztes Acrylsäureester-Polymerisat mit einer Glasübergangstemperatur unter 0, bevorzugt unter -20°C. Als Kautschukkomponente können jedoch auch vernetzte Polydiene, wie Polybutadien, Polyisopren und Polynorbonadien, oder vernetzte Silikonkautschuke, wie Polydimethylsiloxan, oder vernetzte Ethenpropendienterpolymere verwendet werden.

Das die Pfropfgrundlage (P4.1) bildende Weichsegment beinhaltet mindestens
- P4.1.1): 40 bis 99,9, bevorzugt 55 bis 99 und besonders bevorzugt 60 bis 99 Gew.-% mindestens eines Acrylats, bevorzugt eines Alkylacrylats, Diens oder Dialkylsiloxans,
- P4.1.2): 0,1 bis 10,1, bevorzugt 0,5 bis 5 und besonders bevorzugt 1 bis 3 Gew.-% mindestens eines Vernetzers und
- P4.1.3): 0 bis 49,9, bevorzugt 0 bis 45 und besonders bevorzugt 0 bis 40 Gew.-% einer weiteren, mit den Monomeren P4.1.1 copolymerisierbaren Monomeren P4.1.3, wobei sich die Summe der Gew.-% von P4.1.1 bis P4.1.3 zu 100 addieren sollten.

Als Monomere P4.1.1 kommen insbesondere Acrylsäureester mit 1 bis 8 Kohlenstoffatomen, bevorzugt mit 2 bis 8 Kohlenstoffatomen im Alkylrest in Betracht. Als geeignet seien vor allem Acrylsäure-n-butylester und Acrylsäureethylhexylester genannt. Es können sowohl ein Acrylsäureester als auch mehrere unterschiedliche Acrylsäureester eingesetzt werden.

Als Vernetzer P4.1.2 werden Verbindungen mit zwei oder mehr funktionellen Gruppen eingesetzt. Sofern es sich bei den funktionellen Gruppen um etwa gleich reaktive Gruppen handelt, sind die Monomere P4.1.2 übliche Vernetzer. Bevorzugte Vernetzer sind dabei Monomere, die mindestens zwei zur Copolymerisation befähigte ethylenische Doppelbindungen enthalten. Dieses sind beispielsweise Divinylbenzol, Diallylmaleat, Diallylfumarat, Diallylphthalat, Allylmethacrylat, Triallylcyanurat, Triallylisocyanurat oder Acrylsäureester mehrwertiger Alkohole, beispielsweise Ethylenglykoldi(meth)acrylat. Als besonders günstiges Vernetzermonomer hat sich der Acrylsäureester des Tricyclodecenylalkohols erwiesen (vgl. DE-B-12 60 135).

Falls die Vernetzer funktionelle Gruppen unterschiedlicher Reaktivität aufweisen, können diese Monomere P4.1.2 nicht nur vernetzen, sondern auch pfropfaktiv wirken. Es können sowohl nur ein Monomer P4.1.2 als auch mehrere verschiedene Monomere P4.1.2 eingesetzt werden.

Als bevorzugte Monomere P4.1.3 seien Hydroxyalkylacrylate, (Meth)acrylsäure, Methylmethacrylat, Phenoxyethylacrylat, Isopren, Butadien, Styrol, Acrylnitril, Methacrylnitril sowie Vinylalkylether mit 1 bis 8 Kohlenstoffatomen im Alkylrest, beispielsweise Vinylmethylether, Vinylethylether oder Vinylpropylether genannt. Besonders bevorzugte Monomere P4.1.3 sind Butadien sowie Styrol. Es können sowohl nur ein Monomeres P4.1.3 als auch mehrere verschiedene Monomere P4.1.3 eingesetzt werden.

Die Herstellung der als Mischungsbestandteil eingesetzten Pfropfcopolymerisate kann nach den bekannten Verfahren erfolgen (siehe u.a. DE-B-12 60 135, DE-A-23 11 129, DE-A-28 26 925, EP-A-81 761, EP-A-450 485, US-A-3 691 260). Hierzu wird zunächst das Weichsegment P4.1 als Pfropfgrundlage hergestellt. Als Pfropfgrundlage werden mindestens die Acrylsäureester P4.1.1 und mindestens ein polyfunktionelles Monomer P4.1.2 sowie gegebenenfalls mindestens ein weiteres Monomer P4.1.3 in wäßriger Emulsion bei 20 - 100 °C, bevorzugt 50 - 80 °C, polymerisiert. Es können die üblichen Emulgatoren, beispielsweise Alkalisalze von Alkyl- oder Alkylaryl-Sulfonsäuren, Alkylsulfate, Fettalkoholsulfonate, Salze höherer Fettsäuren mit 10 bis 30 Kohlenstoffatomen oder Harzseifen verwendet werden. Vorzugsweise werden dafür die Kalium- oder Natriumsalze von Alkylsulfonaten oder von Fettsäuren mit 10 bis 18 Kohlenstoffatomen verwendet. Es ist günstig, die Emulgatoren in einer Menge von 0,1 - 5, bevorzugt 0,2 - 2 Gew.-%, bezogen auf das Gesamtgewicht der für die Herstellung der Pfropfgrundlage verwendeten Monomere, einzusetzen.

Im allgemeinen wird bei einem Wasser/Monomer-Verhältnis von 2:1 bis 0,7:1 gearbeitet. Als Polymerisationsinitiatoren dienen insbesondere die gebräuchlichen Persulfate, wie beispielsweise Kaliumperoxodisulfat; es sind jedoch auch Redoxsysteme geeignet. Die Menge an Initiatoren (z.B. 0,1 - 2,5 Gew.-%, bezogen auf das Gesamtgewicht der Monomere) richtet sich in bekannter Weise nach dem gewünschten Molgewicht.

Als Polymerisationshilfsstoffe können übliche Puffersubstanzen, durch welche pH-Werte von vorzugsweise 6 bis 9 eingestellt werden, beispielsweise Natriumbicarbonat und Natriumpyrophosphat, sowie bis 3 Gew.-% eines Molekulargewichtsreglers, beispielsweise Mercaptane, Terpinol oder dimeres α-Methylstyrol verwendet werden.

Weiter können die in den erfindungsgemäßen Mischungen vorliegenden Pfropfcopolymerisate in einer Menge von 5 - 50, bevorzugt 5 - 35 und besonders bevorzugt 10 - 30 Gew.-% bezogen auf die Gesamtmenge der Segmente eine erste Pfropfauflage aus einem Hartsegment (P4.2) aus einem Material mit einer Glastemperatur von mindestens 25, bevorzugt mindestens 80 °C beinhalten.

Das die erste Pfropfauflage (P4.2) bildende Hartsegment beinhaltet
- P4.2.1): 30 - 100, bevorzugt 50 - 100, besonders bevorzugt 65 - 100 Gew.-% mindestens eines vinylaromatischen Monomeren,
- P4.2.2): 0 - 20, besonders bevorzugt 0 - 5 Gew.-% mindestens eines Vernetzers, und
- P4.2.3): 0 - 50, besonders bevorzugt 0 - 35 Gew.-% mindestens eines mit P4.2.1 copolymerisierbaren Monomeren, wobei die Summe der Gew.-% von P4.2.1 bis P4.2.3 100 ergeben sollte.

Die Pfropfauflage aus dem Hartsegment P4.2 wird auf die Pfropfgrundlage aus dem Weichsegment P4.1 bevorzugt in der Weise aufgebracht, daß in Gegenwart der einen Latex darstellenden Pfropfgrundlage aus dem Weichsegment die Monomere P4.2.1 sowie ggf. P4.2.2 und P4.2.3 miteinander polymerisiert werden.

Zunächst wird in Gegenwart des Latex des Weichsegments P4.1 aus dem vernetzten Acrylesterpolymerisat ein vinylaromatisches Monomer P4.2.1 polymerisiert. Beispiele für vinylaromatische Monomere P4.2.1 sind Styrol, α-Methylstyrol und kernalkylierte Styrole, beispielsweise p-Methylstyrol und tert.-Butylstyrol. Besonders bevorzugt werden Styrol, α-Methylstyrol und p-Methylstyrol eingesetzt. Es ist vorteilhaft, diese Pfropfcopolymerisation der Monomeren P4.2.1 sowie ggf. P4.2.2 und P4.2.3 auf das als Pfropfgrundlage dienende Weichsegment P4.1 als vernetztes Polymerisat wieder in wäßriger Emulsion unter den üblichen, vorstehend aufgeführten Bedingungen durchzuführen. Die Pfropfcopolymerisation kann zweckmäßig im gleichen System erfolgen, wie die Emulsionspolymerisation zur Herstellung des die Pfropfgrundlage bildenden Weichsegments, wobei, falls notwendig, weiterer Emulgator und Initiator zugegeben werden kann. Die aufzupfropfenden Monomere P4.2.1 sowie ggf. P4.2.2 und P4.2.3 können dem Reaktionsgemisch auf einmal, absatzweise in mehreren Stufen oder vorzugsweise kontinuierlich während der Polymerisation zugegeben werden. Die Pfropfcopolymerisation des Monomeren P4.2.1 in Gegenwart der aus dem Weichsegment P4.1 gebildeten Pfropfgrundlage wird so durchgeführt, daß der Pfropfgrad, definiert als der Quotient der Gew.-% von Pfropfauflage und der Summe der Gew.-% aus Pfropfgrundlage und Pfropfauflagen mal 100 von 2,5 - 30, vorzugsweise von 5 - 25 im Pfropfcopolymerisat resultiert.

Als Monomere P4.2.2 mit zwei oder mehr funktionellen Gruppen können die gleichen Monomere verwendet werden, welche vorstehend bei der Herstellung der Pfropfgrundlage aus dem Weichsegment als Monomere P4.1.2 bezeichnet wurden.

Unter der Bezeichnung polymerisierbare Monomere P4.2.3 für das Hartsegment sollen die nachstehend aufgeführten Monomere verstanden werden, beispielsweise Acrylnitril, Methacrylnitril, Methylmethacrylat, n-Butylacrylat, tert.-Butylacrylat, α-Methylstyrol, P-Methylstyrol oder tert.-Butylstyrol.

Darüber hinaus weisen die in der erfindungsgemäßen Mischung vorliegenden Pfropfcopolymerisate in einer Menge von 5 - 50, bevorzugt 15 - 45 und besonders bevorzugt 15 - 40 Gew.-%, bezogen auf die Gesamtmenge der Segmente, vorzugsweise mindestens eine weitere Pfropfauflage P4.3 auf. Die zweite Pfropfauflage P4.3, ein Hartsegment, besteht aus einem Material mit einer Glasübergangstemperatur von mindestens 25, insbesondere von mindestens 80 °C.

Das die zweite Pfropfauflage bildende Hartsegment (P4.3) beinhaltet
- P4.3.1): 0,1 - 99,9, vorzugsweise 1 - 99, bevorzugt 60 - 90 Gew.-% mindestens eines vinylaromatischen Monomeren, und
- P4.3.2): 0,1 - 99,9, vorzugsweise 1 - 99, bevorzugt 10 - 40 Gew.-% mindestens eines copolymerisierbaren ethylenisch ungesättigten Monomeren, wobei die Summe der Gew.-% von P4.3.1 und P4.3.2 100 ergeben sollte.

Weiterhin sollte die Summe der Gew.-% von P4.1 bis P4.3 100 ergeben.

Die zweite Pfropfauflage P4.3 wird auf die erste Pfropfauflage P4.2 bevorzugt in der Weise aufgebracht, daß die Herstellung der zweiten Pfropfauflage vorzugsweise im gleichen System durchgeführt wird, in welchem bereits das die Pfropfgrundlage darstellende Weichsegment P4.1 und das die erste Pfropfauflage darstellende Hartsegment P4.2 hergestellt worden sind. Dabei kann, falls notwendig, weiterer Emulgator und Initiator zugegeben werden. Das auf die erste Pfropfauflage zu pfropfende Monomergemisch aus beispielsweise Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation dieses Gemisches in Gegenwart der Pfropfgrundlage aus Weichsegment P4.1 und der ersten Pfropfauflage aus Hartsegment P4.2 wird vorzugsweise so durchgeführt, daß der Pfropfgrad von 10 - 55, insbesondere von 15 - 45 Gew.-% im Pfropfcopolymerisat P4 resultiert.

Das Aufbringen der zweiten Pfropfauflage aus Hartsegment P4.3 wird üblicherweise mit analogen Polymerisationsverfahren durchgeführt, wie bereits bei der Herstellung der Pfropfgrundlage aus Weichsegment P4.1 und der ersten Pfropfauflage aus Hartsegment P4.2 ausgeführt. Was die dabei einzuhaltenden Polymerisationsbedingungen, Lösungsmittel, Emulgatoren und Initiatoren betrifft, so sei auf die Ausführungen in bezug auf die Pfropfgrundlage aus Weichsegment P4.1 und die erste Pfropfauflage aus Hartsegment P4.2 verwiesen. Falls notwendig, kann weiter Emulgator und Initiator zugegeben werden.

Als vinylaromatische Monomere der zweiten Pfropfauflage aus Hartsegment P4.3 können die gleichen Monomere verwendet werden, die vorstehend bei der Herstellung der ersten Pfropfauflage aus Hartsegment P4.2 als vinylaromatische Monomere P4.2.1 bezeichnet werden. Es können sowohl nur ein Monomeres als auch mehrere verschiedene Monomere eingesetzt werden.

Beispiele für copolymerisierbare, ethylenisch ungesättigte Monomere P4.3.2 für das die zweite Pfropfauflage bildende Hartsegment P4.3 sind Acrylnitril, Methacrylnitril sowie Acrylsäure und Methacrylsäureester mit 1 bis 4 Kohlenstoffatomen im Alkylrest. Bevorzugt werden Acrylnitril, Methacrylnitril und tert.-Butylacrylat sowie Gemische derselben. Es können hierbei ebenfalls sowohl ein Monomeres 2 als auch mehrere verschiedene Monomere P4.3.2 verwendet werden.

Vorzugsweise erfolgt das Aufbringen des die zweite Pfropfauflage bildenden Hartsegments P4.3 durch Pfropfcopolymerisation mit einem Monomerengemisch aus mindestens einem vinylaromatischen Monomeren P4.3.1 und mindestens einem ethylenisch ungesättigten, copolymerisierbaren Monomeren P4.3.2 im Verhältnis 90:10 bis 60:40, insbesondere im Verhältnis von 75:25 bis 65:35.

Eine erfindungsgemäße Mischung M1 beinhaltet vorzugsweise die Pfropfcopolymerisate P4 und P1.

Eine Ausführungsform der Mischung Ml weist Pfropfcopolymerisate P4 mit einer mittleren Teilchengröße (d₅₀) von 40 - 200, bevorzugt von 50 - 150 und besonders bevorzugt von 60 - 120 nm, sowie Pfropfcopolymerisate P1 mit einer mittleren Teilchengröße (d₅₀) von 250 - 2.000, bevorzugt von 350 - 1.000 und besonders bevorzugt von 400 - 800 nm auf.

Eine weitere Ausführungsform der Mischung M1 weist Pfropfcopolymerisate P4 mit einer mittleren Teilchengröße (d₅₀) von 250 - 2.000, bevorzugt von 350 - 1.000 und besonders bevorzugt von 400 - 800 nm, sowie Pfropfcopolymerisate P1 mit einer mittleren Teilchengröße (d₅₀) von 40 - 200, bevorzugt von 50 - 150 und besonders bevorzugt von 60 - 120 nm auf.

In einer weiteren Ausführungsform der Mischung M1 besitzen sowohl die Pfropfcopolymerisate P4 als auch die Pfropfcopolymerisate P1 eine mittlere Teilchengröße (d₅₀) von 40 - 200, bevorzugt 50 - 150 und besonders bevorzugt 60 - 120 nm.

Eine andere Ausführungsform der Mischung Ml weist Pfropfcopolymerisate P4 und P1 mit einer mittleren Teilchengröße (d₅₀) von 250 - 2.000, bevorzugt 350 - 1.000 und besonders bevorzugt 400 - 800 nm auf.

Eine erfindungsgemäße Mischung M2 beinhaltet vorzugsweise die Pfropfcopolymerisate P4 und P2.

Eine Ausführungsform einer solchen Mischung M2 beinhaltet Pfropfcopolymerisate P4 mit einer mittleren Teilchengröße (d₅₀) von 40 - 200, bevorzugt 50 - 150 und besonders bevorzugt 60 - 120 nm sowie Pfropfcopolymerisate P2 mit einer mittleren Teilchengröße (d₅₀) von 250 - 2.000, bevorzugt 350 - 1.000 und besonders bevorzugt 400 - 800 nm.

Eine weitere Ausführungsform der Mischung M2 beinhaltet Pfropfcopolymerisate P4 mit einer mittleren Teilchengröße (d₅₀) von 250 - 2.000, bevorzugt 350 - 1.000 und besonders bevorzugt 400 - 800 nm sowie Pfropfcopolymerisate P2 mit einer mittleren Teilchengröße (d₅₀) von 40 - 200, bevorzugt 50 - 150 und besonders bevorzugt 60 - 120 nm.

Eine andere Ausführungsform der Mischung M2 weist Pfropfcopolymerisate P4 und Pfropfcopolymerisate P2 auf, die jeweils eine mittlere Teilchengröße (d₅₀) von 40 - 200, bevorzugt 50 - 150 und besonders bevorzugt 60 - 120 nm besitzen.

Eine weitere Ausführungsform der Mischungen M2 beinhaltet Pfropfcopolymerisate P4 sowie Pfropfcopolymerisate P2, die jeweils eine mittlere Teilchengröße (d₅₀) von 250 - 2.000, bevorzugt 350 - 1.000 und besonders bevorzugt 400 - 800 nm besitzen.

Eine weitere erfindungsgemäße Mischung M3 beinhaltet vorzugsweise die Pfropfcopolymerisate P4 und P3.

Eine Ausführungsform der Mischungen M3 beinhaltet Pfropfcopolymerisate P4 mit einer mittleren Teilchengröße (d₅₀) von 40 - 200, bevorzugt von 50 - 150 und besonders bevorzugt von 60 - 120 nm, sowie Pfropfcopolymerisate P3 mit einer mittleren Teilchengröße (d₅₀) von 250 - 2.000, bevorzugt 350 - 1.000 und besonders bevorzugt 400 - 800 nm.

Eine andere Ausführungsform der Mischung M3 weist Pfropfcopolymerisate P4 mit einer mittleren Teilchengröße (d₅₀) von 250 - 2.000, bevorzugt 350 - 1.000 und besonders bevorzugt 400 - 800 nm sowie Pfropfcopolymerisate P3 mit einer mittleren Teilchengröße (d₅₀) von 40 - 200 nm, bevorzugt von 50 - 150 nm und besonders bevorzugt von 60 - 120 nm auf.

Andere Ausführungsformen der Mischungen M3 weisen Pfropfcopolymerisate P4 und P3 auf, die jeweils eine mittlere Teilchengröße (d₅₀) von 40 - 200 nm, insbesondere von 50 - 150 und besonders bevorzugt von 60 - 120 nm besitzen.

Ferner beinhaltet eine Ausführungsform der Mischungen M3 Pfropfcopolymerisate P4 und P3, die jeweils eine mittlere Teilchengröße (d₅₀) von 250 - 2.000, bevorzugt von 350 - 1.000 und besonders bevorzugt von 400 - 800 nm besitzen.

Weitere, bevorzugt in den erfindungsgemäßen Mischungen M3 aus Pfropfcopolymerisaten verwendete Pfropfcopolymerisate P5, das vorzugsweise genauso wie das Pfropfcopolymerisat P4 teilchenförmig ist und eine Kern-Schale-Morphologie aufweist, beinhaltet
- P5.1): 30 - 90, bevorzugt 35 - 80 und besonders bevorzugt 40 - 75 Gew.-% eines Weichsegments, das dem die Pfropfgrundlage bei Pfropfcopolymerisaten P4 bildenden Weichsegment P4.1 entspricht und
- P5.2): 10 - 70, bevorzugt 20 - 65 und besonders bevorzugt 25 - 60 Gew.-% einer Pfropfauflage, die dem Hartsegment P4.3 der zweiten Pfropfauflage der Pfropfcopolymerisaten P4 entspricht.

Eine erfindungsgemäße Mischung M4 beinhaltet vorzugsweise die Pfropfcopolymerisate P5 und P1.

Eine Ausführungsform der Mischung M4 weist Pfropfcopolymerisate P5 mit einer mittleren Teilchengröße (d₅₀) von 40 - 200, bevorzugt von 50 - 150 und besonders bevorzugt von 60 - 120 nm, sowie Pfropfcopolymerisate P1 mit einer mittleren Teilchengröße (d₅₀) von 250 - 2.000, bevorzugt von 350 - 1.000 und besonders bevorzugt von 400 - 800 nm auf.

Eine weitere Ausführungsform der Mischung M4 weist Pfropfcopolymerisate P5 mit einer mittleren Teilchengröße (d₅₀) von 250 - 2.000, bevorzugt von 350 - 1.000 und besonders bevorzugt von 400 - 800 nm, sowie Pfropfcopolymerisate P1 mit einer mittleren Teilchengröße (d₅₀) von 40 - 200, bevorzugt von 50 - 150 und besonders bevorzugt von 60 - 120 nm auf.

In einer weiteren Ausführungsform der Mischung M4 besitzen sowohl die Pfropfcopolymerisate P5 als auch die Pfropfcopolymerisate P1 eine mittlere Teilchengröße (d₅₀) von 40 - 200, bevorzugt 50 - 150 und besonders bevorzugt 60 - 120 nm.

Eine andere Ausführungsform der Mischung M4 weist Pfropfcopolymerisate P5 und P1 mit einer mittleren Teilchengröße (d₅₀) von 250 - 2.000, bevorzugt 350 - 1.000 und besonders bevorzugt 400 - 800 nm auf.

Eine erfindungsgemäße Mischung M5 beinhaltet vorzugsweise die Pfropfcopolymerisate P5 und P2.

Eine Ausführungsform einer solchen Mischung M5 beinhaltet Pfropfcopolymerisate P5 mit einer mittleren Teilchengröße (d₅₀) von 40 - 200, bevorzugt 50 - 150 und besonders bevorzugt 60 - 120 nm sowie Pfropfcopolymerisate P1 mit einer mittleren Teilchengröße (d₅₀) von 250 - 2.000, bevorzugt 350 - 1.000 und besonders bevorzugt 400 - 800 nm.

Eine weitere Ausführungsform der Mischung M5 beinhaltet Pfropfcopolymerisate P5 mit einer mittleren Teilchengröße (d₅₀) von 250 - 2.000, bevorzugt 350 - 1.000 und besonders bevorzugt 400 - 800 nm sowie Pfropfcopolymerisate P2 mit einer mittleren Teilchengröße (d₅₀) von 40 - 200, bevorzugt 50 - 150 und besonders bevorzugt 60 - 120 nm.

Eine andere Ausführungsform der Mischung M5 weist Pfropfcopolymerisate P5 und Pfropfcopolymerisate P2 auf, die jeweils eine mittlere Teilchengröße (d₅₀) von 40 - 200, bevorzugt 50 - 150 und besonders bevorzugt 60 - 120 nm besitzen.

Eine weitere Ausführungsform der Mischungen M5 beinhaltet Pfropfcopolymerisate P5 sowie Pfropfcopolymerisate P2, die jeweils eine mittlere Teilchengröße (d₅₀) von 250 - 2.000, bevorzugt 350 - 1.000 und besonders bevorzugt 400 - 800 nm besitzen.

Eine weitere erfindungsgemäße Mischung M6 beinhaltet vorzugsweise die Pfropfcopolymerisate P5 und P3.

Eine Ausführungsform der Mischungen M6 beinhaltet Pfropfcopolymerisate P5 mit einer mittleren Teilchengröße (d₅₀) von 40 - 200, bevorzugt von 50 - 150 und besonders bevorzugt von 60 - 120 nm, sowie Pfropfcopolymerisate P3 mit einer mittleren Teilchengröße (d₅₀) von 250 - 2.000, bevorzugt 350 - 1.000 und besonders bevorzugt 400 - 800 nm.

Eine andere Ausführungsform der Mischung M6 weist Pfropfcopolymerisate P5 mit einer mittleren Teilchengröße (d₅₀) von 250 - 2.000, bevorzugt 350 - 1.000 und besonders bevorzugt 400 - 800 nm sowie Pfropfcopolymerisate P3 mit einer mittleren Teilchengröße (d₅₀) von 40 - 200 nm, bevorzugt von 50 - 150 nm und besonders bevorzugt von 60 - 120 nm auf.

Andere Ausführungsformen der Mischungen M6 weisen Pfropfcopolymerisate P5 und P3 auf, die jeweils eine mittlere Teilchengröße (d₅₀) von 40 - 200 nm, insbesondere von 50 - 150 und besonders bevorzugt von 60 - 120 nm besitzen.

Ferner beinhaltet eine Ausführungsform der Mischungen M6 Pfropfcopolymerisate P5 und P3, die jeweils eine mittlere Teilchengröße (d₅₀) von 250 - 2.000, bevorzugt von 350 - 1.000 und besonders bevorzugt von 400 - 800 nm besitzen.

Die in den erfindungsgemäßen Mischungen enthaltenen Pfropfcopolymerisate können sowohl eine enge als auch eine breite Teilchengrößenverteilung aufweisen. Bevorzugt besitzen sie jedoch eine enge Teilchengrößenverteilung. Besonders bevorzugte erfindungsgemäße Mischungen besitzen Pfropfcopolymerisate, die einen Q-Wert von 0,3 oder kleiner, insbesondere von 0,1 oder kleiner, aufweisen.

Das zu den erfindungsgemäßen Mischungen von Pfropfcopolymerisaten führende Herstellungsverfahren ist im wesentlichen dadurch charakterisiert, daß die beiden Pfropfcopolymerisate in einem üblichen Extruder bei Temperaturen von 200 - 300 °C, insbesondere von 220 - 280 °C, und bei einer mittleren Verweilzeit von 0,1 - 100, bevorzugt von 0,5 - 5 und besonders bevorzugt 0,5 - 3 min, miteinander vermischt werden.

Die erfindungsgemäßen Pfropfcopolymerisate, insbesondere Pfropfcopolymerisate Pl bis P3 und/oder Mischungen M1 bis M5, können für thermoplastische Massen, insbesondere zu deren Herstellung, verwendet werden.

Die erfindungsgemäßen Pfropfcopolymerisate, insbesondere Pfropfcopolymerisate P1 bis P3 und/oder die erfindungsgemäßen Mischungen M1 bis M5, können sowohl alleine als auch in Mischung mit anderen Pfropfcopolymerisaten oder Copolymerisaten verwendet werden. Sie eignen sich als Schlagzähmodifizierer für thermoplastische Massen. Die erfindungsgemäßen Pfropfcopolymerisate und/oder Mischungen eignen sich insbesondere als Schlagzähmodifizierer für Thermoplaste, die eine Glastemperatur von mindestens 25, bevorzugt von mindestens 60 und besonders bevorzugt von mindestens 80 °C aufweisen. Beispiele sind Polyvinylchlorid (PVC), Polymethylmethacrylat sowie Copolymerisate aus vinylaromatischen Monomeren und polaren copolymerisierbaren ethylenisch ungesättigten Monomeren sowie deren Mischungen.

Besonders bevorzugte Copolymerisate sind Styrol-Acrylnitril-Copolymerisate oder α-Methylstyrol-Acrylnitril-Copolymerisate. Zuätzlich können die thermoplastischen, ebenfalls erfindungsgemäßen Massen andere Thermoplaste, insbesondere Polycarbonate, enthalten.

Zu den bevorzugten thermoplastischen Massen (T1) zählen die, die
i) 0 - 95, bevorzugt 5 - 90 Gew.-% mindestens eines der Pfropfcopolymere P1 bis P5, bevorzugt P1 bis P3, und/oder mindestens eine der Mischungen M1 bis M6,
ii) 0 - 90, bevorzugt 5 - 90 Gew.-% mindestens eines von i verschiedenen Pfropfcopolymerisats und/oder Mischung,
iii) 5 - 95, bevorzugt 5 - 90 Gew.-% mindestens eines Copolymerisats aus
   iii.1) 50 - 100 Gew.-% mindestens eines vinylaromatischen Monomeren, C₁- bis C₁₈-Alkylacrylats, C₁- bis C₁₈-Alkylmethacrylats oder deren Mischung und
   iii.2) 0 - 50 Gew.-% Acrylnitril, Methacrylnitril, Maleinsäureanhydrid, N-substituierten Maleinimiden oder deren Mischungen, wobei die Summe der Gew.-% von iii.1 und iii.2 100 ergeben sollte,
iv) 0 - 90 Gew.-% mindestens eines Polycarbonats und
v) 0 - 50 Gew.-% Zusatzstoffe
beinhalten, wobei die Summe der Gew.-% von i bis v 100 ergeben sollte; oder
i) 0,1 bis 95 Gew.-% mindestens eines der Pfropfcopolymere P1 bis P3 und/oder mindestens eine der Mischungen M1 bis M6,
ii) 0 bis 94,9 Gew.-% mindestens eines von T1.i verschiedenen Pfropfcopolymerisats und/oder Mischung,
iii) 5 bis 99,9 Gew.-% mindestens eines Copolymerisats aus
   iii.1) 50 bis 100 Gew.-% mindestens eines vinylaromatischen Monomeren, C₁- bis C₁₈-Alkylacrylats, C₁- bis C₁₈-Alkylmethacrylats oder deren Mischungen und
   iii.2) 0 bis 50 Gew.-% Acrylnitril, Methacrylnitril, Maleinsäureanhydrid, n-substituierten Maleinimiden oder deren Mischungen, wobei die Summe der Gew.-% von iii.1 und iii.2 100 ergibt,
iv) 0 bis 90 Gew.-% mindestens eines Polycarbonats und
v) 0 bis 50 Gew.-% Zusatzstoffe, wobei die Summe von i bis v 100 ergibt.

Nach einer bevorzugten Ausführungsform enthalten thermoplastische Massen 10 - 70 Gew.-% mindestens eines Pfropfcopolymerisates P4 oder P5 (Komponente i.1), 10 - 70 Gew.-% mindestens eines Pfropfcopolymerisates P1 bis P3 (Komponente i.2). 20 - 89,9 Gew.-% mindestens eines Copolymerisates iii und 0,1 - 20 Gew.-% Zusatzstoffe v.

Nach einer weiteren bevorzugten Ausführungsform enthalten die thermoplastischen Massen 5 - 50 Gew.-% eines der Pfropfcopolymerisate P4 oder P5, 5 - 70 Gew.-% eines der Pfropfcopolymerisate P1 bis P3 und 20 - 84,5 Gew.-% des Copolymerisats iii, 5 - 60 Gew.-% des Polycarbonats iv sowie 0,1 - 20 Gew.-% Zusatzstoffe. Dabei beziehen sich die Gew.-%-Angaben jeweils auf die Summe der Komponenten i - v.

Die Verarbeitung erfolgt durch Extrudieren, Kneten oder Walzen aller Komponenten i - v in dazu üblichen Vorrichtungen, beispielsweise in Extrudern, Knetern, Walzen oder Mahlapparaturen, wobei die Verarbeitungsreihenfolge der Komponenten beliebig ist.

Die Pfropfcopolymerisate P1 bis P5 können in jeder beliebigen Kombination für sich alleine als Massen verwendet werden. Hierzu können sie beispielsweise durch Sprühtrocknung aufgearbeitet werden.

Bevorzugte Pfropfcopolymerisate ii sind aufgebaut aus einer Pfropfgrundlage aus einem Material mit einer Glasübergangstemperatur von mindestens 25, bevorzugt mindestens 80 und insbesondere von 80 - 130 °C, d.h. einem harten, nicht elastischen Material. Diese Pfropfcopolymerisate ii beinhalten drei oder mehr Pfropfauflagen, bevorzugt enthalten sie nicht mehr als drei Pfropfauflagen.

Besonders bevorzugte Pfropfcopolymerisate ii beinhalten
ii.1) 5 - 90 Gew.-% einer Pfropfgrundlage aus einem Material mit einer Glasübergangstemperatur von mindestens 25 °C aus mindestens
   ii.1.1) 50 - 99,9 Gew.-% mindestens eines vinylaromatischen Monomeren,
   ii.1.2) 0 - 49,9 Gew.-% mindestens eines mit ii.1.1 copolymerisierbaren Monomeren und
   ii1.3) 0,1 - 10 Gew.-% mindestens eines Vernetzers und
ii.2) 4,9 - 90 Gew.-% einer Pfropfauflage aus einem Material mit einer Glastemperatur von höchstens 0 °C aus
   ii2.1) 50 - 100 Gew.-% mindestens eines C₁- bis C₁₈-Alkylacrylats, Diens oder Dialkylsiloxans,
   ii.2.2) 0 - 50 Gew.-% mindestens eines mit den Monomeren ii.2.1 copolymerisierbaren Monomeren und
   ii2.3) 0 - 20 Gew.-% mindestens eines Vernetzers und
   ii.3) 0,1 - 85 Gew.-% einer zweiten Pfropfauflage aus einem Material mit einer Glasübergangstemperatur von mindestens 25 °C aus
   ii.3.1) 50 - 100 Gew.-% mindestens eines vinylaromatischen Monomeren,
   ii3.2) 0 - 50 Gew.-% mindestens eines mit dem Monomeren ii.3.1 copolymerisierbaren Monomeren und
   ii.3.3) 0 - 20 Gew.-% mindestens eines Vernetzers und
   ii.4) 5 - 90 Gew.-% einer dritten Pfropfauflage aus einem Material mit einer Glastemperatur von mindestens 25 °C aus
   ii.4.1) 1 - 99 Gew.-% mindestens eines vinylaromatischen Monomeren und
   ii.4.2) 1 - 99 Gew.-% mindestens eines mit dem Monomeren ii.4.1) copolymerisierbaren Monomeren, wobei die Summen der Gew.-% der einzelnen Komponentengruppen jeweils 100 ergeben sollte.

Besonders bevorzugte Pfropfcopolymerisate ii enthalten
5 - 20 Gew.-% ii.1,
40 - 65 Gew.-% ii.2,
10 - 25 Gew.-% ii.3 und
10 - 40 Gew.-% ii.4,
wobei die Summe der Komponenten ii.1 bis ii.4 100 ergibt.

Bevorzugt ist die Pfropfgrundlage ii.1 aufgebaut aus 60 - 99,8, insbesondere 70 - 99,5 Gew.-% ii.1.1, 0 - 39,8, insbesondere 0 - 29,5 Gew.-% ii.1.2 sowie 0,1 - 10, insbesondere 0,5 - 3 Gew.-% ii.1.3.

Als Komponente ii kommen vorzugsweise auch die Pfropfcopolymerisate P4 und P5 in Frage.

Für Monomer-, Vernetzerauswahl und Herstellungsverfahren sowie Teilchendurchmesser und Q-Werte gelten die vorangegangenen Ausführungen für Weich- und Hartsegmente mit analogem Aufbau. Die Pfropfcopolymerisate ii können nach an sich bekannten Methoden hergestellt werden, so daß hier beispielsweise auf die EP-A-450 485 verwiesen wird.

In der Regel bilden Massen, die nur die Komponenten i und ii enthalten, eine bimodale Teilchenmischung.

Neben den Komponente i und ii können die Massen als Komponente iii ein oder mehrere Copolymerisate in Mengen von bevorzugt 5 - 95, bezogen auf die Komponenten i bis v, enthalten. Bevorzugte Formmassen enthalten 20 - 79,9, insbesondere 40 - 74,9 Gew.-%, bezogen auf die Komponente i bis v, der Komponente iii.

Bevorzugte Copolymerisate beinhalten 60 - 80 Gew.-%, bezogen auf die Komponenten iii.1 und iii.2, an Monomeren iii.1 sowie 20 - 40 Gew.-%, bezogen auf die Komponente iii.1 und iii.2, an Monomeren iii.2.

Bevorzugte Copolymerisate iii sind solche, die aus wenigstens einem Monomeren aus der Gruppe Styrol, α-Methylstyrol, kernsubstituierte Styrole wie p-Methylstyrol und Methylmethacrylat, copolymerisiert mit wenigstens einem Monomeren aus der Gruppe Acrylnitril, Methacrylnitril und Maleinsäureanhydrid, bestehen.

Besonders bevorzugte Copolymerisate iii sind solche aus Styrol, Acrylnitril und ggf. Methylmethacrylat. Andere besonders bevorzugte Copolymerisate iii enthalten α-Methylstyrol, Acrylnitril und ggf. Methylmethacrylat. Daneben sind Copolymerisate iii aus Styrol, α-Methylstyrol sowie Acrylnitril und ggf. Methylmethacrylat besonders bevorzugt. Des weiteren zählen Cpolymerisate aus Styrol und Maleinsäureanhydrid zu den besonders bevorzugten Copolymerisaten iii. Die Copolymerisate iii sind in der Regel harzartig, thermoplastisch und kautschukfrei.

Die Copolymerisate iii sind an sich bekannt oder lassen sich durch an sich bekannte Methoden, beispielsweise radikalische Polymerisation, insbesondere durch Emulsions-, Suspensions-, Lösungs- oder Massepolymerisation herstellen. Sie weisen im allgemeinen Viskositätszahlen im Bereich von 40 - 60, vorzugsweise 60 - 100 ml/g auf. Dieses entspricht Molekulargewichten (Gewichtsmittelwert) Mw zwischen 1.500 und 200.000 g/mol.

Die Copolymerisate iii entstehen auch häufig bei der Pfropfcopolymerisation zur Herstellung der erfindungsgemäßen Pfropfcopolymerisate P1 bis P5 als Nebenprodukte, besonders dann, wenn große Mengen Monomere auf kleine Mengen Pfropfgrundlage gepfropft werden.

Als Komponente iv können die Massen 0 - 90, bevorzugt 0 -80 Gew.-% mindestens eines Polycarbonates enthalten.

Die Polycarbonate iv sind an sich bekannt und in der Literatur beschrieben.

Vorzugsweise können diese Polycarbonate durch Umsetzung von Kohlensäurederivaten wie Phosgen oder Diphenylcarbonat mit Diphenolen hergestellt werden. Grundsätzlich sind alle Diphenole verwendbar, wie sie beispielsweise in der Monographie von H. Schnell, "Chemistry and Physics of Polycarbonates", Interscience Publishers, 1964, sowie in der US-A-2 999 835 und in der DE-A-22 48 817 genannt sind.

Dihydroxydiphenyl, Di-(hydroxyphenyl)alkane und Di-(hydroxyphenyl)ether oder deren Mischung sind besonders bevorzugte Diphenole.

Geeignete Diphenole sind beispielsweise 1,3-Dihydroxybenzol, 1,4-Dihydroxybenzol, 2,6-Dihydroxynaphthalin, Di-(4-hydroxyphenyl)methan, 1,1-Di-(4'-hydroxyphenyl)ethan, 2,2-Di-(4'-hydroxyphenyl)propan (Bisphenol A), 2,2-Di-(3'-chlor-4'-hydroxyphenyl)propan, 2,2-Di-(3',5'-dichlor-4'-hydroxyphenyl)propan, 2,2-Di-(3',5'-dibrom-4'-hydroxyphenyl)propan, 2,2-Di-(3',5'-dimethyl-4'-hydroxyphenyl)propan, 2,4-Di-(4'-hydroxyphenyl)-2-methylbutan, Di-(4'-hydroxyphenyl)pentan, 1,1-Di-(4'-hydroxyphenyl)cyclohexan, 4,4'-Dihydroxydiphenylsulfon, 4,4'-Dihydroxydiphenylsulfit oder 4,4'-Dihydroxydiphenylether.

Besonders bevorzugtes Diphenol ist Bisphenol A sowie dessen Mischungen mit anderen Diphenolen. Der Anteil an Bisphenol A in derartigen Mischungen liegt im allgemeinen im Bereich von 70 - 98 Gew.-%.

Es können sowohl Homopolymerisate als auch Copolymerisate aus Mischungen unterschiedlicher Diphenole eingesetzt werden. Darüber hinaus können auch Blockcopolymerisate wie Diorganosiloxan-haltige Polycarbonate verwendet werden.

Die Polycarbonate iv können durch den Einbau von geringen Mengen, beispielsweise von 0,05 bis 2 mol-%, bezogen auf die Summe der eingesetzten Diphenole, an drei oder mehr als drei funktionellen Verbindungen, wie solchen mit drei oder mehr phenolischen OH-Gruppen, verzweigt sein.

Verfahren zur Herstellung von Polycarbonaten iv sind an sich bekannt. So können die Polycarbonate beispielsweise in heterogener Phase, dem sogenannten Phasengrenzflächenverfahren, oder in homogener Phase, dem sogenannten Pyridinverfahren, hergestellt werden. Verfahren zur Herstellung von Polycarbonat sind beispielsweise in den DE-A-22 48 817, 13 00 266, 14 95 739, 33 34 782 sowie der US-A-2 999 835 beschrieben.

Die relative Viskosität der Polycarbonate iv liegt im allgemeinen im Bereich von 1,2 - 1,5, vorzugsweise 1,28 - 1,4 dl/g, gemessen in 0,5 gew.-%iger Lösung Dichlormethan bei 25 °C.

Die thermoplastischen Massen können als Komponente v Zusatzstoffe enthalten. Deren Anteil beträgt im allgemeinen von 0 - 50, vorzugsweise von 0,1 - 20 Gew.-%, bezogen auf das Gesamtgewicht der Komponenten i bis v.

Übliche Zusatzstoffe sind beispielsweise Glasfasern, Flammschutzmittel, Stabilisatoren und Oxidationsverzögerer, Mittel gegen Wärmezersetzung und Zersetzung durch ultraviolettes Licht, Gleit- und Entformungsmittel, Farbstoffe und Pigmente oder Weichmacher.

Es können Glasfasern aus E-, A- oder C-Glas verwendet werden. Meist sind die Glasfasern mit einer Schlichte und einem Haftvermittler ausgerüstet. Der Durchmesser der Glasfaser liegt im allgemeinen zwischen 6 und 20 µm. Es können sowohl Endlosfasern (rovings) als auch Schnittglasfasern mit einer Länge von 1 - 10, bevorzugt 3 - 6 mm, eingearbeitet werden.

Pigmente und Farbstoffe sind allgemein in Mengen bis zu 6, bevorzugt 0,5 - 5 und insbesondere bevorzugt 0,5 - 3 Gew.-%, bezogen auf die Komponenten i bis v, enthalten.

Die Pigmente zur Einfärbung von Thermoplasten sind allgemein bekannt, siehe beispielsweise R. Gächter und H. Müller, Taschenbuch der Kunststoffadditive, Carl Hanser Verlag, 1983, S. 494 - 510. Als erste bevorzugte Gruppe von Pigmenten sind Weißpigmente zu nennen, beispielsweise Zinkoxid, Zinksulfid, Bleiweiß (2 PbCO₃ · Pb(OH)₂), Lithophone, Antimonweiß und Titandioxid. Von den beiden gebräuchlichsten Kristallmodifikationen (Rutil- und Anastas-Typ) des Titandioxids wird insbesondere die Rutilform zur Weißfärbung der Formmassen verwendet.

Schwarze Farbpigmente, die eingesetzt werden können, sind beispielsweise Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnance- oder Gasruß eingesetzt wird (siehe hierzu G. Benzing, Pigmente für Anstrichmittel, Expert-Verlag (1988) S. 78ff).

Selbstverständlich können zur Einstellung bestimmter Farbtöne anorganische Buntpigmente wie Chromoxidgrün oder organische Buntpigmente wie Azopigmente oder Phthalocyanine eingesetzt werden. Derartige Pigmente sind allgemein im Handel erhältlich.

Oxidationsverzögerer und Wärmestabilisatoren, die den erfindungsgemäßen thermoplastischen Massen zugesetzt werden können, sind beispielsweise Halogenide von Metallen der Gruppe I des Periodensystems, beispielsweise Natrium-, Kalium-, Lithium-Halogenide, ggf. in Verbindung mit Kupfer-(I)-Halogeniden, beispielsweise Chloriden, Bromiden oder Iodiden. Die Halogenide, insbesondere des Kupfers, können auch noch elektronenreiche π-Liganden enthalten. Als Beispiele derartiger Kupferkomplexe seien Cu-Halogenid-Komplexe mit beispielsweise Triphenylphosphin genannt. Weiterhin können Zinkfluorid oder Zinkchlorid verwendet werden. Ferner sind sterisch gehinderte Phenole, Hydrochinone, substituierte Vertreter dieser Gruppe, sekundäre aromatische Amine, ggf. in Verbindung mit phosphorhaltigen Säuren, beispielsweise deren Salze, und Mischungen dieser Verbindungen, vorzugsweise in Konzentrationen bis zu 1 Gew.-%, bezogen auf die Komponenten i bis v, einsetzbar.

Beispiele für UV-Stabilisatoren sind verschiedene substituierte Resorcine, Salicylate, Benzotriazole und Benzophenone, die im allgemeinen in Mengen von bis zu 2 Gew.-%, bezogen auf die Komponenten i bis v, eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, beispielsweise Distearylketon, eingesetzt werden.

Beispiele für Weichmacher sind Dialkylphthalate, beispielsweise Dioctylphthalat.

Die ebenfalls thermoplastischen Massen können nach an sich bekannten Verfahren hergestellt werden, indem man die Komponenten in üblichen Mischvorrichtungen, beispielsweise Schneckenextrudern, Brabender-Mühlen oder Banbury-Mühlen mischt und anschließend extrudiert. Nach der Extrusion wird das Extrudat abgekühlt und zerkleinert. Die thermoplastischen Massen zeichnen sich durch hohe Schlagzähigkeit, insbesondere bei tiefen Temperaturen, aus. Gleichzeitig weisen die thermoplastischen Massen eine hohe Witterungs- und Alterungsbeständigkeit auf. Außerdem lassen sie sich gut einfärben.

Sie lassen sich zu Formkörpern, Folien, Beschichtungen oder Fasern verarbeiten. Sie können auch beispielsweise mittels bekannter Co-Extrusionsverfahren in Form von Schichten (bevorzugt Schichtdicken im Bereich von 100 µm bis 10 mm) auf Oberflächen, bevorzugt auf Thermoplaste wie Styrol-Acrylnitril-Copolymere, Acrylnitril-Butadien-Styrol-Terpolymere (ABS), Polystyrol, schlagzähes Polystyrol (HIPS) oder PVC aufgebracht werden. Die Massen können beispielsweise im Automobilsektor, Haushaltsbereich und für Freizeitartikel eingesetzt werden. So können sie beispielsweise zu Automobilteilen, Straßenschildern, Fensterprofilen, Lampenabdeckungen, Gartenmöbeln, Booten, Surfbrettern oder Kinderspielzeug verarbeitet werden.

Eine erfindungsgemäß bevorzugte Ausführungsform ist das Pfropfcopolymerisat P1 mit definierter Kern-Schale-Morphologie, das folgendes beinhaltet:
- P1.1): 1 bis 95 Gew.-% einer Pfropfgrundlage aus einem Material mit einer Glastemperatur von mindestens 25°C, aufgebaut aus
P1.1.1) 50 bis 99,8 Gew.-% mindestens eines vinylaromatischen Monomeren,
P1.1.2) 0 bis 49,8 Gew.-% mindestens eines mit den Monomeren P1.1.1 copolymerisierbaren Monomeren,
P1.1.3) 0,1 bis 25 Gew.-% einer Vernetzerkomponente aus
α) 0,1 bis 100 Gew.-% Dihydrodicyclopentadienylacrylat und
β) 0 bis 99 Gew.-% mindestens eines weiteren Vernetzers mit zwei oder mehr funktionellen Gruppen unterschiedlicher Reaktivität und
P1.1.4) 0,1 bis 25 Gew.-% mindestens eines Vernetzers mit zwei oder mehr funktionellen Gruppen gleicher Reaktivität und
- P1.2): 5 bis 99 Gew.-% einer Pfropfauflage aus einem Material mit einer Glasübergangstemperatur von höchstens 0°C, die wiederum aufgebaut ist aus
P1.2.1) 50 bis 100 Gew.-% mindestens eines Acrylates,
P1.2.2) 0 bis 50 Gew.-% mindestens eines mit den Monomeren P1.2.1 copolymerisierbaren Monomeren, und
P1.2.3) 0 bis 20 Gew.-% mindestens eines Vernetzers α oder β oder deren Mischungen.
- Eine weitere bevorzugte Ausführungsform ist das Pfropfcopolymerisat P2. Dieses Pfropfcopolymerisat besitzt eine definierte Kern-Schale-Morphologie und weist folgende Bestandteile auf:
P2.1) 1 bis 95 Gew.-% einer Pfropfgrundlage aus einem Material mit einer Glastemperatur von mindestens 25°C und einer mittleren Teilchengröße (d₅₀) von mindestens 150 nm, die wiederum aufgebaut ist aus
P2.1.1) 50 bis 99,8 Gew.-% mindestens eines vinylaromatischen Monomeren,
P2.1.2) 0 bis 49,8 Gew.-% mindestens eines mit den Monomeren P1.1.1 copolymerisierbaren Monomeren,
P2.1.3) 0,1 bis 25 Gew.-% einer Vernetzerkomponente aus
α) 0,1 bis 100 Gew.-% Dihydrodicyclopentadienylacrylat und
β) 0 bis 99 Gew.-% mindestens eines weiteren Vernetzers mit zwei oder mehr funktionellen Gruppen unterschiedlicher Reaktivität und
P2.1.4) 0,1 bis 25 Gew.-% mindestens eines Vernetzers mit zwei oder mehr funktionellen Gruppen gleicher Reaktivität und
P2.2) 4,9 bis 98,9 Gew.-% einer Pfropfauflage aus einem Material mit einer Glasübergangstemperatur von höchstens 0°C, die wiederum aufgebaut ist aus
P2.2.1) 50 bis 100 Gew.-% mindestens eines Acrylates,
P2.2.2) 0 bis 50 Gew.-% mindestens eines mit den Monomeren P1.2.1 copolymerisierbaren Monomeren, und
P2.2.3) 0 bis 20 Gew.-% mindestens eines Vernetzers α oder β oder deren Mischungen.
P2.3) 0,1 bis 90 Gew.-% mindestens einer weiteren Pfropfauflage.

Weitere erfindungsgemäß bevorzugte Ausführungsformen der Pfropfcopolymerisate P1 und P2 liegen dann vor, wenn das Gewichtsverhältnis der Vernetzerkomponenten P1.1.3 und P2.1.3 zu Vernetzer P1.1.4 und P2.1.4 von 1:0,5 bis 1:3 beträgt.

Ferner sind Ausführungsformen der Pfropfcopolymerisate P1 und P2 bevorzugt, in denen die Pfropfgrundlage P1.1 bzw. P2.1 eine mittlere Teilchengröße (d₅₀) von 200 bis 800 nm besitzt und die mittlere Teilchengröße (Gewichtsmittelwert) der gesamten Pfropfcopolymerisate P1 und P2 im Bereich von 350 bis 2000 nm liegt.

Die erfindungsgemäßen Ausführungsformen der Pfropfcopolymerisate P1 und P2 lassen sich bevorzugt herstellen, indem die Pfropfgrundlagen P1.1 bzw. P2.1 und die entsprechenden Pfropfhüllen P1.2 bzw. P2.2 nacheinander im Eintopfverfahren polymerisiert werden, wobei das Verhältnis der Zulaufraten der Monomere P1.1.1 bis P1.1.4 bzw. P2.1.1 bis P2.1.4 zu den Monomeren P1.2.1 bis P1.2.3 bzw. P2.2.1 bis P2.2.3 sowie das Verhältnis der Zulaufraten der Emulgatoren für P1.1 bzw. P2.1 zu der für P1.2 bzw. P2.2 0,5 bis 20 beträgt.

Die in den voranstehenden Absätzen genannten bevorzugten Ausführungsformen der Pfropfcopolymerisate P1 und P2 werden bevorzugt als Schlagzähmodifizierer für thermoplastische Formmassen verwendet.

Bevorzugte Ausführungsformen derartiger thermoplastischer Massen enthalten
i) 5 bis 95 Gew.-% mindestens eines Pfropfcopolymerisats der zuvor genannten Ausführungsformen von P1 oder P2,
ii) 0 bis 90 Gew.-% mindestens eines vom Pfropfcopolymerisat P1 oder P2 verschiedenen Pfropfcopolymerisats,
iii) 5 bis 95 Gew.-% mindestens eines Copolymerisats aus
   iii₁) 5 bis 100 Gew.-% mindestens eines vinylaromatischen Monomeren, C₁- bis C₁₈-Alkylacrylats, C₁- bis C₁₈-Alkylmethacrylats oder deren Mischungen und
   iii₂) 0 bis 50 Gew.-% Acrylnitril, Methacrylnitril, Maleinsäureanhydrid, N-substituierten Maleinimiden oder deren Mischungen,
iv) 0 bis 90 Gew.-% mindestens eines Polycarbonates und
v) 0 bis 50 Gew.-% Zusatzstoffe.

Weitere erfindungsgemäße Ausführungsformen sind Formkörper, Folien, Fasern oder Beschichtungen, die die obigen der Pfropfcopolymerisate P1 oder P2 enthalten.

Weitere erfindungsgemäß bevorzugte Ausführungsformen von Pfropfcopolymeren besitzen den gleichen Aufbau wie P1 und P2, mit dem Unterschied, daß P1.1.4 bzw. P2.1.4 0,1 bis 25 Gew.-% Divinylbenzol sind. Besonders bevorzugt sind jedoch Ausführungsformen, bei denen die Pfropfcopolymere P1 und P2 0,1 bis 25 Gew.-% Dihydrodicyclopentadienylacrylat für P1.1.3 bzw. P2.1.3 und 0,1 bis 25 Gew.-% Divinylbenzol für P1.1.4 bzw. P2.1.4 enthalten.

Weitere erfindungsgemäße Ausführungsformen stellen die Pfropfcopolymere P3 dar, deren Aufbau mindestens folgendes enthalten muß:
- P3.1): 0,1 bis 5 Gew.-% eines Kerns mit einer Glastemperatur von höchstens 0°C und einer mittleren Teilchengröße (d₅₀) von bis zu 120 nm, aufgebaut aus
P3.1.1) 50 bis 99,9 Gew.-% mindestens eines Alkylacrylates,
P3.1.2) 0 bis 50 Gew.-% mindestens eines mit den Monomeren P3.1.1 copolymerisierbaren Monomeren P3.1.2 und
P3.1.3) 0,1 bis 20 Gew.-% mindestens eines Vernetzers.
- P3.2): 1 bis 90 Gew.-% einer Schale aus einem Material mit einer Glasübergangstemperatur von mindestens 25°C und einer mittleren Teilchengröße (d₅₀) aus dem Kern P3.1 und einer ersten Schale P3.2 von mindestens 150 nm, aufgebaut aus
P3.2.1) 50 bis 99,8 Gew.-% mindestens eines vinylaromatischen Monomeren,
P3.2.2) 0 bis 49,8 Gew.-% mindestens eines mit den Monomeren P3.2.1 copolymerisierbaren Monomeren P3.2.2,
P3.2.3) 0,1 bis 25 Gew.-% einer Vernetzerkomponente aus
α) 0,1 bis 100 Gew.-% Dihydrodicyclopentadienylacrylat und
β) 0 bis 99,9 Gew.-% mindestens eines weiteren Vernetzers mit zwei oder mehr funktionellen Gruppen unterschiedlicher Reaktivität und
P3.2.4) 0,1 bis 25 Gew.-% mindestens eines Vernetzers mit zwei oder mehr funktionellen Gruppen gleicher Reaktivität und
- P3.3): 4,8 bis 98,8 Gew.-% einer zweiten Schale aus einem Material mit einer Glastemperatur von höchstens 0°C, aufgebaut aus
P3.3.1) 50 bis 99,9 Gew.-% mindestens eines Alkylacrylates,
P3.3.2) 0 bis 50 Gew.-% mindestens eines mit den Monomeren P3.3.1 copolymerisierbaren Monomeren P3.3.2 und
P3.3.3) 0,1 bis 20 Gew.-% mindestens eines Vernetzers sowie
- P3.4): 0,1 bis 90 Gew.-% mindestens einer weiteren Schale.

Besonders bevorzugte Ausführungsformen des Pfropfcopolymerisats P3 beinhalten 1 bis 3 Gew.-% eines Kerns P3.1, 10 bis 50 Gew.-% einer ersten Schale P3.2, 20 bis 60 Gew.-% einer zweiten Schale P3.3 und 20 bis 67 Gew.-% mindestens einer weiteren Schale P3.3. Eine weitere bevorzugte Ausführungsform des Pfropfcopolymerisats P3 liegt dann vor, wenn der Kern P3.1 eine Glastemperatur von höchstens -20°C und einen mittleren Teilchendurchmesser (d₅₀) von 50 bis 100 nm aufweist.

Weitere Ausführungsformen der Pfropfcopolymerisate P3 weisen eine erste Schale P3.2 mit einer Glasübergangstemperatur von mindestens 50°C und das Pfropfcopolymerisat aus dem Kern P3.1 und der ersten Schale P3.2 eine mittlere Teilchengröße (d₅₀) von 180 bis 500 nm auf.

Zudem können Ausführungsformen der Pfropfcopolymerisate P3 eine zweite Schale P3.3 mit einer Glastemperatur von höchstens -20°C aufweisen, und das Pfropfcopolymerisat aus dem Kern P1 und der beiden Schalen P3.2 und P3.3 einen mittleren Teilchendurchmesser (d₅₀) von 200 bis 750 nm besitzen.

Die zuvor genannten erfindungsgemäßen Ausführungsformen P3 können am besten dadurch hergestellt werden, daß die den Kern P3.1 und die Schalen P3.2, P3.3 und P3.4 bildenden Monomere nacheinander in einer Emulsion bei Temperaturen von 20 bis 90°C polymerisiert werden.

Erfindungsgemäß bevorzugte thermoplastische Formmassen enthalten
i) 5 bis 95 Gew.-% mindestens eines Pfropfcopolymerisats P3,
ii) 0 bis 90 Gew.-% mindestens eines vom Pfropfcopolymerisat i verschiedenes Pfropfcopolymerisat ii,
iii) 5 bis 95 Gew.-% mindestens eines Copolymerisats aus
   iii₁) 50 bis 100 Gew.-% mindestens eines vinylaromatischen Monomeren, C₁- bis C₁₈-Alkylacrylats, C₁- bis C₁₈-Alkylmethacrylats oder deren Mischungen und
   iii₂) 0 bis 50 Gew.-% Acrylnitril, Methacrylnitril, Maleinsäureanhydrid, N-substituierten Maleinimiden oder deren Mischungen,
iv) 0 bis 90 Gew.-% mindestens eines Polycarbonates und
v) 0 bis 50 Gew.-% Zusatzstoffe.

Ausführungsformen erfindungsgemäßer Formkörper, Folien, Fasern oder Beschichtungen enthalten Pfropfcopolymerisat P3.

Eine besonders bevorzugte Ausführungsform der Pfropfcopolymerisate P3 liegt dann vor, wenn P3.2.4 für 0,1 bis 25 Gew.-% Divinylbenzol steht.

In einer weiteren besonders bevorzugten Ausführungsform der Pfropfcopolymerisate P3 steht P3.2.3 für 0,1 bis 25 Gew.-% Dihydrodicyclopentadienylacrylat und P3.2.4 für 0,1 bis 25 Gew.-% Divinylbenzol.

Eine weitere erfindungsgemäß bevorzugte Ausführungsform stellt die Pfropfcopolymerisatenmischung M2 dar. Die Mischung M2 beinhaltet
- M2.I): ein teilchenförmiges Pfropfcopolymerisat M2.I, bestehend aus
- M2.I.1): 30 bis 90 Gew.-% mindestens einer kautschukelastischen Pfropfgrundlage M2.I.1 aus einem Material mit einer Glastemperatur von höchstens 0°C, aufgebaut aus
M2.I.1.1) 50 bis 99,9 Gew.-% mindestens eines Alkylacrylats, Diens oder Dialkylsilixans,
M2I.1.2) 0,1 bis 10 Gew.-% mindestens eines Monomeren mit zwei oder mehr funktionellen Gruppen und
M2I.1.3) 0 bis 49,9 Gew.-% eines weiteren, mit den Monomeren M2.I.1.1 copolymerisierbaren Monomeren M2.I.1.3,
- M2.I.2): 5 bis 50 Gew.-% einer ersten Pfropfauflage aus einem Material mit einer Glasübergangstemperatur von mindestens 25°C, bestehend aus
M2.I.2.1) 50 bis 100 Gew.-% mindestens eines vinylaromatischen Monomeren,
M2.I.2.2) 0 bis 20 Gew.-% mindestens eines Monomeren mit zwei oder mehr funktionellen Gruppen und
M2.I.2.3) 0 bis 50 Gew.-% mindestens eines copolymerisierbaren Monomeren und
- M2.I.3): 5 bis 50 Gew.-% einer zweiten Pfropfauflage aus einem Material mit einer Glasübergangstemperatur von mindestens 25°C, bestehend aus
M2.I.3.1) 1 bis 99 Gew.-% mindestens eines vinylaromatischen Monomeren und
M2.I.3.2) 1 bis 99 Gew.-% mindestens eines copolymerisierbaren, ethylenisch ungesättigten Monomeren,
- M2.II.): und ein Pfropfcopolymerisat M2.II mit einer definierten Kern-Schale-Morphologie, bestehend aus:
- M2.II.1): 1 bis 95 Gew.-% einer Pfropfgrundlage aus einem Material mit einer Glastemperatur von mindestens 25°C und einer mittleren Teilchengröße (d₅₀) von mindestens 150 nm, aufgebaut aus
M2.II.1.1) 50 bis 99 Gew.-% mindestens eines vinylaromatischen Monomeren,
M2.II.1.2) 0 bis 49,8 Gew.-% mindestens eines mit den Monomeren M2.II.1.1 copolymerisierbaren Monomeren,
M2.II.1.3) 0,1 bis 25 Gew.-% einer Vernetzerkomponente aus
α) 0,1 bis 100 Gew.-% Dihydrodicyclopentadienylacrylat und
β) 0 bis 99 Gew.-% mindestens eines weiteren Vernetzers mit zwei oder mehr funktionellen Gruppen unterschiedlicher Reaktivität und
M2.II.1.4) 0,1 bis 25 Gew.-% mindestens eines Vernetzers mit zwei oder mehr funktionellen Gruppen gleicher Reaktivität und
- M2.II.2): 4,9 bis 98,9 Gew.-% einer Pfropfauflage aus einem Material mit einer Glasübergangstemperatur von höchstens 0°C, aufgebaut aus
M2.II.2.1) 50 bis 100 Gew.-% mindestens eines Alkylacrylats,
M2.II.2.2) 0 bis 50 Gew.-% mindestens eines mit den Monomeren M5.II.2.1 copolymerisierbaren Monomeren und
M2.II.2.3) 0 bis 20 Gew.-% mindestens eines Vernetzers α oder β oder deren Mischungen, sowie darüber hinaus
- M2.II.3)): 0,1 bis 90 Gew.-% mindestens einer weiteren Pfropfauflage.

In weiteren erfindungsgemäßen Ausführungsformen der Mischung M2 weist das Pfropfcopolymerisat M2.I eine mittlere Teilchengröße von 40 bis 200 nm auf.

In darüber hinaus bevorzugten Ausführungsformen der Mischungen M2 weist das Pfropfcopolymerisat M2.II eine mittlere Teilchengröße (d₅₀) von 250 bis 2000 nm auf.

Ferner liegt eine erfindungsgemäße Ausführungsform der Mischung M2 dann vor, wenn es sich bei den Monomeren M2.I.1.2 und M2.I.2.2 um Vernetzer handelt.

Andere erfindungsgemäße Ausführungsformen der Mischungen M2 weisen Monomere M2.I.1.2 und M2.I.2.2 auf, bei denen sich um pfropfaktive Monomere mit zwei oder mehr funktionellen Gruppen unterschiedlicher Reaktivität handelt.

Die zuvor genannten erfindungsgemäßen Ausführungsformen der Mischungen M2 können am besten hergestellt werden, indem die Pfropfcopolymerisate M2.I und M2.II in einem Extruder bei Temperaturen von 220°C bis 300°C und bei einer mittleren Verweilzeit von 0,5 bis 5 Minuten miteinander vermischt werden.

Es ist vorteilhaft, die zuvor aufgeführten bevorzugten Ausführungsformen der Mischungen M2 als Schlagzähmodifizierer für thermoplastische Massen zu verwenden. Eine weitere erfindungsgemäße Ausführungsform sind thermoplastische Massen, die folgendes beinhalten:
i) 5 bis 90 Gew.-% mindestens eines Pfropfcopolymerisats M2.I,
ii) 5 bis 90 Gew.-% mindestens eines vom Pfropfcopolymerisat M2.II,
iii) 5 bis 95 Gew.-% mindestens eines Copolymerisats aus
   iii₁) 50 bis 100 Gew.-% mindestens eines vinylaromatischen Monomeren, C₁- bis C₁₈-Alkylacrylats, C₁- bis C₁₈-Alkylmethacrylats oder deren Mischungen und
   iii₂) 0 bis 50 Gew.-% Acrylnitril, Methacrylnitril, Maleinsäureanhydrid, N-substituierten Maleinimiden oder deren Mischungen,
iv) 0 bis 90 Gew.-% mindestens eines Polycarbonates und
v) 0 bis 50 Gew.-% Zusatzstoffe.

Weitere erfindungsgemäß bevorzugte Ausführungsformen sind Formkörper, Folien und Beschichtungen, die Mischungen M2 enthalten.

In einer weiteren Ausführungsform sind die thermoplastischen Massen und die darin befindlichen Bestandteile, insbesondere die erfindungsgemäßen Pfropfcopolymerisate und deren Mischungen sowie die Komponenten ii und iii, kautschuk-, insbesondere dienkautschuk- und besonders bevorzugt butadien- und/oder isoprenkautschukfrei, um der DIN 16777/2 bzw. ISO6402/1 zu entsprechen.

### BEISPIELE

### Anwendungstechnische Prüfungen

Die Teilchengrößen (Gewichtsmittelwerte d₅₀) wurden mittels einer analytischen Ultrazentrifuge entsprechend der in W.Scholtan, H.Lange, Kolloid-Z. und Z.-Polymere 250 (1972) Seiten 782 bis 796 beschriebenen Methode bestimmt.

Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der d₅₀-Wert aufweisen.

Die Kerbschlagzähigkeiten (aₖ [kJ/m²]) wurden bei den angegebenen Temperaturen gemäß ISO179/1eA an gespritzten und anschließend gefrästen (A-Kerbe) Normkleinstäben gemessen.

Die Schlagzähigkeiten (aₙ [kJ/m²] wurden nach ISO179/1eU an gespritzten Normkleinstäben gemessen.

Untersucht wurden jeweils drei Probenserien, die bei unterschiedlichen Verarbeitungstemperaturen hergestellt worden waren. Angegeben ist jeweils der Mittelwert aus der Prüfung von 10 Proben je Probenserie.

Die Viskositätszahlen (VZ[cm³/g]) wurden jeweils an einer 0,5 Gew.-%igen Lösung in Dimethylformamid bei 23°C bestimmt. Unlösliche Gelanteile wurden vor der Messung durch Zentrifugieren entfernt und die Einwaage entsprechend korrigiert.

ΔE ist ein Maß für die Einfärbbarkeit und wurde nach DIN6174 bestimmt. Der ΔE-Wert errechnet sich aus der Differenz der Opazität von 2mm dicken, bei 200°C gespritzten Rundscheiben über weißem und schwarzem Untergrund. Ist die so ermittelte Differenz ΔE klein, bedeutet dies, daß sich die Proben nur schlecht einfärben lassen.

Der Glanz wurde nach DIN67530 dadurch bestimmt, daß Licht bestimmter Intensität in einem Einstrahlwinkel von 45°C auf die Probe eingestrahlt und die Intensität des reflektierten Lichtes mittels eines Photogoniometers gemessen wurde.

Als Maß für die Wärmeformbeständigkeit der Proben wurde der Vicat B50-Wert nach DIN 53460 bestimmt.

Der Schmelzvolumenindex MVJ wurde bei 220°C und einer Auflagekraft von 10kp gemessen.

Die Feststoffgehalte der Emulsionen bezeichnen den Gehalt aller Feststoffanteile in Gewichtsprozent bezogen auf die Gesamtmasse der jeweiligen Emulsion.

### Abkürzungen:

- Polystyrol:: PS
- Dihydrodicyclopentadienylacrylat:: DCPA
- n-Butandioldiacrylat:: BDA
- Natriumsalz einer C₁₂- bis C₁₈-Paraffinsulfonsäure:: Na-Salz
- Kaliumperoxodisulfat:: KPDS
- Natriumpyrophosphat:: NaPP
- Pfropfcopolymerisat:: PCP
- Styrol:: S
- Acrylnitril:: AN
- Feststoffgehalt:: FG
- Copolymer aus S und AN:: PSAN
- Divinylbenzol:: DVB
- Pfropfgrundlage:: PG
- erste Pfropfauflage:: 1PA
- zweite Pfropfauflage:: 2PA
- dritte Pfropfauflage:: 3PA
- hart (Eigenschaft von PG oder PA):: H
- weich (Eigenschaft von PG oder PA):: W
- Diffuser Phasenübergang beim Übergang von harter Pfropfgrundlage zu weicher Pfropfauflage: ○
- Scharfer Phasenübergang von Hartsegment zu Weichsegment: Δ

### I. Herstellung von Pfropfcopolymerisaten und Formmassen mit einem harten Kern

### I.1 Herstellung eines Polystyrol-Saatlatex

### (OZ 45942; NAE566/95)

4500 g Wasser, 30 g des Na-Salzes einer C₁₂- bis C₁₈-Paraffinsulfonsäure, 9 g Kaliumperoxodisulfat, 12 g Natriumhydrogencarbonat und 1 g Natriumpyrophosphat wurden unter Rühren und unter Stickstoff auf 70°C erwärmt. Ein Gemisch aus 2940 g Styrol und 40 g Dihydrodicyclopentadienylacrylat (DCPA) wurde innerhalb von 3 Stunden zugegeben. Nach Beendigung der Monomerzugabe wurde die Emulsion noch 1 Stunde bei 60°C gehalten. Der so erhaltene PS-Saatlatex hatte einen mittleren Teilchendurchmesser (d₅₀) von 80 nm. Der Feststoffgehalt der PS-Saatlatexemulsion betrug 39,9%.

### 1.2 Herstellung der harten Pfropfgrundlagen

### I.2.1 Pfropfgrundlage HPG1

### (OZ 45942)

4200g Wasser, 3 g des Na-Salzes einer C₁₂- bis C₁₈-Paraffinsulfonsäure, 1,75 g Kaliumperoxodisulfat, 2,5 g Natriumhydrogencarbonat, 1 g Natriumpyrophosphat und 40 g des PS-Saatlatex wurden auf 65 °C erwärmt. Anschließend wurde ein Gemisch aus 475 g Styrol, 10 g DCPA und 15 g BDA innerhalb von 3 Stunden zugegeben. Nach Beendigung der Monomerzugabe wurde die Emulsion noch 1 Stunde bei 65°C gehalten.

Die Pfropfgrundlage HPG1 hatte einen mittleren Teilchendurchmesser (d₅₀) von 250 nm.

Die Emulsion hatte einen Feststoffgehalt von 10,5%.

### 1.2.2 Pfropfgrundlage HPG2

### (OZ 45942)

Die Pfropfgrundlage HPG2 wurde entsprechend der HPG1 hergestellt, jedoch wurden 490 g Styrol zugegeben und kein BDA mitverwendet.

Die Pfropfgrundlage HPG2 hatte einen mittleren Teilchendurchmesser (d₅₀) von 263 nm.

Die Emulsion hatte einen Feststoffgehalt von 10,7%.

### I.2.3 Pfropfgrundlage HPG3

### (OZ 45942)

4200 g Wasser, 6 g des Na-Salzes einer C₁₂- bis C₁₈-Paraffinsulfonsäure, 2 g Kaliumperoxodisulfat, 3 g Natriumhydrogencarbonat, 1,5 g Natriumpyrophosphat wurden auf 65°C erwärmt. Anschließend wurde ein Gemisch aus 570 g Styrol, 12 g DCPA und 18 g BDA innerhalb von 3 Stunden zugegeben. Nach Beendigung der Monomerzugabe wurde die Emulsion noch 1 Stunde bei 65°C gehalten.

Die Pfropfgrundlage HPG3 hatte einen mittleren Teilchendurchmesser (d₅₀) von 82 nm.

Die Emulsion hatte einen Feststoffgehalt von 12,7%.

### I.2.4 Pfropfgrundlage HPG4

### (OZ 45942)

Die Pfropfgrundlage HPG4 wurde entsprechend der HPG3 hergestellt, jedoch wurden 588 g Styrol zugegeben und kein BDA mitverwendet.

Die Pfropfgrundlage HPG4 hatte einen mittleren Teilchendurchmesser (d₅₀) von 85 nm.

Die Emulsion hatte einen Feststoffgehalt von 12,6%.

### I.2.5 Pfropfgrundlage HPG7

### (OZ 45942)

Die Pfropfgrundlage HPG7 wurde entsprechend der HPG1 hergestellt, jedoch wurde das Gemisch aus Styrol, DCPA und BDA innerhalb 1 Stunde zugegeben. Nach Beendigung der Reaktion wurde noch eine Stunde bei 65°C nachgerührt.

Die Pfropfgrundlage HPG7 hatte einen mittleren Teilchendurchmesser (d₅₀) von 245 nm.

Die Emulsion hatte einen Feststoffgehalt von 8,9 %.

### 1.2.6 Pfropfgrundlage HPG8

### (NAE 566/95)

4200g Wasser, 3 g des Na-Salzes einer C₁₂- bis C₁₈-Paraffinsulfonsäure, 1,75 g Kaliumperoxodisulfat, 2,5 g Natriumhydrogencarbonat, 1 g Natriumpyrophosphat und 40 g des PS-Saatlatex wurden auf 65°C erwärmt. Anschließend wurde ein Gemisch aus 482,5 g Styrol, 10 g DCPA und 7,5 g DVB innerhalb von 3 Stunden zugegeben. Nach Beendigung der Monomerzugabe wurde die Emulsion noch 1 Stunde bei 65°C gehalten.

Die Pfropfgrundlage HPG8 hatte einen mittleren Teilchendurchmesser (d₅₀) von 210 nm.
Die Emulsion hatten einen Feststoffgehalt von 6,8%.

### I.2.7 Pfropfgrundlage HPG9

2450 g Wasser, 3 g des Natriumsalzes einer C₁₂- bis C₁₈-Paraffinsulfonsäure, 1,5 g Kaliumperoxodisulfat, 2,4 g Natriumhydrogencarbonat, 1 g Natriumpyrophosphat und 53 g des Polystyrol-Saatlatex wurden auf 65 °C erwärmt. Anschließend wurde ein Gemisch aus 590 g Styrol, 12 g DCPA und 9,2 g DVB innerhalb von 3 Stunden zugegeben. Nach Beendigung der Monomerzugabe wurde die Emulsion noch 1 Stunde bei 65 °C gehalten.

Die Pfropfgrundlage HPG9 hatte einen mittleren Teilchendurchmesser (d₅₀) von 248 nm.
Die Emulsion hatte einen Festsoffgehalt von 19,5%.

### I.3 Herstellung der ersten Pfropfauflage IPA (bzw. der Pfropfcopolymerisate aus Pfropfgrundlage und erster Pfropfauflage)

Zu einer Emulsion der Pfropfgrundlage PG, die gegebenenfalls mit Wasser verdünnt wurde, wurden die in Tabelle I.1 angegebenen Mengen des Na-Salzes einer C₁₂- bis C₁₈-Paraffinsulfonsäure (Na-Salz), Kaliumperoxodisulfat (KPDS), Natriumhydrogencarbonat und Natriumpyrophosphat (NaPP) gegeben. Bei 60°C wurde das Monomere bzw. die Monomeren sowie gegebenenfalls Vernetzer innerhalb der angegebenen Zeit zudosiert (Zugabezeit). Danach wurde nachgerührt. Die mittleren Teilchendurchmesser (d₅₀) der so erhaltenen Pfropfcopolymerisate aus HPG und 1PA wurden bestimmt. Der Feststoffgehalt der Emulsion der so erhaltenen Pfropfcopolymerisate wurde gemessen; s. Tabelle I.1.

**Tabelle I.1**

| **Herstellung der ersten Pfropfauflage** | | | | | | | | |
|---|---|---|---|---|---|---|---|---|
| | **1PA**_{**1**} | **1PA**_{**2**} | **1PA**_{**3**} | **1PA**_{**4**} | **1PA**_{**5**} | **1PA**_{**8**} | **1PA**_{**9**} | **1PA**_{**10**} |
| Emulsion PG | HPG1 | HPG2 | HPG3 | HPG4 | HPG4 | HPG7 | HPG8 | HPG9 |
| [g] | 4700 | 4700 | 4500 | 4500 | 4500 | 4700 | 4700 | 4300 |
| Wasser [g] | - | - | - | - | - | - | - | 2420 |
| Na-Salz [gl | 20 | 20 | 24 | 24 | 24 | 20 | 20 | 35 |
| KPDS [g] | 7,5 | 7,5 | 7,2 | 7,2 | 7,2 | 7,5 | 7,5 | 7,5 |
| NaHCO₃ [g] | 10 | 10 | 6 | 6 | 6 | 10 | 10 | 10 |
| NaPP [g] | 2 | 2 | 3 | 3 | 3 | 2 | 2 | 2 |
| Monomer/e | BA | BA | BA | BA | BA | BA | BA | BA |
| [g] | 2450 | 2450 | 2352 | 2352 | 2352 | 2450 | 2459 | 2445 |
| Vernetzer DCPA [g] | 50 | 50 | 48 | 48 | 48 | 50 | 50 | 50 |
| Zugabezeit [hl | 3,5 | 3,5 | 3,5 | 3,5 | 3,5 | 3,5 | 3,5 | 3,5 |
| Nachrührzeit [h] | 2 | 2 | 2 | 2 | 2 | 2 | 2 | 2 |

| | OZ45942 | | | | | | NAE566 /95 | |
|---|---|---|---|---|---|---|---|---|
| Pfropf-copolymerisat | HPCP1 HPG1 +1 PA₁ | HPCP2 HPG2 + 1PA₂ | HPCP3 HPG3 + 1PA₃ | HPCP4 HPG4 + 1PA₄ | HPCP5 HPG4 + 1PA₅ | HPCP8 HPG7 + 1PA₈ | HPCP9 ' HPG8 + 1PA₉ | HPCP10 HPG9 + 1PA₁₀ |
| d₅₀ [nm] FG* | 450 38,6 | 460 39,8 | 149 42,1 | 151 42,0 | 152 42,2 | 465 38,3 | 443 36,5 | 400 34,5 |
| Z¹ bzw. Z² | 0,23 | 0,23 | 0,29 | 0,29 | 0,29 | 0,70 | 0,29 | 0,29 |
| Phasenübergang | Δ | Δ | Δ | Δ | Δ | ○ | Δ | ○ |

### I.4 Herstellung der zweiten Pfropfauflage 2PA (bzw. der Pfropfcopolymerisate aus Pfropfgrundlage sowie erster und zweiter Pfropfauflage)

Die Emulsion eines Pfropfcopolymerisats aus HPG und 1PA wurde mit Wasser verdünnt und auf 60°C erwärmt. Es wurden die in der Tabelle I.2 angegebenen Mengen des Na-Salzes einer C₁₂- bis C₁₈-Paraffinsulfonsäure (Na-Salz) und Kaliumperoxodisulfat (KPDS) zugegeben. Das Monomere bzw. die Monomeren wurden innerhalb der angegebenen Zeit zudosiert (Zugabezeit). Danach wurde nachgerührt. Die mittleren Teilchendurchmesser (d₅₀) der so erhaltenen Pfropfcopolymerisate aus HPG, 1PA und 2PA wurden bestimmt. Der Feststoffgehalt der so erhaltenen Pfropfcopolymerisate wurde gemessen; s. Tabelle I.2.

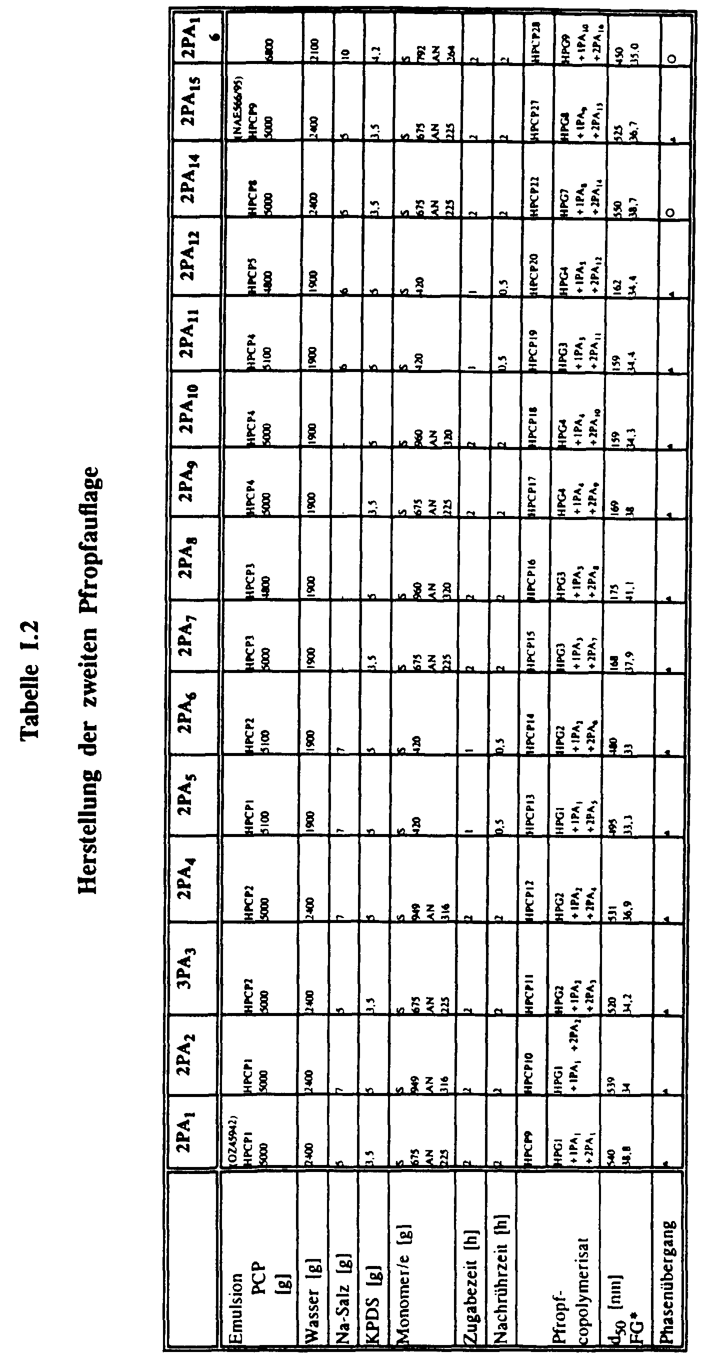

### I.5 Herstellung der dritten Pfropfauflage 3PA (bzw. der Pfropfcopolymerisate aus Pfropfgrundlage und beiden Pfropfauflage)

Zu der Mischung aus dem Pfropfcopolymerisat aus HPG, 1PA und 2PA wurden bei 60°C innerhalb von 2 Stunden jeweils ein Gemisch aus 650 g Styrol, 220 g Acrylnitril unter Rühren zudosiert. Anschließend wurde 2 Stunden nachgerührt. In der Tabelle 1.3 sind die so erhaltenen Pfropfcopolymerisate, deren mittlerer Teilchendurchmesser sowie der Feststoffgehalt der erhaltenen Emulsionen aufgeführt.

**Tabelle I.3**

| **Herstellung der dritten Pfropfauflage** | | | | |
|---|---|---|---|---|
| **Pfropf-copolymerisat** | **HPCP23** | **HPCP24** | **HPCP25** | **HPCP26** |
| Zusammensetzung | HPCP13 + 3PA | HPCP14 + 3PA | HPCP19 + 3PA | HPCP20 + 3PA |
| d₅₀ (nm) | 540 | 535 | 180 | 185 |
| Feststoffgehalt der Emulsion (%) | 36,2 | 30,9 | 41,4 | 41,3 |

### I.6 Isolierung der Pfropfcopolymerisate

Die erhaltenen Pfropfcopolymerisate-Emulsionen wurden mittels Magnesiumsulfat-Lösung gefällt. Das abgetrennte Pfropfcopolymerisat wurde mit destilliertem Wasser gewaschen und getrocknet. Die Zusammensetzung der Pfropfcopolymerisate ist in Tabelle I.4 dargestellt.

**Tabelle I.4**

| **Zusammensetzung der Pfropfcopolymerisate** | | | |
|---|---|---|---|
| **HPCP** | **Zusammensetzung, Gew.-TI (Gew.-%)** | **Größe [nm]** | **Phasen- übergänge** |
| 9 | 1 (95S / 2DCPA/3BDA) | 540 | Δ |
| (OZ45942) | 5 (98BA / 2DCPA) | | |
| | 0,43 (75S + 25AN) | | |
| 10 | 1 (95S / 2DCPA/3BDA) | 539 | Δ |
| | 5 (98BA / 2DCPA) | | |
| | 0,61 (75S + 25AN) | | |
| 22 | 1 (95S / 2DCPA / 3BDA) | 550 | ○ |
| | 5 (98BA / 2DCPA) | | |
| | 0,43 (75S + 25 AN) | | |
| 23 | 1 (95S / 2DCPA / 3BDA) | 540 | Δ |
| | 5 (98BA / 2DCPA) | | |
| | 0,61 (35S + 65SAN (75S + 25AN)) | | |
| 11 | 1 (98S / 2DCPA) | 520 | Δ |
| | 5 (98BA / 2DCPA) | | |
| | 0,43 (75S + 25AN) | | |
| 12 | 1 (98S / 2DCPA) | 531 | Δ |
| | 5 (98BA / 2DCPA) | | |
| | 0,61 (75S + 25AN) | | |
| 15 | 1 (95S / 2DCPA / 3BDA) | 168 | Δ |
| | 4 (98BA / 2DCPA) | | |
| | 0,43 (75S + 25AN) | | |
| 16 | 1 (95S / 2DCPA / 3BDA) | 175 | Δ |
| | 4 (98BA / 2DCPA) | | |
| | 0,61 (75S + 25AN) | | |
| 17 | 1 (98S / 2DCPA) | 169 | Δ |
| | 4 (98BA / 2DCPA) | | |
| | 0,43 (75S + 25AN) | | |
| 18 | 1 (98S / 2DCPA) | 176 | Δ |
| | 4 (98BA / 2DCPA) | | |
| | 0,61 (75S + 25AN) | | |
| 24 | 1 (98S / 2DCPA) | 535 | Δ |
| | 5 (98BA / 2DCPA) | | |
| | 0,61 (35S + 65SAN (75S + 25AN)) | | |
| 25 | 1 (95S / 2DCPA / 3BDA) | 180 | Δ |
| | 4 (98BA / 2DCPA) | | |
| | 0,61 (35S + 65SAN (75S + 25AN)) | | |
| 26 | 1 (98S / 2DCPA) | 185 | Δ |
| | 4 (98BA / 2DCPA) | | |
| | 0,61 (35S + 65SAN (75S + 25AN)) | | |
| 7 | 1 (98BA / 2DCPA) | 110 | Δ |
| | 0,61 (75S + 25AN) | | |
| 27 | 1 (96,5S / 2DCPA) 1,5 DVB | 535 | Δ |
| (NAE566/95) | 5 (98BA / 2DCPA) | | |
| | 0,43 (75S + 25AN) | | |
| 28 | 1 (46,5S / 2DCPA) 1,5 DVB | 450 | |
| | 3 (98BA / 2DCPA) | | |
| | 0,45 (75S + 25 AN) | | |

Die Angaben innerhalb der Klammern geben die Zusammensetzung der Pfropfgrundlagen HPG bzw. der Pfropfauflagen 1PA und 2PA in Gewichtsprozent wieder. Die Zahl vor der Klammer gibt die Gewichtsteile der Pfropfgrundlage bzw. der jeweiligen Pfropfauflage an.

### I.7 Herstellung der thermoplastischen Massen aus einem Pfropfcopolymerisat i bzw. ii und einem Copolymerisat iii

Zur Herstellung der Abmischung wurde als Hartkomponente ein Styrol/ Acrylcopolymerisat mit einem Acrylnitrilgehalt von 35% und einer Viskositätszahl von 80 ml/g verwendet. Das gefällte und getrocknete erfindungsgemäße Pfropfcopolymerisat oder eine Mischung des erfindungsgemäßen Pfropfcopolymerisats mit weiteren Pfropfcopolymerisaten wurde auf einem Extruder bei 260°C so mit der Hartkomponente abgemischt, daß die resultierenden Formmassen einen Pfropfcopolymerisat-Anteil von 50% aufwies. Aus dieser Formmasse wurden durch Spritzguß Formteile hergestellt. Die Ergebnisse der anwendungstechnischen Prüfung sind den Tabellen I.5 und I.6 zu entnehmen.

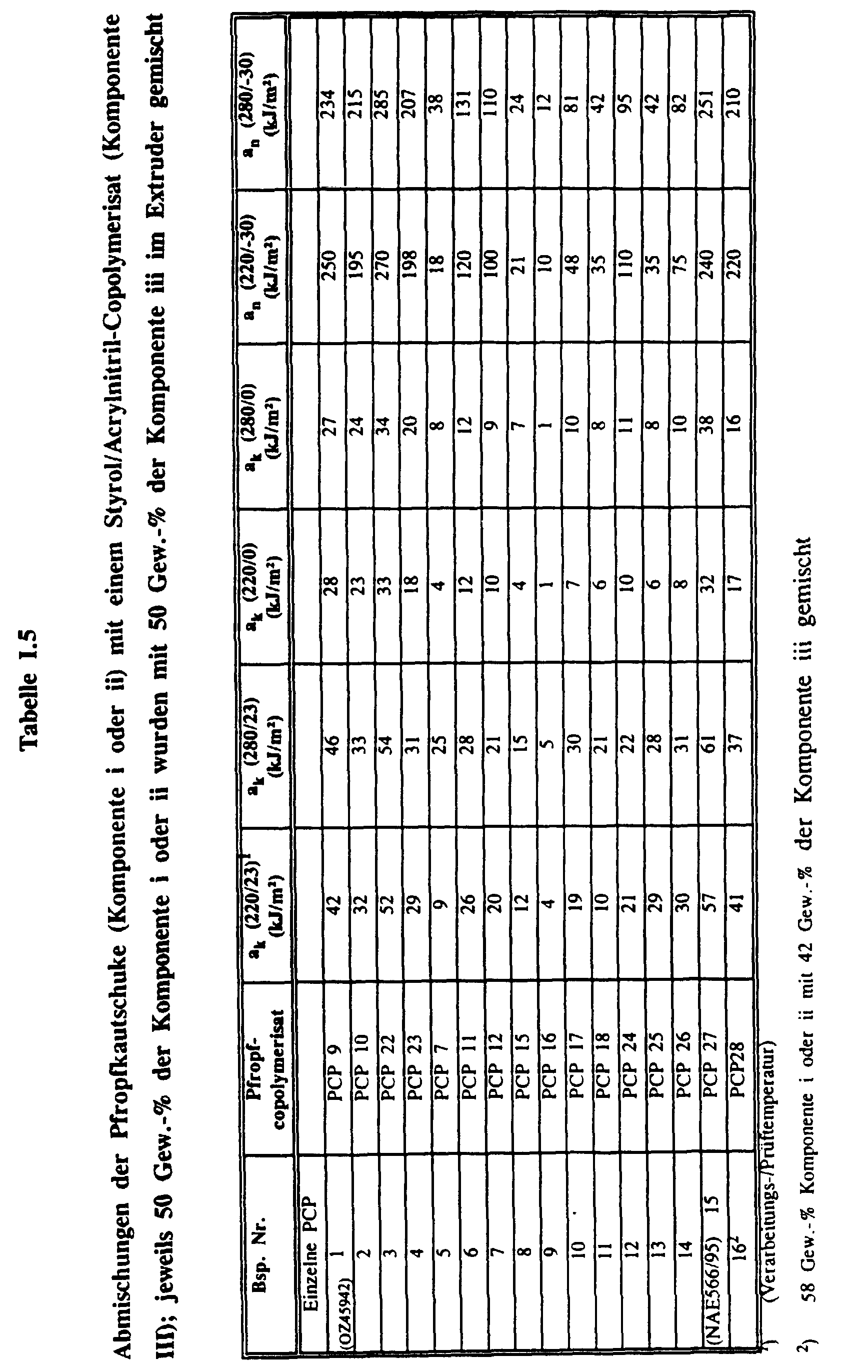

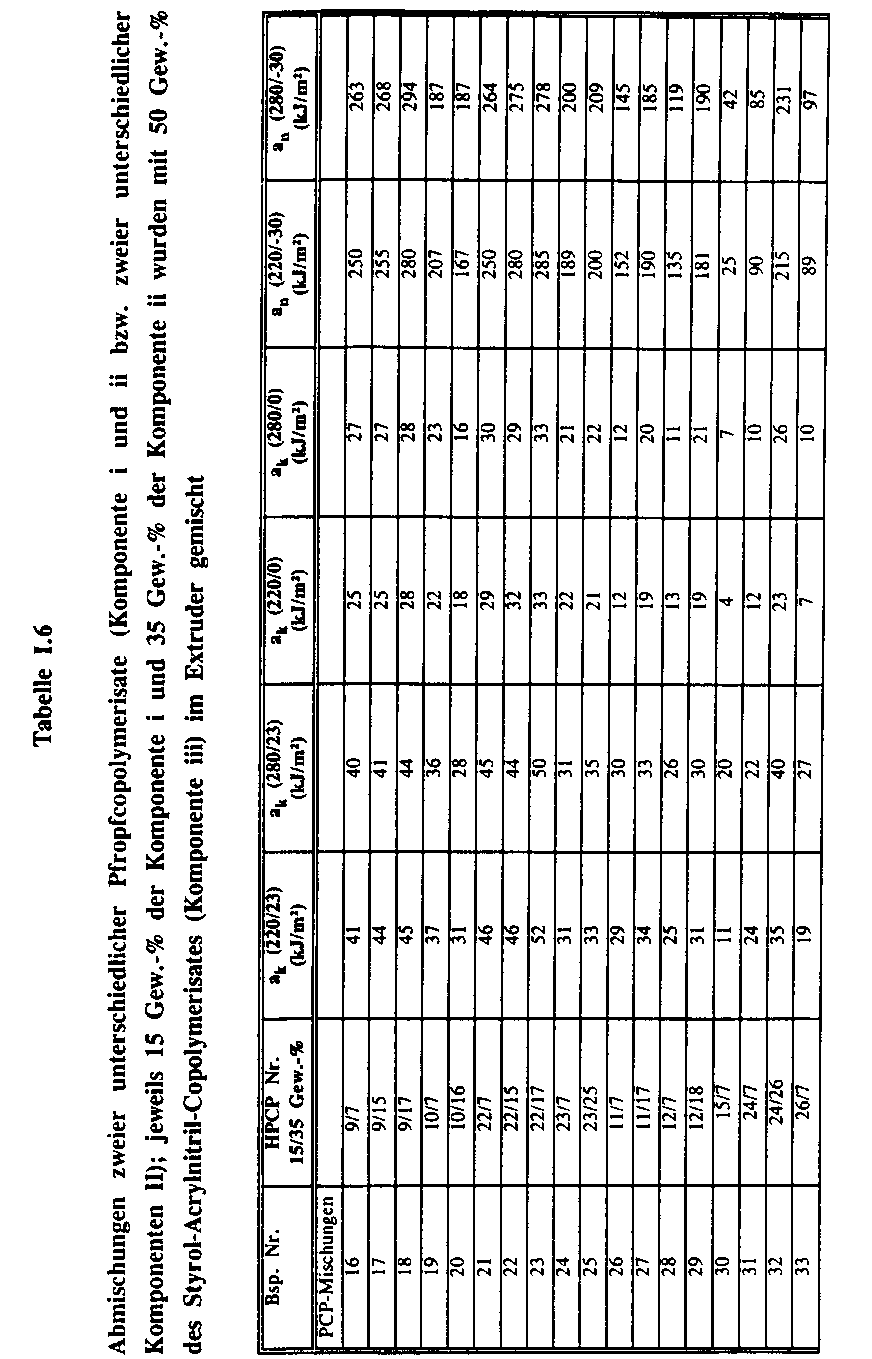

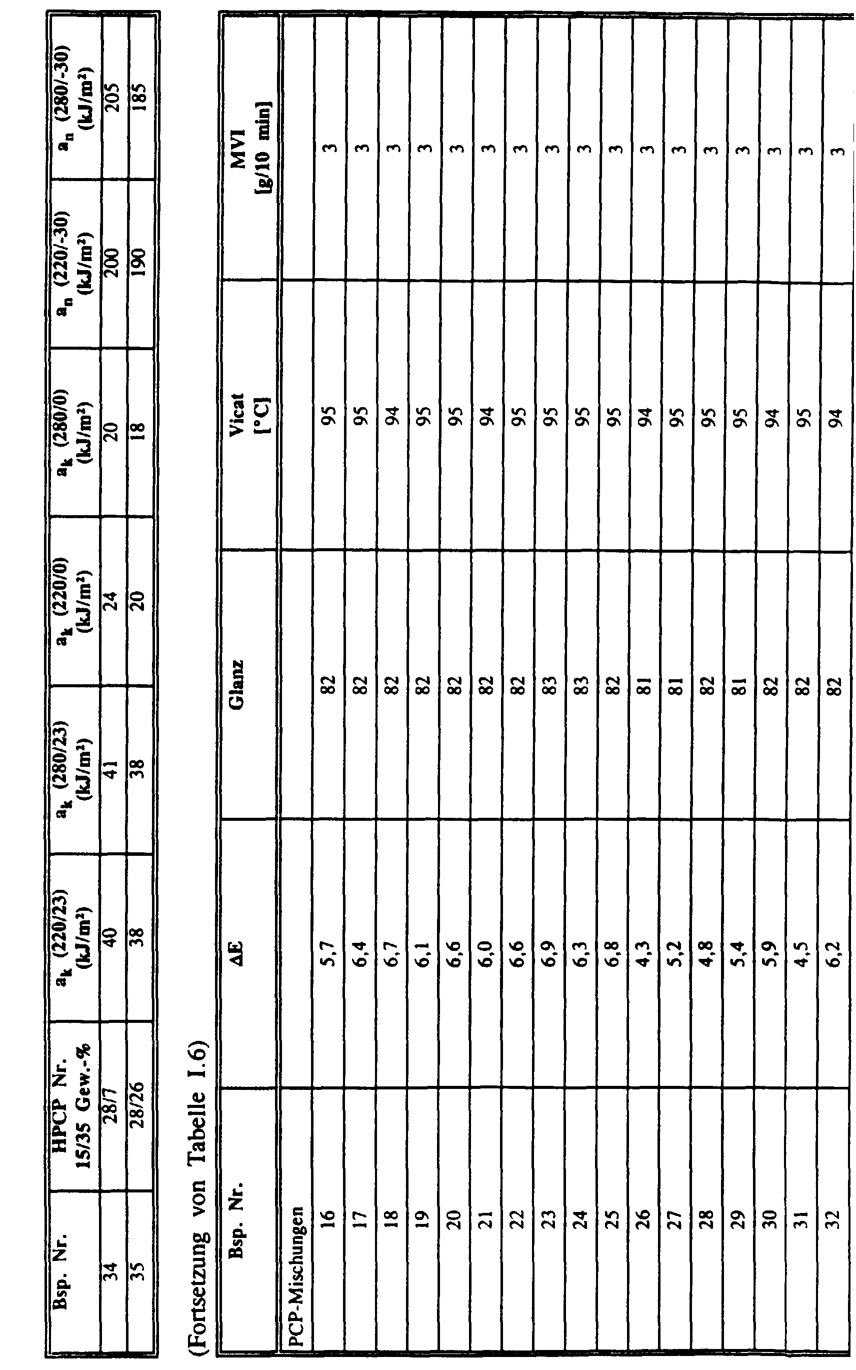

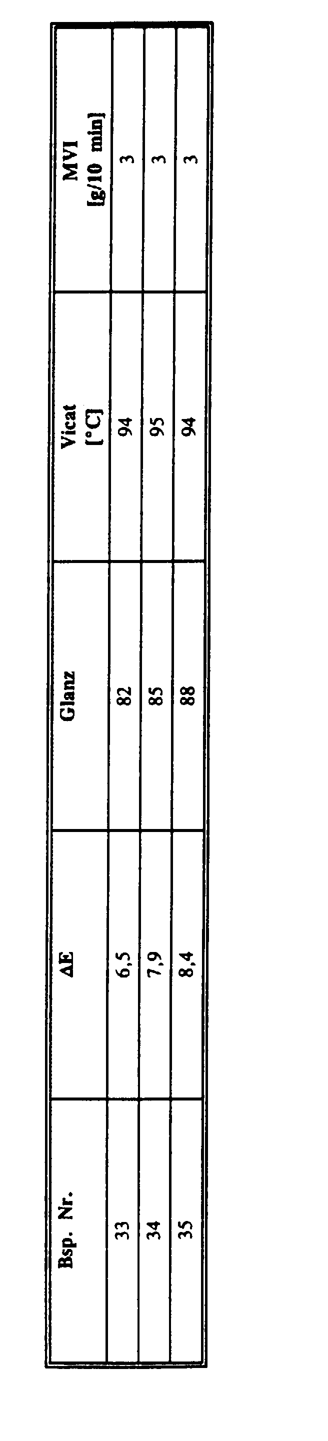

### II. Herstellung von Pfropfcopolymerisaten und Formmassen mit einem weichen Kern

### II.1 Herstellung einer Polybutylacrylat-Pfropfgrundlage (PG)

### (OZ 46678, NAE 567/95)

4500 g Wasser, 30 g des Natriumsalzes einer C₁₂- bis C₁₈-Paraffinsulfonsäure, 9 g Kaliumperoxodisulfat, 12 g Natriumhydrogencarbonat und 1 g Natriumpyrophosphat wurden unter Rühren und unter Stickstoff auf 70 °C erwärmt. Ein Gemisch aus 2940 g n-Butylacrylat und 40 g Dihydrodicyclopentadienylacrylat (DCPA) wurden innerhalb von 3 Stunden zugegeben. Nach Beendigung der Monomerzugabe wurde die Emulsion noch 1 Stunde bei 60 °C gehalten. Der so erhaltene PBA-Kern hatte einen mittleren Teilchendurchmesser (d₅₀) von 80 nm. Der Feststoffgehalt des PBA-Kerns betrug 39,9%.

### II.2 Herstellung der ersten Pfropfauflage

### II.2.1 Erste Pfropfauflage (1PA₁)

### (OZ 46678)

4200 g Wasser, 3 g des Natriumsalzes einer C₁₂- bis C₁₈-Paraffinsulfonsäure, 1,75 g Kaliumperoxodisulfat, 2,5-Natriumdihydrogencarbonat, 1 g Natriumpyrophosphat und 40 g des Pfropfgrundlagenlatex wurden auf 65 °C erwärmt. Anschließend wurde ein Gemisch aus 475 g Styrol, 10 g DCPA und 15 g BDA innerhalb von 3 Stunden zugegeben. Nach Beendigung der Monomerzugabe wurde die Emulsion noch 1 Stunde bei 65 °C gehalten.

Die erste Pfropfauflage (1PA₁) hatte zusammen mit dem Kern PG einen mittleren Teilchendurchmesser (d₅₀) von 250 nm.
Die Emulsion hatte einen Feststoffgehalt von 10,5%.

### II.2.2 Erste Pfropfauflage (1PA₂)

### (OZ 46678)

Die erste Pfropfauflage (1PA₂) wurde entsprechend der 1PA₁ hergestellt, jedoch wurden 490 g Styrol zugegeben und kein BDA sowie kein Vernetzer mitverwendet.

Die erste Pfropfauflage (1PA₂) hatte zusammen mit dem Kern PG einen mittleren Teilchendurchmesser (d₅₀) von 263 nm.
Die Emulsion hatte einen Feststoffgehalt von 10,7%.

### II.2.3 Pfropfgrundlage (PG')

### (OZ 46678)

4200 g Wasser, 6 g des Natriumsalzes einer C₁₂- bis C₁₈-Paraffinsulfonsäure, 2 g Kaliumperoxodisulfat, 3 g Natriumhydrogencarbonat und 1,5 g Natriumpyrophosphat wurden auf 65 °C erwärmt. Anschließend wurde ein Gemisch aus 570 g Styrol, 12 g DCPA und 18 g BDA innerhalb von 3 Stunden zugegeben. Nach Beendigung der Monomerzugabe wurde die Emulsion noch 1 Stunde bei 65 °C gehalten.

Die Pfropfgrundlage (PG') hatte einen mittleren Teilchendurchmesser (d₅₀) von 82 nm.
Die Emulsion hatte einen Feststoffgehalt von 12,7%.

### II.2.4 Pfropfgrundlage (PG")

### (OZ 46678)

Die Pfropfgrundlage (PG") wurde entsprechend der PG' hergestellt, jedoch wurden 588 g Styrol zugegeben und kein BDA mitverwendet.

Die Pfropfgrundlage (PG") hatte einen mittleren Teilchendurchmesser (d₅₀) von 85 nm.
Die Emulsion hatte einen Feststoffgehalt von 12,6%.

### II.2.5 Erste Pfropfauflage (1PA₅)

### (OZ 46678)

4400 g Wasser, 40 g feinteiliges PBA-Latex (PG) (40 gew.-%ig in Wasser) mit d₅₀ = 80 nm als Saatlatex, 9,2 g Kaliumperoxodisulfat, 9 g Natriumhydrogencarbonat und 4,5 g Natriumpyrophosphat wurden unter Rühren auf 65 °C erwärmt. Ein Gemisch aus 2940 g n-Butylacrylat und 60 g DCPA wurde neben einer Lösung von 18 g eines Natriumsalzes einer C₁₂- bis C₁₈-Paraffinsulfonsäure getrennt innerhalb von 3 Stunden zugegeben und 2 Stunden bei 65 °C nachgerührt.

Die erste Pfropfauflage (1PA₅) hatte zusammen mit dem Kern PG einen mittleren Teilchendurchmesser (d₅₀) von 450 nm.
Die Emulsion hatte einen Feststoffgehalt von 39,8%.

### II.2.6 Pfropfgrundlage (PG"')

### (OZ 46678)

4200 g Wasser, 30 g des Natriumsalzes einer C₁₂- bis C₁₈-Paraffinsulfonsäure, 9,2 g Kaliumperoxodisulfat, 9 g Natriumhydrogencarbonat und 4,5 g Natriumpyrophosphat wurden unter Rühren auf 65 °C erwärmt. Ein Gemisch aus 2940 g n-Butylacrylat und 60 g DCPA wurden innerhalb von 3 Stunden zugegeben.

Die Pfropfgrundlage (PG"') hatte einen mittleren Teilchendurchmesser (d₅₀) von 80 nm.
Die Emulsion hatte einen Feststoffgehalt von 42,1%.

### II.2.7 Pfropfgrundlage (PG"")

### (NAE 567/95)

4500 g Wasser, 30 g des Natriumsalzes einer C₁₂- bis C₁₈-Paraffinsulfonsäure, 9 g Kaliumperoxodisulfat, 12 g Natriumhydrogencarbonat und 1 g Natriumpyrophosphat wurden unter Rühren und unter Stickstoff auf 65 °C erwärmt. Ein Gemisch aus 2940 g Styrol und 60 g DCPA wurden innerhalb von 3 Stunden zugegeben. Nach Beendigung der Monomerzugabe wurde die Emulsion noch 1 Stunde bei 65 °C gehalten.

Die Pfropfgrundlage (PG"") hatte einen mittleren Teilchendurchmesser (d₅₀) von 80 nm.
Die Emulsion hatte einen Feststoffgehalt von 39,9%.

### II.2.8 Erste Pfropfauflage (1PA₇)

### (OZ 46678)

Die erste Pfropfauflage (1PA₇) wurde entsprechend der 1PA₁, jedoch wurde das Gemisch aus Styrol, DCPA und BDA innerhalb 1 Stunde zugegeben. Nach Beendigung der Reaktion wurde noch 1 Stunde bei 65 °C gerührt.

Die erste Pfropfauflage (1PA₇) hatte einen mittleren Teilchendurchmesser (d₅₀) von 245 nm.
Die Emulsion hatte einen Feststoffgehalt von 8,9%.

### II.2.9 Erste Pfropfauflage (1PA₈)

### (NAE 567/95)

4200 g Wasser, 3 g des Natriumsalzes einer C₁₂- bis C₁₈-Paraffinsulfonsäure, 1,75 g Kaliumperoxodisulfat, 2,5 g Natriumhydrogencarbonat, 1 g Natriumpyrophosphat und 40 g des Pfropfgrundlagenlatex wurden auf 65 °C erwärmt. Anschließend wurde ein Gemisch aus 4825 g Styrol, 10 g DCPA und 7,5 g DVB innerhalb von 1 Stunde zugegeben. Nach Beendigung der Monomerzugabe wurde die Emulsion noch 1 Stunde bei 65 °C gehalten.

Die erste Pfropfauflage (1PA₈) hatte einen mittleren Teilchendurchmesser (d₅₀) von 210 nm.
Die Emulsion hatte einen Feststoffgehalt von 6,9%.

### II.3 Herstellung der zweiten Pfropfauflage (2PA)

Zu einer Emulsion einer ersten Pfropfauflage (1PA) bzw. der Pfropfgrundlagen PG', PG", PG"' und PG"", die ggf. mit Wasser verdünnt wurde, wurden die in Tabelle 2.1 angegebenen Mengen des Natriumsalzes einer C₁₂- bis C₁₈-Paraffinsulfonsäure (Na-Salz), Kaliumperoxodisulfat (KPDS), Natriumhydrogencarbonat und Natriumpyrophosphat (NaPP) gegeben. Bei 60 °C wurde das Monomere bzw. die Monomeren sowie ggf. Vernetzer innerhalb der angegebenen Zeit zudosiert (Zugabezeit). Danach wurde nachgerührt. Die mittleren Teilchendurchmesser (d₅₀) der so erhaltenen Pfropfcopolymerisate aus PG (PG', PG"), 1PA und 2PA wurden bestimmt. Der Feststoffgehalt der Emulsion der so erhaltenen Pfropfcopolymerisate wurde gemessen; siehe Tabelle II.1.

**Tabelle II.1**

| **Herstellung der zweiten Pfropfauflage (2PA)** | | | | | | | | | | |
|---|---|---|---|---|---|---|---|---|---|---|
| | 2PA₁ | 2PA₂ | 2PA₃ | 2PA₄ | 2PA₅ | 2PA₆ | 2PA₇ | 2PA₈ | 2PA₉ | 2PA₁₀ |
| Emulsion 1P A [g] | 1PA₁ | 1PA₂ | PG' | PG" | PG" | 1PA₅ | PG'" | 1PA₇ | 1PA₈ | 1PA₈ |
| | 4700 | 4700 | 4500 | 4500 | 4500 | 4800 | 4800 | 4700 | 4700 | 4700 |
| Wasser [g] | - | - | - | - | - | 1900 | 1900 | - | - | - |
| Na-Salz [g] | 20 | 20 | 24 | 24 | 24 | 5 | - | 20 | 20 | 20 |
| KPDS [g] | 7,5 | 7,5 | 7,2 | 7,2 | 7,2 | 4,5 | 5 | 7,5 | 7,5 | 7,5 |
| Na₂CO₃ [g] | 10 | 10 | 6 | 6 | 6 | - | - | 10 | 10 | 10 |
| NaPP [g] | 2 | 2 | 3 | 3 | 3 | - | - | 2 | 2 | 2 |
| Mono- | BA | BA | BA | BA | BA | S | S | BA | BA | BA |
| mer(e) [g] | 2450 | 2450 | 2352 | 2352 | 2352 | 395 | 915 An 305 | 2450 | 2459 | 2459 |
| Vernetzer DCPA [g] | 50 | 50 | 48 | 48 | 48 | - | - | 50 | 50 | 50 |
| Zugabezeit [h] | 3,5 | 3,5 | 3,5 | 3,5 | 3,5 | 1 | 2 | 3,5 | 3,5 | 3,5 |
| Nachrührzeit [h] | 2 | 2 | 2 | 2 | 2 | 0,5 | 0,1 | 2 | 2 | 2 |
| | | | | | | | | | | |

| Produkt | WPCP1: | WPCP2: | HPCP3: PG' | HPCP4: PG" | HPCP5: PG" | WPCP6: PG | WPCP7: PG" | WPCP8 : PG | HPCP27: PG"" | WPCP9: PG |
|---|---|---|---|---|---|---|---|---|---|---|
| Pfropfcopolymerisat | PG +1PA₁ +2PA₁ | PG + 1PA₂ +2PA₂ | | | | + 1PA₅ | | +1PA₇ | | + 1PA₈ |
| | | | +2PA₃ | +2PA₄ | +2PA₅ | +2PA₆ | +2PA₇ | +2PA₈ | | +2PA₁₀ |
| d₅₀ [nm] FG* | 455 38,5 | 460 39,9 | 149 42,1 | 151 42,0 | 152 42,2 | 475 32,4 | 110 40,5 | 463 38,0 | 443 36,5 | 440 36,5 |
| Z¹ bzw. Z² | 0,32 | 0,23 | 0,29 | 0,29 | 0,29 | - | - | 0,70 | 0,70 | 0,70 |
| Phasenübergang | Δ | Δ | Δ | Δ | Δ | Δ | Δ | ○ | ○ | ○ |

### II.4 Herstellung der dritten Pfropfauflage (3PA)

Die Emulsion eines Pfropfcopolymerisates PG (ggf. PG' oder PG"), 1PA und 2PA wurden mit Wasser verdünnt und auf 60 °C erwärmt. Es wurden die in Tabelle II.2 angegebenen Mengen des Natriumsalzes einer C₁₂- bis C₁₈-Paraffinsulfonsäure und Kaliumperoxodisulfat zugegeben. Das Monomer oder die Monomeren wurden innerhalb der angegebenen Zeit zudosiert. Danach wurde nachgerührt. Die mittleren Teilchendurchmesser (d₅₀) der so erhaltenen Pfropfcopolymerisate aus PG (ggf. PG', PG"), 1PA, 2PA und 3PA wurden bestimmt. Der Feststoffgehalt der so erhaltenen Pfropfcopolymerisate wurde gemessen; siehe Tabelle II.2.

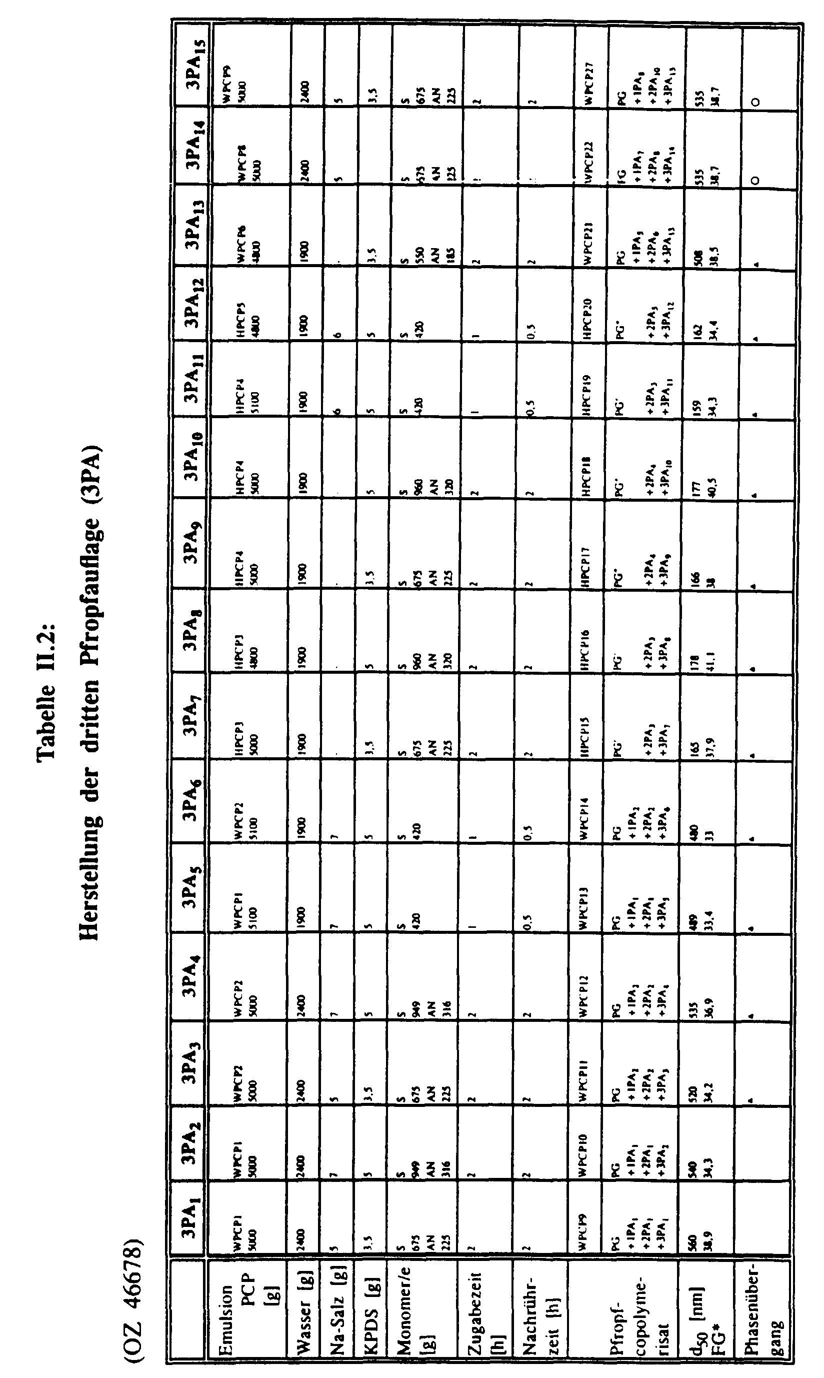

### II.5 Herstellung einer weiteren Pfropfauflage (4PA)

### (OZ 46678)

Zu der Emulsion aus der Pfropfgrundlage (PG, PG', PG") der ersten Pfropfauflage (1PA) und der zweiten Pfropfauflage (2PA) und der dritten Pfropfauflage (3PA) wurde bei 60 °C innerhalb von 2 Stunden jeweils in ein Gemisch aus 650 g Styrol und 220 g Acrylnitril unter Rühren zudosiert. Anschließend wurde 2 Stunden nachgerührt.

In der nachfolgenden Tabelle II.3 sind die auf dieses Weise erhaltenen Pfropfcopolymerisate aus den Pfropfgrundlagen (PG, PG') [WPCP19] und (PG") [HPCP20] und den Pfropfauflagen 1PA, 2PA, 3PA und 4PA aufgeführt. Dabei sind sowohl für das erfindungsgemäße Pfropfcopolymerisat WPCP23 als auch für die weiteren Pfropfcopolymerisate WPCP24, HPCP25 und HPCP26 jeweils deren mittlere Teilchendurchmesser sowie der Feststoffgehalt der erhaltenen Emulsion verzeichnet.

**Tabelle II.3**

| **Pfropfcopolymerisat** | **WPCP 23** | **WPCP 24** | **HPCP 25** | **HPCP 26** |
|---|---|---|---|---|
| Zusammensetzung | WPCP 13 + 4 PA | WPCP 14 + 4 PA | HPCP 19 + 4 PA | HPCP 20 + 4 PA |
| d₅₀ [nm] | 545 | 532 | 183 | 180 |
| Feststoffgehalt der Emulsion [%] | 36,5 | 30,9 | 41,4 | 41,3 |
| Phasenübergang | Δ | Δ | Δ | Δ |

### II.6 Isolierung der Pfropfcopolymerisate

Die erhaltenen Pfropfcopolymerisatemulsionen wurden wie unter I.6 beschrieben isoliert. Die Zusammensetzung einiger Pfropfcopolymerisate ist in Tabelle II.4 dargestellt.

**Tabelle II.4**

| **Zusammensetzung der Pfropfcopolymerisate** | | | |
|---|---|---|---|
| **PCP** | **Zusammensetzung Gew.- T1** **(Gew.-%)*** | **Größe [nm]** | **Phasenübergang** |
| (OZ46678) | | | |
| W9 | 1 (95S / 2DCPA / 3BDA) | 560 | Δ |
| | 5 (98BA / 2DCPA) | | |
| | 0,43 (75S + 25AN) | | |
| W10 | 1 (95S / 2DCPA / 3BDA) | 540 | Δ |
| | 5 (98BA / 2DCPA) | | |
| | 0,61 (75S + 25AN) | | |
| W22 | 1 (95S / 2DCPA / 3BDA) | 535 | ○ |
| | 5 (98BA / 2DCPA) | | |
| | 0,43 (75S + 25 AN) | | |
| W23 | 1 (95S / 2DCPA / 3BDA) | 545 | Δ |
| | 5 (98BA / 2DCPA) | | |
| | 0,61 (35S + 65SAN | | |
| | (75S + 25AN)) | | |
| W11 | 1 (98S / 2DCPA) | 520 | Δ |
| | 5 (98BA / 2DCPA) | | |
| | 0,43 (75S + 25AN) | | |
| W12 | 1 (98S / 2DCPA) | 535 | Δ |
| | 5 (98BA / 2DCPA) | | |
| | 0,61 (75S + 25AN) | | |
| H15 | 1 (95S / 2DCPA / 3BDA) | 165 | Δ |
| | 4 (98BA / 2DCPA) | | |
| | 0,43 (75S + 25AN) | | |
| H16 | 1 (95S / 2DCPA / 3BDA) | 178 | Δ |
| | 4 (98BA / 2DCPA) | | |
| | 0,61 (75S + 25AN) | | |
| H17 | 1 (98S / 2DCPA) | 166 | Δ |
| | 4 (98BA / 2DCPA) | | |
| | 0,43 (75S + 25AN) | | |
| H18 | 1 (98S / 2DCPA) | 177 | Δ |
| | 4 (98BA / 2DCPA) | | |
| | 0,61 (75S + 25AN) | | |
| W24 | 1 (98S / 2DCPA) | 532 | Δ |
| | 5 (98BA / 2DCPA) | | |
| | 0,61 (35S + 65SAN | | |
| | (75S + 25AN)) | | |
| H25 | 1 (95S / 2DCPA / 3BDA) | 183 | |
| | 4 (98BA / 2DCPA) | | |
| | 0,61 (35S + 65SAN | | |
| | (75S + 25AN)) | | |
| H26 | 1 (98S / 2DCPA) | 180 | |
| | 4 (98BA / 2DCPA) | | |
| | 0,61 (35S + 65SAN | | |
| | (75S + 25AN)) | | |
| W21 | 1 (98S / 2DCPA) | 508 | |
| | 0,61 (35S + 65SAN) | | |
| | (75S + 25AN) | | |
| W7 | 1 (98BA / 2DCPA) | 110 | |
| | 0,61 (75S + 25AN) | | |
| W27 | 1 (96,5S / 2DCPA / 1,5 | 535 | ○ |
| | DVB) | | |
| | 5 (98BA / 2DCPA) | | |
| | 0,43 (75S + 25AN) | | |

Die Angaben innerhalb der Klammern geben die Zusammensetzung der Pfropfauflagen 1PA, 2PA und 3PA in Gewichtsprozent wieder. Die Zahl vor der Klammer gibt die Gewichtsteile der Pfropfgrundlage bzw. der jeweiligen Pfropfauflage an. Zur Herstellung der Propfauflage 1PA₁, 1PA₂, 1PA₅ und 1PA₇ wurde die Pfropfgrundlage PG verwendet. Die Pfropfgrundlagen PG', PG", PG"' und PG"" wurden ohne Verwendung von PG hergestellt. Die Mengenverhältnisse zwischen den Pfropfauflagen 1PA_{1,2,...} und der Pfropfgrundlage PG sind den Beispielen zu entnehmen.

### II.7 Herstellung der thermoplastischen Massen aus einem Pfropfcopolymerisat i bzw. ii und einem Copolymerisat iii

Die Herstellung der Abmischungen entspricht der unter 1.7 beschriebenen. Die Ergebnisse der anwendungstechnischen Prüfungen sind den Tabellen II.5 und II.6 zu entnehmen.

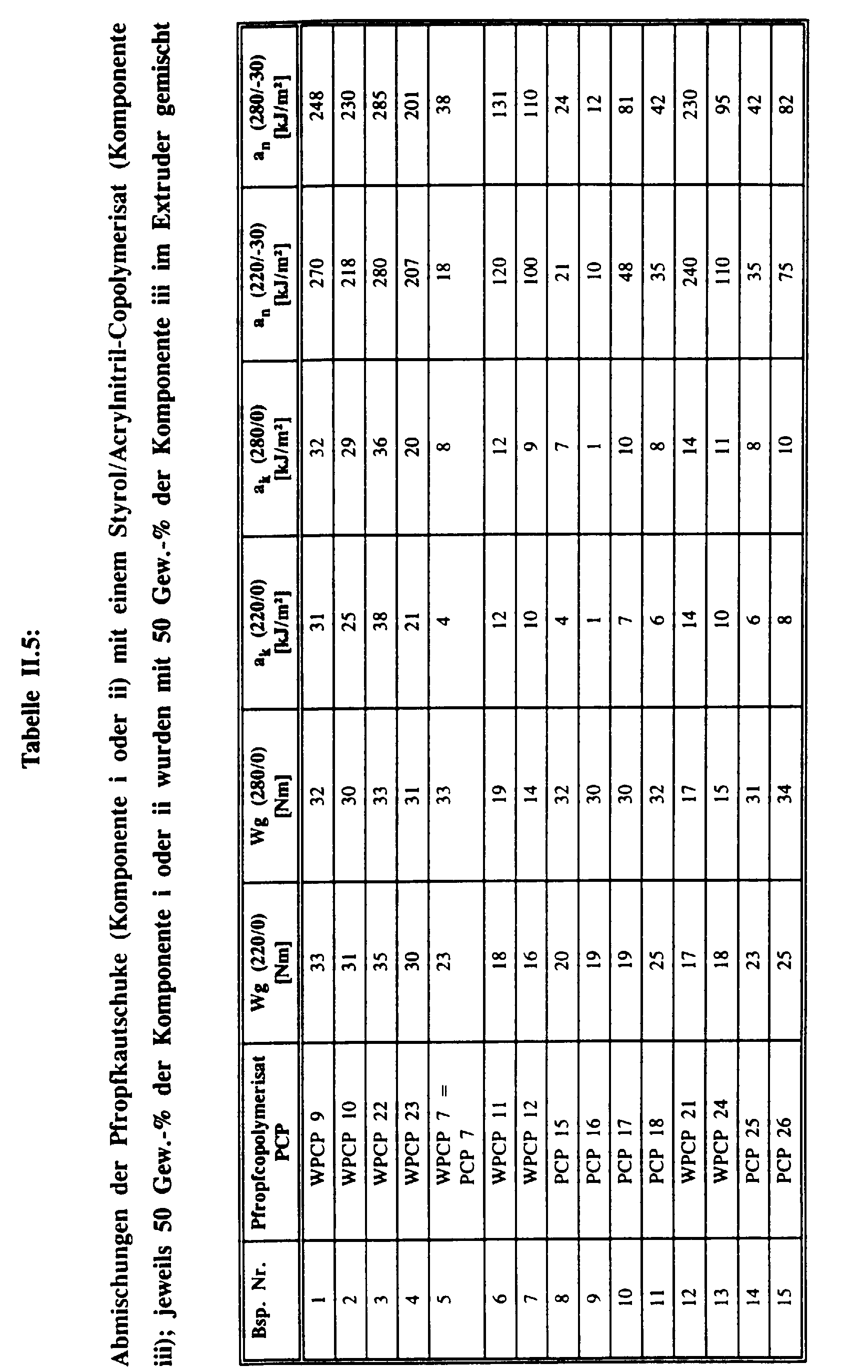

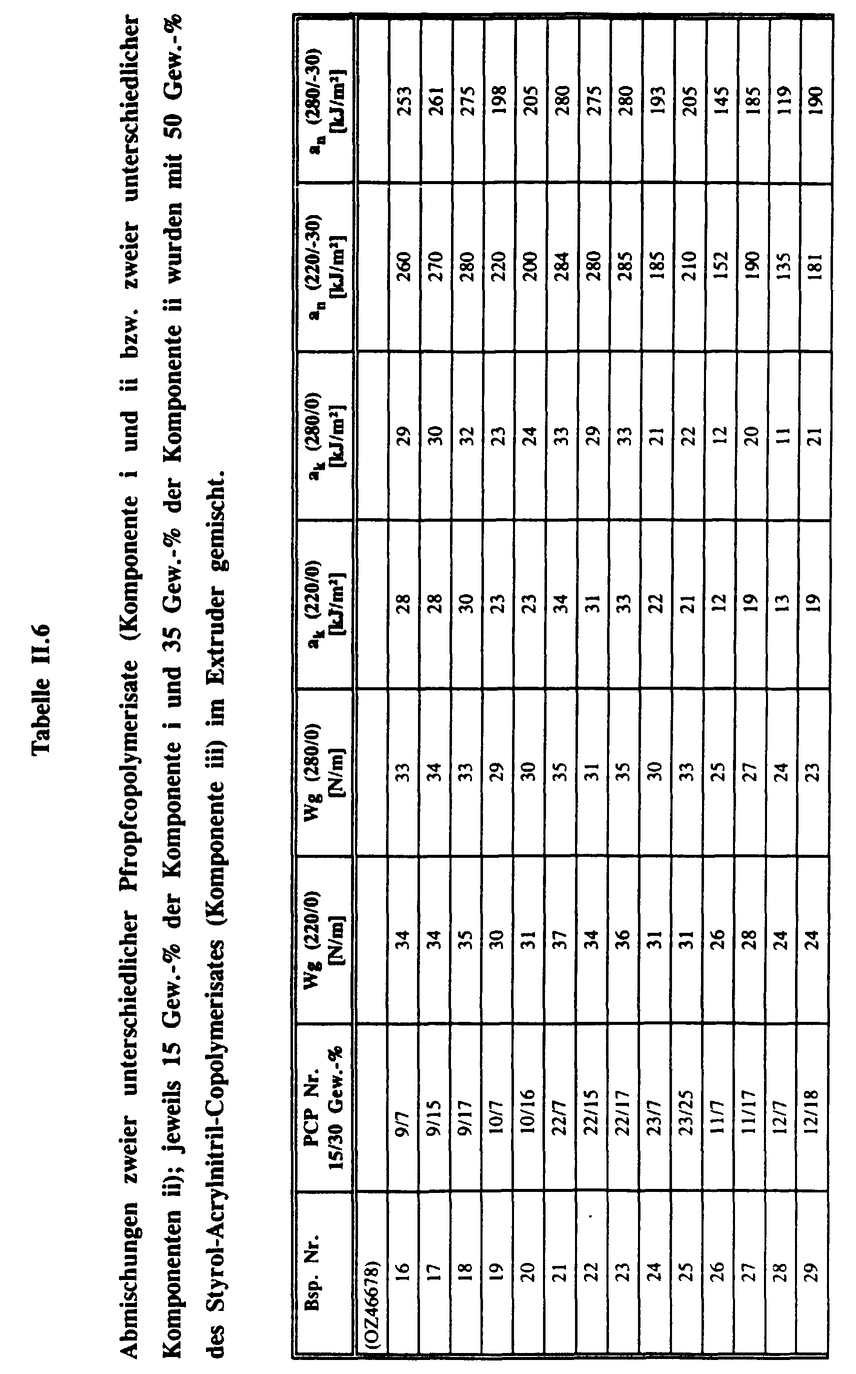

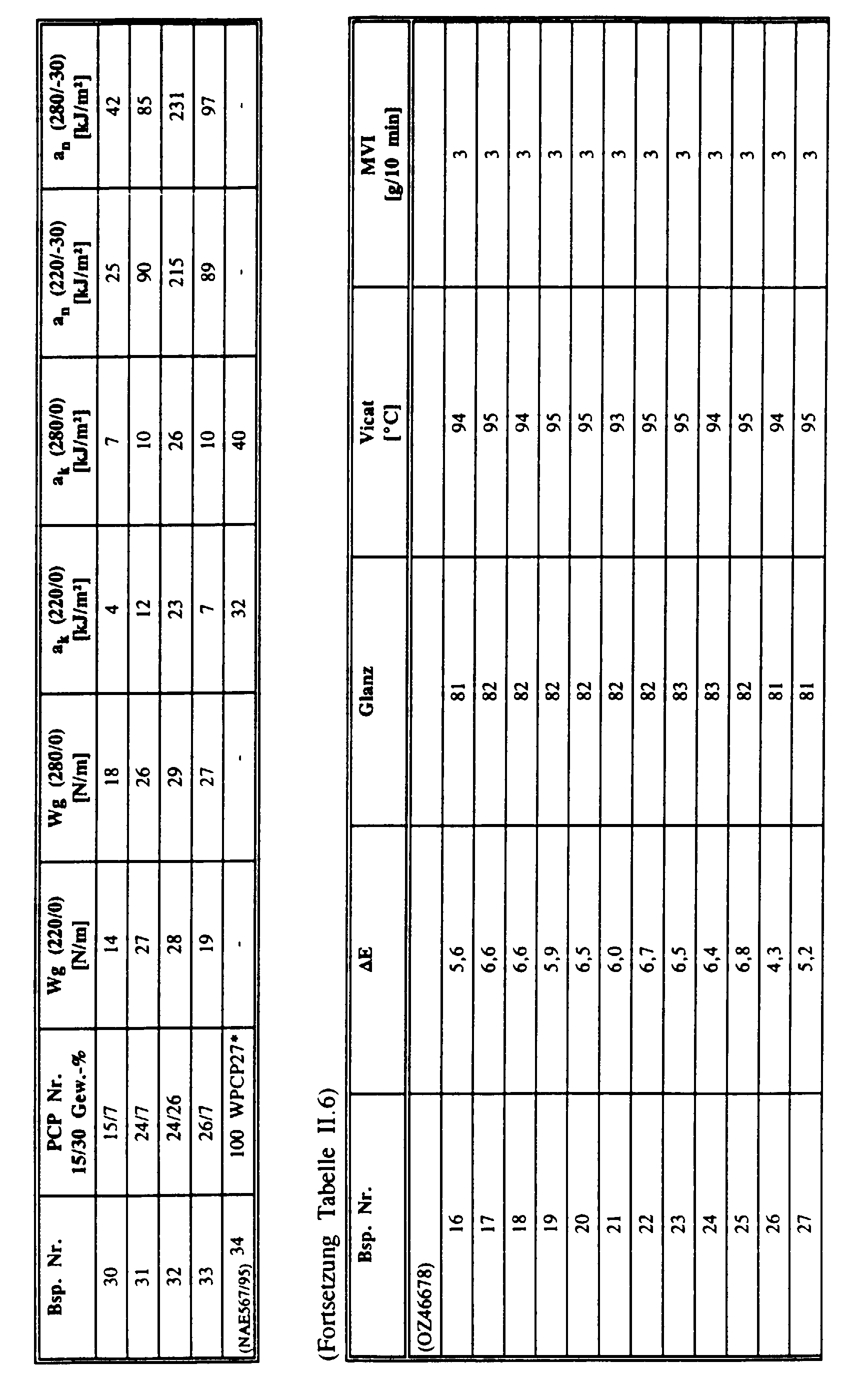

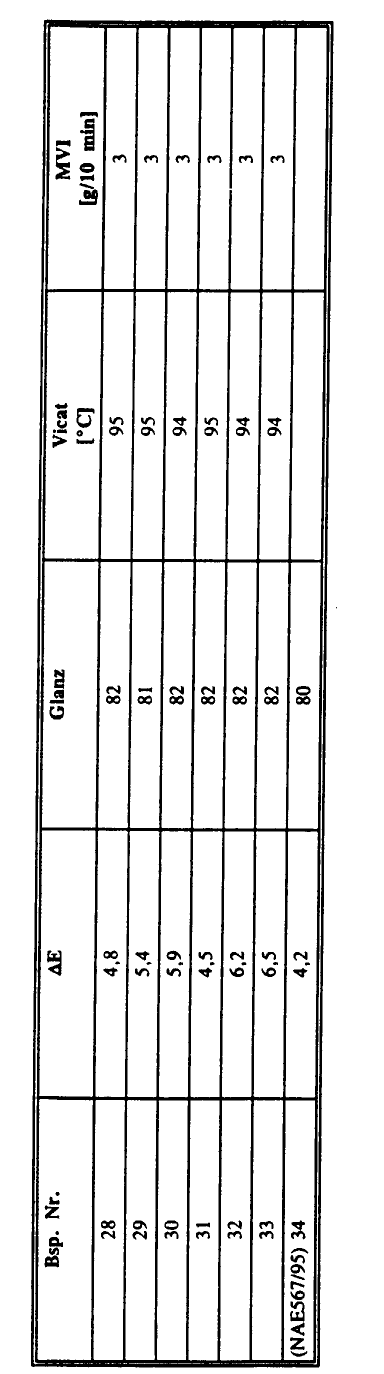

### III. Pfropfcopolymermischungen

### III.1 Pfropfcopolymermischung MI (NAE 525/95

### III.1.1 Herstellung des Pfropfcopolymerisats MI.1

### III.1.1.1 Herstellung der Pfropfgrundlage MI.1.1

Das Monomergemisch aus 3,2 g DCPA und 156,8 g Acrylsäure-n-butylester wurden in 1500 g Wasser unter Zusatz von 10 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65 °C erwärmt. 10 Minuten nach dem Anspringen der Polymerisationsreaktion wurden innerhalb von 3 Stunden eine Mischung aus weiteren 16,8 g DCPA und 823,2 g Acrylsäure-n-butylester zudosiert. nach Beendigung der Monomerzugabe wurde die Emulsion noch 1 Stunde bei 65 °C gehalten.

### III.1.1.2 Herstellung der Pfropfauflagen MI.1.2 und MI.1.3

2100 g der nach obiger Vorschrift hergestellten Emulsion, die Pfropfgrundlage MI.1.1 enthält, wurden mit 1150 g Wasser und 2,7 g Kaliumperoxodisulfat gemischt und unter Rühren auf 65 °C erwärmt. Nach Erreichen der Reaktionstemperatur wurden im Lauf von 1 Stunde 165 g Styrol zudosiert (Pfropfauflage MI.1.2). Nach Beendigung der Zugabe wurden eine Mischung aus 372 g Styrol und 124 g Acrylnitril zudosiert. Nach Beendigung der Zugabe wurde die Emulsion noch 2 Stunden bei 65 °C gehalten (Pfropfauflage MI.1.3). Die mittlere Teilchengröße (d₅₀) der Pfropfcopolymerisate betrug 102 nm. Das Pfropfcopolymerisat wurde mittels Calciumchloridlösung bei 95 °C aus der Emulsion gefällt, mit Wasser gewaschen und im warmen Luftstrom getrocknet.

### III.1.2 Herstellung des Pfropfcopolymerisats MI.2

### III.1.2.1 Herstellung der Pfropfgrundlage MI.2.1

Die Herstellung der Pfropfgrundlage MI.2.1 entspricht der zuvor beschriebenen Herstellung der Pfropfgrundlage MI.1.1.

### III.1.2.2 Herstellung der Pfropfgrundlage MI.2.2

4200 g Wasser, 3 g des Natriumsalzes einer C₁₂- bis C₁₈-Paraffinsulfonsäure, 1,75 g Kaliumperoxodisulfat, 2,5 g Natriumhydrogencarbonat, 1 g Natriumpyrophosphat und 40 g der Pfropfgrundlage MI.2.1 wurden zunächst auf 65 °C erwärmt. Anschließend wurde dazu ein Gemisch aus 475 g Styrol, 10 g DCPA und 15 g BDA innerhalb von 1 Stunde zugegeben. Nach Beendigung der Monomerzugabe wurde die Emulsion noch 1 Stunde bei 65 °C gehalten.

Zusammen mit der Pfropfgrundlage MI.2.1 ergab sich für die erste Pfropfauflage MI.2.2 ein mittlerer Teilchendurchmesser (d₅₀) von 238 nm.

Die Emulsion hatte einen Feststoffgehalt von 6,8%.

### III.1.2.3 Herstellung der zweiten Propfauflage MI.2.3

Zu 4700 g der in Abschnitt III.1.2.2 erhaltenen Emulsion wurden 20 g des Natriumsalzes einer C₁₂- bis C₁₈-Paraffinsulfonsäure, 7,5 g Kaliumperoxodisulfat, 10 g Natriumhydrogencarbonat und 2 g Natriumpyrophosphat gegeben. Bei 65 °C wurden 2459 g Butylacrylat und 50 g DCPA innerhalb von 3,5 Stunden zugegeben und danach weitere 2 Stunden bei 65 °C nachgerührt. Zusammen mit der Pfropfgrundlage MI.2.1 und der ersten Pfropfauflage MI.2.2 ergab sich mit der zweiten Pfropfauflage MI.2.3 ein mittlerer Teilchendurchmesser (d₅₀) von 447 nm. Die erhaltene Emulsion hatte einen Feststoffgehalt von 38,5%.

### III.1.2.4 Herstellung der dritten Pfropfauflage MI.2.4

5000 g der in Abschnitt 3 erhaltenen Emulsion wurden mit 2400 g Wasser verdünnt und 5 g des Natriumsalzes einer C₁₂- bis C₁₈-Paraffinsulfonsäure und 3,5 g Kaliumperoxodisulfat versetzt. Bei 65 °C wurde ein Gemisch aus 675 g Styrol und 225 g Acrylnitril innerhalb von 2 Stunden zugetropft und weitere 2 Stunden lang bei 65 °C nachgerührt.

Zusammen mit der Pfropfgrundlage MI.2.1 und den drei Pfropfauflagen MI.2.2 bis MI.2.4 ergab sich ein mittlerer Teilchendurchmesser (d₅₀) von 535 nm. Die erhaltene Emulsion hatte einen Feststoffgehalt von 38,9%.

### III.2 Herstellung der Pfropfcopolymerisatmischung MII (NAE 564/95)

### III.2.1 Herstellung des Pfropfcopolymerisats MII.1

### III.2.1. Herstellung der Pfropfgrundlage MII.1.1

Das Monomergemisch aus 2,3 g DCPA und 156,8 g Acrylsäure-n-butylester wurde in 1500 g Wasser unter Zusatz von 10 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65 °C erwärmt. 10 Minuten nach Anspringen der Polymerisationsreaktion wurde innerhalb von 3 Stunden eine Mischung aus weiteren 16,8 g DCPA und 823,2 g Acrylsäure-n-butylester zudosiert. Nach Beendigung der Monomerzugabe wurde die Emulsion noch 1 Stunde bei 65 °C gehalten. 12,5 g des so erhaltenen Latex wurden mit 1500 g Wasser unter Zusatz von 3 g Kaliumperoxodisulfat, 3 g Natriumhydrogencarbonat und 1,5 g Natriumpyrophosphat unter Rühren auf 65 °C erwärmt. Innerhalb von 3 Stunden wurde eine Mischung aus 20 g DCPA und 980 g Acrylsäure-n-butylester sowie 3 g des Kaliumsalzes einer C₁₂- bis C₁₈-Paraffinsulfonsäure zudosiert. Nach Beendigung der Monomerzugabe wurde die Emulsion noch 1 Stunde bei 65 °C gehalten.

### III.2.1.2 Herstellung der Pfropfauflagen MII.1.2 und MII.1.3

2100 g einer nach obiger Vorschrift hergestellten Emulsion der Pfropfauflage MII.1.1 wurden mit 1150 g Wasser und 2,7 g Kaliumperoxodisulfat gemischt und unter Rühren auf 65 °C erwärmt. Nach Erreichen der Reaktionstemperatur wurde im Lauf von 1 Stunde ein Monomerengemisch aus 165 g Styrol sowie 0,1 g des Kaliumsalzes einer C₁₂- bis C₁₈-Paraffinsulfonsäure zudosiert. Nach Beendigung der Zugabe wurde eine Mischung aus 372 g Styrol und 124 g Acrylnitril zudosiert. Nach Beendigung der Zugabe wurde die Emulsion noch 2 Stunden bei 65 °C gehalten.

Die mittlere Teilchengröße der Pfropfcopolymerisate betrug 510 nm.

### III.2.2 Herstellung des Pfropfcopolymerisats MII.2

Die Herstellung des Pfropfcopolymerisats MII.2 entspricht der des Pfropfcopolymerisats MI.2.

### III.3 Pfropfcopolymermischung MIII

### (NAE 577/95)

### III. 31 1 Herstellung des Pfropfcopolymerisats MIII.1

### III.3.1.1 Herstellung der Pfropfgrundlage MIII.1.1

Das Monomergemisch aus 3,2 g DCPA und 156,8 g Acrylsäure-n-butylester wurde in 1500 g Wasser unter Zusatz von 10 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65 °C erwärmt. 10 Minuten nach Anspringen der Polymerisationsreaktion wurde innerhalb von 3 Stunden eine Mischung aus weiteren 16,8 g DCPA und 823,2 g Acrylsäure-n-butylester zudosiert. Nach Beendigung der Monomerzugabe wurde die Emulsion noch 1 Stunde bei 65 °C gehalten.

### III.3.1.2 Herstellung der Pfropfgrundlage MIII.1.2

2100 g der nach obiger Vorschrift hergestellten Emulsion, die die Pfropfgrundlage MIII.1.1 enthält, wurde mit 1150 g Wasser und 2,7 g Kaliumperoxodisulfat gemischt und unter Rühren auf 65 °C erwärmt. Nach Erreichen der Reaktionstemperatur wurde im Lauf von 2 Stunden eine Mischung aus 495 g Styrol und 165 g Acrylnitril zudosiert. Nach Beendigung der Zugabe wurde die Emulsion noch zwei Stunden bei 65 °C gehalten.

Die mittlere Teilchengröße (d₅₀) der Pfropfcopolymerisate MIII.1 betrug 97 nm.

### III.3.2 Herstellung des Pfropfcopolymerisats MIII.2

Die Herstellung des Pfropfcopolymerisats MIII.2 entspricht der Herstellung des Pfropfcopolymerisats MI.2.

### III.4 Pfropfcopolymermischung MIV

### (NAE 565/95)

### III.4.1 Herstellung des Pfopfcopolymerisats MIV.1

### III.4.1.1 1 Herstellung der Pfropfgrundlage MIV.1.1

4500 g Wasser, 30 g des Natriumsalzes einer C₁₂- bis C₁₈-Paraffinsulfonsäure, 9 g Kaliumperoxodisulfat, 12 g Natriumhydrogencarbonat und 1 g Natriumpyrophosphat wurden unter Rühren und unter Stickstoff auf 70 °C erwärmt. Ein Gemisch aus 2940 g Styrol und 40 g DCPA wurde innerhalb von 3 Stunden zugegeben. Nach Beendigung der Monomerzugabe wurde die Emulsion noch 1 Stunde bei 60 °C gehalten.

Der so erhaltene Saatlatex hatte eine mittlere Teilchengröße (d₅₀) von 80 nm. Der Feststoffgehalt der Saatlatexemulsion betrug 39,9%.

4200 g Wasser, 3 g des Natriumsalzes einer C₁₂- bis C₁₈-Paraffinsulfonsäure, 1,75 g Kaliumperoxodisulfat, 2,5 g Natriumhydrogencarbonat, 1 g Natriumpyrophosphat und 40 g des zuvor hergestellten Saatlatex wurden auf 65 °C erwärmt. Anschließend wurde ein Gemisch aus 475 g Styrol, 10 g DCPA und 15 g BDA innerhalb von 1 Stunde zugegeben. Nach Beendigung der Monomerzugabe wurde die Emulsion noch 1 Stunde bei 65 °C gehalten. Die Pfropfgrundlage MIV.1.1 hatte einen mittleren Teilchendurchmesser (d₅₀) von 250 nm.
Die Emulsion hatte einen Feststoffgehalt von 8,8%.

### III.4.1.2 Herstellung der ersten Pfropfauflage MIV.1.2

Zu 4700 g der Emulsion der Pfropfgrundlage wurden 20 g des Natriumsalzes einer C₁₂- bis C₁₈-Paraffinsulfonsäure, 7,5 g Kaliumperoxodisulfat, 10 g Natriumhydrogencarbonat und 2 g Natriumpyrophosphat gegeben. Bei 65 °C wurden 2459 g Butylacrylat und 50 g DCPA innerhalb von 3,5 Stunden zugegeben und danach weitere 2 Stunden bei 65 °C nachgerührt.

Zusammen besaßen die Pfropfgrundlage MIV.1.1 und die erste Pfropfauflage MIV.1.2 einen mittleren Teilchendurchmesser (d₅₀) von 450 nm. Die Emulsion hatte einen Feststoffgehalt von 38,6%.

### III.4.1.3 Herstellung der zweiten Pfropfauflage MIV.1.3

5000 g der so erhaltenen Emulsion wurden mit 2400 g Wasser verdünnt und 5 g des Natriumsalzes einer C₁₂- bis C₁₈-Paraffinsulfonsäure und 3,5 g Kaliumperoxodisulfat zugegeben. Bei 65 °C wurde ein Gemisch aus 675 g Styrol und 225 g Acrylnitril innerhalb von 2 Stunden zugetropft und weitere 2 Stunden bei 65 °C nachgerührt.

Zusammen hatten die Pfropfgrundlage MIV.1.1 und die beiden Pfropfauflagen MIV.1.2 und MIV.1.3 einen mittleren Teilchendurchmesser (d₅₀) von 450 nm.

Die Emulsion hatte einen Feststoffgehalt von 38,8%.

### III.4.2 Herstellung des Pfropfcopolymerisats MIV.2

### III.4.2.1 Herstellung der Pfropfgrundlage MIV.2.1

Das Monomergemisch aus 3,2 g DCPA und 156 g Acrylsäure-n-butylester wurden in 1500 g Wasser unter Zusatz von 10 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65 °C erwärt. 10 Minuten nach Anspringen der Polymerisationsreaktion wurden innerhalb von 3 Stunden eine Mischung aus weiteren 16,8 g DCPA und 823,2 Acrylsäure-n-butylester zudosiert. Nach Beendigung der Monomerzugabe wurde die Emulsion noch 1 Stunde bei 65 °C gehalten.

12,5 g des so erhaltenen Latex wurden mit 1500 g Wasser unter Zusatz von 3 g Kaliumperoxodisulfat, 3 g Natriumhydrogencarbonat und 1,5 g Natriumpyrophosphat unter Rühren auf 65 °C erwärmt. Innerhalb von 3 Stunden wurde eine Mischung aus 20 g DCPA und 980 g Acrylsäure-n-butylester sowie 3 g des Kalimsalzes einer C₁₂- bis C₁₈-Paraffinsulfonsäure zudosiert. Nach Beendigung der Monomerzugabe wurde die Emulsion noch 1 Stunde bei 65 °C gehalten.

### III.4.2.2 Herstellung der ersten Pfropfauflage MIV.2.2

2100 g der nach obiger Vorschrift hergestellten Emulsion wurden mit 1150 g Wasser, 2,7 g Kaliumperoxodisulfat gemischt und unter Rühhren auf 65 °C erwärmt. Nach Erreichen der Reaktionstemperatur wurde im Lauf von 1 Stunde ein Monomerengemisch aus 165 g Styrol sowie 0,1 g des Kaliumsalzes einer C₁₂- bis C₁₈-Paraffinsulfonsäure zudosiert. Nach Beendigung der Zugabe wurde eine Mischung aus 372 g Styrol und 124 g Acrylnitril zudosiert. Nach Beendigung der Zugabe wurde die Emulsion nach 2 Stunden bei 65 °C gehalten.

Die mittlere Teilchengröße (d₅₀) der Pfropfcopolymerisate betrug 510 nm.

### III.5 Pfropfcopolymermischung MV

### III. .1 1 Herstellung des Pfropfcopolymerisats MV.1

Das Pfropfcopolymerisat MV.1 wird wie das Pfropfcopolymerisat MI.1 hergestellt.

### III.5.2 Herstellung eines Copolymerisats MV.2

### III.5.2.1 Herstellung der Pfropfgrundlage MV.2.1

4500 g Wasser, 30 g des Natriumsalzes einer C₁₂- bis C1₈-Paraffinsulfonsäure, 9 g Kaliumperoxodisulfat, 12 g Natriumhydrogencarbonat und 1 g Natriumpyrophosphat wurden unter Rühren und unter Stickstoff auf 70 °C erwärmt. Ein Gemisch aus 2940 g Styrol und 40 g DCPA wurde innerhalb von 3 Stunden zugegeben. Nach Beendigung der Monomerzugabe wurde die Emulsion noch 1 Stunde bei 60 °C gehalten.

Der mittlere Teilchendurchmesser (d₅₀) betrug 80 nm.
Die Emulsion hatte einen Feststoffgehalt von 39,9%.

4200 g Wasser, 3 g des Natriumsalzes einer C₁₂- bis C₁₈-Paraffinsulfonsäure, 1,75 g Kaliumperoxodisulfat, 2,5 g Natriumhydrogencarbonat, 1 g Natriumpyrophosphat und 40 g des zuvor hergestellten PS-Saatlatex wurden auf 65 °C erwärmt. Anschließend wurde ein Gemisch aus 475 g Styrol, 10 g DCPA und 15 g BDA innerhalb von 3 Stunden zugegeben. Nach Beendigung der Monomerzugabe wurde die Emulsion noch 1 Stunde bei 65 °C gehalten. Die Pfropfgrundlage MV.2.1 hatte eine mittlere Teilchengröße (d₅₀) von 250 nm. Die Emulsion hatte einen Feststoffgehalt von 10,5%.

### III.5.2.2 Herstellung der ersten Pfropfauflage MV.2.2

Zu 4700 g der im Abschnitt III.5.2.1 erhaltenen Emulsion wurden 20 g des Natriumsalzes einer C₁₂- bis C₁₈-Paraffinsulfonsäure, 7,5 g Kaliumperoxodisulfat, 10 g Natriumhydrogencarbonat und 2 g Natriumpyrophosphat gegeben. Bei 65 °C wurden 2459 g Butylacrylat und 50 g DCPA innerhalb von 3,5 Stunden zugegeben und 2 weitere Stunden bei 65 °C nachgerührt. Die mittlere Teilchengröße (d₅₀) des Pfropfcopolymerisats betrug 450 nm.
Die Emulsion hatte einen Feststoffgehalt von 38,6%.

### III.5.2.3 Herstellung der zweiten Pfropfauflage MV.2.3

5000 g der unter III.5.2.2 erhaltenen Emulsion wurde mit 2400 g Wasser verdünnt und 5 g des Natriumsalzes einer C₁₂- bis C₁₈-Paraffinsulfonsäure und 3,5 g Kaliumperoxodisulfat zugegeben. Bei 65 °C wurde ein Gemisch aus 675 g Styrol und 225 g Acrylnitril innerhalb von 2 Stunden zugetropft und weitere 2 Stunden bei 65 °C nachgerührt.

Die mittlere Teilchengröße (d₅₀) der Pfropfcopolymerisate betrug 540 nm.
Die Emulsion hatte einen Feststoffgehalt von 38,8%.

### III.6 Aufarbeitung der Pfropfcopolymerisate

Die Pfropfcopolymerisate wurden mittels einer Calciumchloridlösung bei 95 °C aus der Emulsion gefällt, mit Wasser gewaschen und im warmen Luftstrom getrocknet.

### III.7 Abmischungsversuche

Zur Herstellung der Abmischung wurde als Komponente iii ein Styrol/Acrylnitril-Copolymerisat mit einem Acrylnitrilgehalt von 34% und einer Viskositätszahl von 78 ml/g (die Viskositätszahlen wurden an einer 0,5%igen Lösung in Dimethylformamid bei 23 °C bestimmt) verwendet. Die gefällten und getrockneten unter III. beschriebenen Pfropfcopolymerisate wurden auf einem Extruder jeweils mit der Komponente iii bei 260 °C abgemischt. Aus diesem Gemisch wurden Formteile hergestellt, an denen die Einfärbbarkeit, der Glanz und die Kerbschlagzähigkeit gemäß den zuvor beschriebenen Meßverfahren bestimmt wurde.

In der nachfolgenden Tabelle III.1 sind die jeweiligen Anteile der unter III beschriebenen Pfropfcopolymerisate und des Styrol/Acrylnitril-Copolymerisats (Komponente iii) in den durch Abmischungsversuche erhaltenen thermoplastischen Massen aufgeführt.

**Tabelle III.1**

| **Komponenten [Gew.-%]** | | | |
|---|---|---|---|
| **Mischung** | **i** | **ii** | **iii** |
| MI | 18 MI.1 | 12 MI.2 | 70 |
| MII | 18 MII.1 | 18 MII.2 | 70 |
| MIII | 18 MIII.1 1 | 12 MIII.2 | 70 |
| MIV | 18 MIV.1 | 12 MIV.2 | 70 |
| MV | 18 MV.1 | 12 MV.2 | 70 |

In der nachfolgenden Tabelle III.2 sind für die Mischungen jeweils die Kerbschlagzähigkeit aₖ, die Schlagzähigkeit a_{N}, die Einfärbbarkeit (ΔE) und der Glanz angegeben.

**Tabelle III.2**

| | **MI** | **MII** | **MIII** | **MIV** | **MV** |
|---|---|---|---|---|---|
| Kerbschlagzähigkeit^{a)} aₖ [220 °C/23 °C] | 11,2 | 11,5 | 10,5 | 11,1 | 10,8 |
| Kerbschlagzähigkeit^{a)} aₖ [280 °C{23 °C] | 11,0 | 11,7 | 8,8 | 11,3 | 11,3 |
| Schlagzähigkeit^{b)} aₙ [220 °C/-30 °C] | 162 | 200 | 130 | 190 | 165 |
| Schlagzähigkeit^{b)} aₙ [280 °C/-30 °C] | 160 | 192 | 145 | 198 | 168 |
| Einfärbbarkeit [ΔE]^{c)} | 10,5 | 9,9 | 9,5 | 10,0 | 10,7 |
| Glanz [%]^{d)} | 68 | 68 | 62 | 64 | 68 |

| | | | | | |
|---|---|---|---|---|---|
| a) in kJ/m², nach ISO 179/1eA | | | | | |
| b) in kJ/m², nach ISO 179/1eU | | | | | |
| c) nach DIN 6174 | | | | | |
| d) nach DIN 67530 | | | | | |

## Patentansprüche

1. Pfropfcopolymerisate (P1), in beliebiger Reihenfolge mindestens enthaltend
P1.1) ein Hartsegment mit einer Glastemperatur von mindestens 11 °C, das mindestens ein vinylaromatisches Monomer als Monomer oder als eines von zwei oder mehr miteinander copolymerisierbaren Monomeren sowie eine Vernetzerkomponente mit
- mindestens Dihydrodicyclopentadienylacrylat als einen Vernetzer mit zwei oder mehr funktionellen Gruppen unterschiedlicher Reaktivität
und
- mindestens einem Vernetzer mit zwei oder mehr funktionellen Gruppen gleicher Reaktivität beinhaltet (P1.1),
und
P1.2) ein Weichsegment mit einer Glastemperatur von höchstens 10 °C, das mindestens ein Acrylat als Monomer oder als eines von zwei oder mehr miteinander copolymerisierbaren Monomeren beinhaltet (P1.2).

2. Pfropfcopolymerisate P1 nach Anspruch 1, mindestens enthaltend
P1.1) 1 bis 95 Gew.-% eines Hartsegments mit einer Glastemperatur von mindestens 25 °C, das
P1.1.1) 50 bis 99,8 Gew.-% mindestens eines vinylaromatischen Monomeren (P1.1.1),
P1.1.2) 0 bis 49,8 Gew.-% mindestens eines mit den Monomeren P1.1.1 copolymerisierbaren Monomeren (P1.1.2),
P1.1.3) 0,1 bis 25 Gew.-% der Vernetzerkomponente, enthaltend
α) 0,1 bis 100 Gew.-% Dihydrodicyclopentadienylacrylat (α) und
β) 0 bis 99,9 Gew.-% mindestens eines weiteren Vernetzers mit zwei oder mehr funktionellen Gruppen unterschiedlicher Reaktivität (β), wobei die Summe der Gewichtsprozente von α und β 100 ergibt (P1.1.3),
P1.1.4) 0,1 bis 25 Gew.-% mindestens eines Vernetzers mit zwei oder mehr funktionellen Gruppen gleicher Reaktivität (P1.1.4),
wobei die Summe der Gewichtsprozente von P1.1.1 bis P1.1.4 100 ergibt, beinhaltet, und
P1.2) 5 bis 99 Gew.-% mindestens eines Weichsegments mit einer Glastemperatur von höchstens 0 °C, das
P1.2.1) 30 bis 100 Gew.-% mindestens eines Acrylats (P1.2.1),
P1.2.2) 0 bis 50 Gew.-% mindestens eines mit den Monomeren P1.2.1 copolymerisierbaren Monomeren (P1.2.2) und
P1.2.3) 0 bis 20 Gew.-% mindestens eines Vernetzers (P1.2.3)
beinhaltet, wobei die Summe der Gewichtsprozente von P1.2.1 bis P1.2.3 bzw. P1.1 und P1.2 100 ergibt.

3. Pfropfcopolymerisate P1 nach Anspruch 1 oder 2, dadurch gekennzeichnet, daß das Hartsegment P1.1 mindestens Divinylbenzol und/oder Butandioldiacrylat als Vernetzer mit zwei oder mehr funktionellen Gruppen gleicher Reaktivität beinhaltet.

4. Verfahren zur Herstellung von Pfropfcopolymerisaten P1 nach einem der Ansprüche 1 bis 3, dadurch gekennzeichnet, daß die die Segmente des Pfropfcopolymerisats P1 bildenden Monomere und Vernetzer in einer Emulsion in Gegenwart mindestens eines Emulgators in einem Temperaturbereich von 20 bis 100 °C polymerisiert werden.

5. Verfahren nach Anspruch 4, dadurch gekennzeichnet, daß das Verhältnis der Zulaufraten von Monomeren und Vernetzer P1.1.1 bis P1.1.4 zu dem der Monomeren und Vernetzer P1.2.1 bis P1.2.3 sowie das Verhältnis der Zulaufraten der Emulgatoren für ein Hartsegment P1.1 zu denen für ein Weichsegment P1.2 unabhängig voneinander jeweils 0,05 bis 20 beträgt.

6. Pfropfcopolymerisate (P2), mindestens enthaltend
P2.1 1 bis 94,9 Gew.-% P1.1 (P2.1),
P2.2 5 bis 98,9 Gew.-% P1.2 (P2.2) und
P2.3 0,1 bis 94 Gew.-% mindestens eines zusätzlichen Segments (P2.3),
wobei die Summe der Segmente P2.1 bis P2.3 100 ergibt.

7. Pfropfcopolymerisate P2 nach Anspruch 6, dadurch gekennzeichnet, daß P2.3 in beliebiger Reihenfolge eine Polymerzusammensetzung P2.3.1, mindestens enthaltend
P2.3.1.1) 30 bis 99,9 Gew.-% mindestens eines vinylaromatischen Monomeren,
P2.3.1.2) 0 bis 50 Gew.-% mindestens eines mit P2.3.1.1 copolymerisierbaren Monomeren und
P2.3.1.3) 0,1 bis 20 Gew.-% eines Vernetzers α oder β oder deren Mischungen
und/oder eine zweite Polymerzusammensetzung P2.3.2, enthaltend
P2.3.2.1) 50 bis 100 Gew.-% mindestens eines vinylaromatischen Monomeren und
P2.3.2.2) 0 bis 50 Gew.-% mindestens eines mit P2.3.2.1 copolymerisierbaren Monomeren
beinhaltet, wobei die Summe der Gewichtsprozente von P2.3.1.1 bis P2.3.1.3 und von P2.3.2.1 und P2.3.2.2 jeweils 100 ergibt.

8. Pfropfcopolymerisate (P3), mindestens enthaltend
P3.1) ein Weichsegment mit einer Glastemperatur von höchstens 0 °C aus mindestens einem Acrylat und mindestens einem Vernetzer als Pfropfgrundlage und
P3.2) ein Pfropfcopolymerisat P1 nach einem der Ansprüche 1 bis 3 oder P2 nach Anspruch 6 oder 7 als Pfropfauflage.

9. Pfropfcopolymerisate P3 nach Anspruch 8, dadurch gekennzeichnet, daß das Weichsegment P3.1 mindestens
P3.1.1) 30 bis 99,9 Gew.-% mindestens eines Acrylats,
P3.1.2) 0 bis 50 Gew.-% mindestens eines mit den Monomeren P3.1.1 copolymerisierbaren Monomeren und
P3.1.3) 0,1 bis 20 Gew.-% mindestens eines Vernetzers
beinhaltet, wobei die Summe der Gewichtsprozente von P3.1.1 bis P3.1.3 100 ergibt.

10. Verfahren zur Herstellung von Pfropfcopolymerisaten P3 nach Anspruch 8 oder 9, dadurch gekennzeichnet, daß die die Segmente des Pfropfcopolymerisats P3 bildenden Monomere und Vernetzer in einer Emulsion polymerisiert werden, wobei, wenn ein Weichsegment auf ein Hartsegment folgt, das Verhältnis der Zulaufraten der ein Hartsegment bildenden Monomere und Vernetzer zu den ein Weichsegment bildenden Monomeren und Vernetzern sowie das Verhältnis der Zulaufraten der Emulgatoren für dieses Hartsegment zu den für dieses Weichsegment unabhängig voneinander jeweils 0,05 bis 20 beträgt.

11. Verfahren nach Anspruch 10, dadurch gekennzeichnet, daß die Polymerisation in einem Temperaturbereich von 20 bis 100°C erfolgt.

12. Verwendung eines oder mehrerer Pfropfcopolymerisate nach einem der Ansprüche 1, 2, 3, 6, 7, 8 und 9 für pfropfcopolymerisathaltige Mischungen und/oder thermoplastische Massen.

13. Mischung (M1), enthaltend mindestens ein
M1.I) Pfropfcopolymerisat (P4), das
P4.1) 0,1 bis 90 Gew.-% mindestens einer kautschukelastischen Pfropfgrundlage P4.1 aus einem Weichsegment mit einer Glastemperatur von höchstens 0 °C, aufgebaut aus
P4.1.1) 40 bis 99,9 Gew.-% mindestens eines Acrylats, Diens oder Dialkylsiloxans,
P4.1.2) 0,1 bis 10,1 Gew.-% mindestens eines Vernetzers und
P4.1.3) 0 bis 49,9 Gew.-% mindestens eines weiteren, mit den Monomeren P4.1.1 copolymerisierbaren Monomeren P4.1.3, wobei die Summe der Gew.-% von P4.1.1 bis P4.1.3 100 ergibt,
P4.2) 5 bis 49,9 Gew.-% mindestens eines Hartsegments mit einer Glastemperatur von mindestens 25 °C als Pfropfauflage, bestehend aus
P4.2.1) 30 bis 100 Gew.-% mindestens eines vinylaromatischen Monomeren,
P4.2.2) 0 bis 20 Gew.-% mindestens eines Vernetzers und
P4.2.3) 0 bis 50 Gew.-% mindestens eines weiteren mit P4.2.1 copolymerisierbaren Monomeren, wobei die Summe der Gew.-% von P4.2.1 bis P4.2.3 100 ergibt, und
P4.3) 5 bis 50 Gew.-% mindestens eines Hartsegments mit einer Glastemperatur von mindestens 25 °C als Pfropfauflage, bestehend aus
P4.3.1) 0,1 bis 99,9 Gew.-% mindestens eines vinylaromatischen Monomeren und
P4.3.2) 0,1 bis 99,9 Gew.-% mindestens eines mit P4.3.1 copolymerisierbaren Monomeren,
beinhaltet,
wobei die Summe der Gew.-% von P4.3.1 und P4.3.2 und die Summe der Gew.-% P4.1 bis P4.3 jeweils 100 ergibt,
und
M1.II) Pfropfcopolymerisat P1 nach einem der Ansprüche 1 bis 3.

14. Mischung (M2), enthaltend mindestens ein
M1.I) Pfropfcopolymerisat P4 und
M2.II) Pfropfcopolymerisat P2 nach Anspruch 6 oder 7.

15. Mischung (M3), enthaltend mindestens ein
M3.I) Pfropfcopolymerisat P4 und
M3.II) Pfropfcopolymerisat P3 nach Anspruch 8 oder 9.

16. Mischung (M4), enthaltend mindestens ein
M4.I) Pfropfcopolymerisat (P5), das
P5.1) 30 bis 90 Gew.-% mindestens eines Weichsegments P4.1 und
P5.2) 10 bis 70 Gew.-% mindestens eines Hartsegments P4.3, wobei die Summe der Gew.-% von P5.1 und P5.2 100 ergibt,
beinhaltet, und
M4.II) Pfropfcopolymerisat P1 nach einem der Ansprüche 1 bis 3.

17. Mischung (M5), enthaltend mindestens ein
M5.I) Pfropfcopolymerisat P5 und
M5.II) Pfropfcopolymerisat P2 nach Anspruch 6 oder 7.

18. Mischung (M6), enthaltend mindestens ein
M6.I) Pfropfcopolymerisat P5 und
M6.II) Pfropfcopolymerisat P3 nach Anspruch 8 oder 9.

19. Verfahren zur Herstellung von Mischungen nach einem der Ansprüche 13 bis 18, dadurch gekennzeichnet, daß die in den Mischungen beinhalteten Pfropfcopolymerisate in einem Extruder bei Temperaturen von 200 bis 300 °C und einer mittleren Verweilzeit von 0,1 bis 100 min miteinander vermischt werden.

20. Verwendung einer oder mehrerer Pfropfcopolymerisate P1 bis P3 und/ oder Mischungen M1 bis M6 für thermoplastische Massen.

21. Thermoplastische Massen (T1), enthaltend mindestens
T1.i) 0,1 bis 95 Gew.-% mindestens eines der Pfropfcopolymere P1 bis P3 und/oder mindestens eine der Mischungen M1 bis M6,
T1.ii) 0 bis 94,9 Gew.-% mindestens eines von T1.i verschiedenen Pfropfcopolymerisats und/oder Mischung,
T1.iii) 5 bis 99,9 Gew.-% mindestens eines Copolymerisats aus
T1.iii.1) 50 bis 100 Gew.-% mindestens eines vinylaromatischen Monomeren, C₁- bis C₁₈-Alkylacrylats, C₁- bis C₁₈-Alkylmethacrylats oder deren Mischungen und
T1.iii.2) 0 bis 50 Gew.-% Acrylnitril, Methacrylnitril, Maleinsäureanhydrid, n-substituierten Maleinimiden oder deren Mischungen, wobei die Summe der Gew.-% von T1.iii.1 und T1.iii.2 100 ergibt,
T1.iv) 0 bis 90 Gew.-% mindestens eines Polycarbonats und
T1.v) 0 bis 50 Gew.-% Zusatzstoffe, wobei die Summe von T1.i bis T1.v 100 ergibt.

22. Formkörper, Folien, Fasern oder Beschichtungen, enthaltend mindestens eines der Pfropfcopolymerisate P1 bis P3 und/oder mindestens eine der Mischungen M1 bis M6 und/oder thermoplastische Massen T1.

23. Verwendung mindestens eines der Pfropfcopolymerisate P1 bis P3 und/oder mindestens einer der Mischungen M1 bis M6 und/oder thermoplastischen Massen T1 für Formkörper, Folien, Fasern oder Beschichtungen.

## Claims

1. A graft copolymer (P1) containing, in any desired sequence, at least
P1.1) a hard segment having a glass transition temperature of at least 11°C, which contains at least one vinylaromatic monomer as the monomer or as one of two or more monomers copolymerizable with one another and a crosslinker component comprising
- at least dihydrodicyclopentadienyl acrylate as a crosslinking agent having two or more functional groups of different reactivity
and
- at least one crosslinking agent having two or more functional groups of the same reactivity (P1.1)
and
P1.2) a soft segment having a glass transition temperature of not more than 10°C, which contains at least one acrylate as the monomer or as one of two or more monomers copolymerizable with one another (P1.2).

2. A graft copolymer P1 as claimed in claim 1, containing at least
P1.1) from 1 to 95% by weight of a hard segment having a glass transition temperature of at least 25°C, which contains
P1.1.1) from 50 to 99.8% by weight of at least one vinylaromatic monomer (P1.1.1),
P1.1.2) from 0 to 49.8% by weight of at least one monomer (P1.1.2) copolymerizable with the monomers P1.1.1,
P1.1.3) from 0.1 to 25% by weight of the crosslinker component containing
α) from 0.1 to 100% by weight of dihydrodicyclopentadienyl acrylate (α) and
β) from 0 to 99.9% by weight of at least one further crosslinking agent having two or more functional groups of different reactivity (β), the sum of the percentages by weight of α and β being 100 (P1.1.3), and
P1.1.4) from 0.1 to 25% by weight of at least one crosslinking agent having two or more functional groups of the same reactivity (P1.1.4),
the sum of the percentages by weight of P1.1.1 to P1.1.4 being 100, and
P1.2) from 5 to 99% by weight of at least one soft segment having a glass transition temperature of not more than 0°C, which contains
P1.2.1) from 30 to 100% by weight of at least one acrylate (P1.2.1),
P1.2.2) from 0 to 50% by weight of at least one monomer (P1.2.2) copolymerizable with the monomers P1.2.1 and
P1.2.3) from 0 to 20% by weight of at least one crosslinking agent (P1.2.3),
the sum of the percentages by weight of P1.2.1 to P1.2.3 or P1.1 and P1.2 being 100.

3. A graft copolymer P1 as claimed in claim 1 or 2, wherein the hard segment P1.1 contains at least divinylbenzene or butanediol diacrylate as the crosslinking agent having two or more functional groups of the same reactivity.

4. A process for the preparation of the graft copolymer P1 as claimed in any of claims 1 to 3, wherein the monomers and crosslinking agents forming the segments of the graft copolymer P1 are polymerized in an emulsion in the presence of at least one emulsifier at from 20 to 100°C.

5. A process as claimed in claim 4, wherein the ratio of the feed rates of monomers and crosslinking agents P1.1.1 to P1.1.4 to those of the monomers and crosslinking agents P1.2.1 to P1.2.3 and the ratio of the feed rates of the emulsifiers for a hard segment P1.1 to those for a soft segment P1.2 are each, independently of one another, from 0.05 to 20.

6. A graft copolymer (P2) containing at least
P2.1 from 1 to 94.9% by weight of P1.1 (P2.1),
P2.2 from 5 to 98.9% by weight of P1.2 (P2.2) and
P2.3 from 0.1 to 94% by weight of at least one additional segment (P2.3),
the sum of the segments P2.1 to P2.3 being 100.

7. A graft copolymer P2 as claimed in claim 6, wherein P2.3 contains, in any desired sequence, a polymer composition P2.3.1 containing at least
P2.3.1.1) from 30 to 99.9% by weight of at least one vinylaromatic monomer,
P2.3.1.2) from 0 to 50% by weight of at least one monomer copolymerizable with P2.3.1.1 and
P2.3.1.3) from 0.1 to 20% by weight of a crosslinking agent α or β or a mixture thereof
or a second polymer composition P2.3.2 containing
P2.3.2.1) from 50 to 100% by weight of at least one vinylaromatic monomer and
P2.3.2.2) from 0 to 50% by weight of at least one monomer copolymerizable with P2.3.2.1,
the sum of the percentages by weight of P2.3.1.1 to P2.3.1.3 and of P2.3.2.1 and P2.3.2.2 each being 100.

8. A graft copolymer (P3) containing at least
P3.1) a soft segment having a glass transition temperature of not more than 0°C and comprising at least one acrylate and at least one crosslinking agent, as the grafting base, and
P3.2) a graft copolymer P1 as claimed in any of claims 1 to 3 or P2 as claimed in claim 6 or 7, as the graft layer.

9. A graft copolymer P3 as claimed in claim 8, wherein the soft segment P3.1 contains at least
P3.1.1) from 30 to 99.9% by weight of at least one acrylate,
P3.1.2) from 0 to 50% by weight of at least one monomer copolymerizable with the monomers P3.1.1 and
P3.1.3) from 0.1 to 20% by weight of at least one crosslinking agent,
the sum of the percentages by weight of P3.1.1 to P3.1.3 being 100.

10. A process for the preparation of a graft copolymer P3 as claimed in claim 8 or 9, wherein the monomers and crosslinking agents forming the segments of the graft copolymer P3 are polymerized in an emulsion, when a soft segment follows a hard segment the ratio of the feed rates of the monomers and crosslinking agents forming a hard segment to the monomers and crosslinking agents forming a soft segment and the ratio of the feed rates of the emulsifiers for this hard segment to those for this soft segment each being, independently of one another, from 0.05 to 20.

11. A process as claimed in claim 10, wherein the polymerization is carried out at from 20 to 100°C.

12. The use of one or more graft copolymers as claimed in any of claims 1, 2, 3, 6, 7, 8 and 9 for graft copolymer-containing blends or thermoplastic materials.

13. A blend (M1) containing at least one
M1.I) graft copolymer (P4) which contains
P4.1) from 0.1 to 90% by weight of at least one elastomeric grafting base P4.1 comprising a soft segment having a glass transition temperature of not more than 0°C, composed of
P4.1.1) from 40 to 99.9% by weight of at least one acrylate, diene or dialkylsiloxane,
P4.1.2) from 0.1 to 10.1% by weight of at least one crosslinking agent and
P4.1.3) from 0 to 49.9% by weight of at least one further monomer P4.1.3 copolymerizable with the monomers P4.1.1, the sum of the percentages by weight of P4.1.1 to P4.1.3 being 100,
P4.2) from 5 to 49.9% by weight of at least one hard segment having a glass transition temperature of at least 25°C, as a graft layer, consisting of
P4.2.1) from 30 to 100% by weight of at least one vinylaromatic monomer,
P4.2.2) from 0 to 20% by weight of at least one crosslinking agent and
P4.2.3) from 0 to 50% by weight of at least one further monomer copolymerizable with P4.2.1, the sum of the percentages by weight of P4.2.1 to P4.2.3 being 100, and
P4.3) from 5 to 50% by weight of at least one hard segment having a glass transition temperature of at least 25°C, as a graft layer, consisting of
P4.3.1) from 0.1 to 99.9% by weight of at least one vinylaromatic monomer and
P4.3.2) from 0.1 to 99.9% by weight of at least one monomer copolymerizable with P4.3.1,
the sum of the percentages by weight of P4.3.1 and P4.3.2 and the sum of the percentages by weight of P4.1 to P4.3 each being 100,
and
M1.II) graft copolymer P1 as claimed in any of claims 1 to 3.

14. A blend (M2) containing at least one
M1.I) graft copolymer P4 and
M2.II) graft copolymer P2 as claimed in claim 6 or 7.

15. A blend (M3) containing at least one
M3.I) graft copolymer P4 and
M3.II) graft copolymer P3 as claimed in claim 8 or 9.

16. A blend (M4) containing at least one
M4.I) graft copolymer (P5) which contains
P5.1) from 30 to 90% by weight of at least one soft segment P4.1 and
P5.2) from 10 to 70% by weight of at least one hard segment P4.3, the sum of the percentages by weight of P5.1 1 and P5.2 being 100, and
M4.II) graft copolymer P1 as claimed in any of claims 1 to 3.

17. A blend (M5) containing at least one
M5.I) graft copolymer P5 and
M5.II) graft copolymer P2 as claimed in claim 6 or 7.

18. A blend (M6) containing at least one
M6.I) graft copolymer P5 and
M6.II) graft copolymer P3 as claimed in claim 8 or 9.

19. A process for the preparation of a blend as claimed in any of claims 13 to 18, wherein the graft copolymers contained in the blend are mixed with one another in an extruder at from 200 to 300°C and in an average residence time of from 0.1 to 100 minutes.

20. The use of one or more graft copolymers P1 to P3 or blends M1 to M6 for thermoplastic materials.

21. A thermoplastic material (T1) containing at least
T1.i) from 0.1 to 95% by weight of at least one of the graft copolymers P1 to P3 or at least one of the blends M1 to M6,
T1.ii) from 0 to 94.9% by weight of at least one graft copolymer or blend differing from T1.i,
T1.iii) from 5 to 99.9% by weight of at least one copolymer of
T1.iii.1) from 50 to 100% by weight of at least one vinylaromatic monomer, C₁-C₁₈-alkyl acrylate, C₁-C₁₈-alkyl methacrylate or a mixture thereof and
T1.iii.2) from 0 to 50% by weight of acrylonitrile, methacrylonitrile, maleic anhydride, an N-substituted maleimide or a mixture thereof, the sum of the percentages by weight of T1.iii.1 and Tl.iii.2 being 100,
T1.iv) from 0 to 90% by weight of at least one polycarbonate and
T1.v) from 0 to 50% by weight of additives, the sum of Tl.i to T1.v being 100.

22. A molding, film, fiber or coating containing at least one of the graft copolymers P1 to P3 or at least one of the blends M1 to M6 or thermoplastic materials T1.

23. The use of at least one of the graft copolymers P1 to P3 or at least one of the blends M1 to M6 or thermoplastic materials T1 for moldings, films, fibers or coatings.

## Revendications

1. Copolymères de greffage (P1), en séquence quelconque, contenant au moins
P1.1) un segment dur d'une température de transition vitreuse d'au moins 11°C, contenant au moins un monomère vinylaromatique en tant que monomère ou en tant que l'un de deux ou plus de deux monomères copolymérisables ensemble ainsi qu'un composant de réticulation avec
- au moins de l'acrylate de dihydrodicyclopentadiényle en tant qu'agent de réticulation comportant deux ou plus de deux groupes fonctionnels à réactivité différente
et
- au moins un agent de réticulation comportant deux ou plus de deux groupes fonctionnels de même réactivité (P1.1),
et
P1.2) un segment mou d'une température de transition vitreuse de 10°C maximum, contenant au moins un acrylate en tant que monomère ou en tant que l'un de deux ou plus de deux monomères copolymérisables ensembles (P1.2)

2. Copolymères de greffage P1 selon la revendication 1, contenant au moins
P1.1) de 1 à 95% en poids d'un segment dur d'une température de transition vitreuse d'au moins 25°C qui contient
P1.1.1) de 50 à 99.8% en poids d'au moins un monomère vinylaromatique (P1.1.1),
P1.1.2) de 0 à 49.8% en poids d'au moins un monomère (P1.1.2) copolymérisable avec le monomère P1.1.,
P1.1.3) de 0.1 à 25% en poids du composant de réticulation, contenant
α) de 0.1 à 100% en poids d'acrylate de dihydrodicyclopentadiényle (α) et
β) de 0 à 99.9% en poids d'au moins un autre agent de réticulation comportant deux ou plus de deux groupes fonctionnels (β) de réactivité différente, la somme des pourcentages pondéraux de α et β totalisant 100 (P1.1.3),
P1.1.4) de 0.1 à 25% en poids d'au moins un agent de réticulation comportant deux ou plus de deux groupes fonctionnels de réactivité identique (P1.1.4),
la somme des pourcentages pondéraux de P1.1.1 à P1.1.4 totalisant 100, et
P1.2) de 5 à 99% en poids d'au moins un segment mou d'une température de transition vitreuse de 0°C au maximum, contenant
P1.2.1) de 30 à 100% en poids d'au moins un acrylate (P1.2.1),
P1.2.2) de 0 à 50% en poids d'au moins un monomère copolymérisable avec le monomère P1.2.1 (P1.2.2) et
P1.2.3) de 0 à 20 % en poids d'au moins un agent de réticulation (P1.2.3),
la somme des pourcentages pondéraux de P1.2.1 à P 1.2.3 et/ou de P1.1 et P1.2 totalisant 100.

3. Copolymères de greffage P1 selon la revendication 1 ou 2, caractérisés en ce que le segment dur P1.1 contient au moins du vinylbenzène et/ou du diacrylate de butanediol en tant qu'agent réticulant comportant deux ou plus de deux groupes fonctionnels à réactivité identique.

4. Procédé de préparation de copolymères de greffage P1 selon l'une des revendications 1 à 3, caractérisé en ce que l'on polymérise les segments du monomère formant le copolymère de greffage P1 et l'agent de réticulation dans une émulsion en présence d'au moins un émulsifiant dans une plage de température de 20 à 100°C

5. Procédé selon la revendication 4, caractérisé en ce que le rapport du taux de mise en oeuvre de monomère(s) et d'agent de réticulation P1.1.1 à P1.1.4 à celui de monomère et d'agent de réticulation P1.2.1 à P1.2.3, ainsi que le rapport du taux de mise en oeuvre des émulsifiants pour un segment dur P1.1 à celui pour un segment mou P1.2 est à chaque fois de 0.05 à 20 indépendamment l'un de l'autre.

6. Copolymères de greffage (P2) contenant au moins
P2.1 de 1 à 94.9% en poids de P1.1 (P2.1),
P2.2 de 5 à 98.9% en poids de P1.2 (P2.2) et
P2.3 de 0.1 à 94% en poids d'au moins un segment additionnel (P2.3), la somme des segments P2.1 à P2.3 totalisant 100.

7. Copolymères de greffage P2 selon la revendication 6, caractérisée en ce que P2.3 contient en séquence quelconque une composition polymère P2.3.1, contenant au moins
P2.3.1.1) de 30 à 99.9% en poids d'au moins un monomère vinylaromatique α ou β ou leurs mélanges
et / ou une deuxième composition polymère P2.3.2, contenant
P2.3.2.1) de 50 à 100% en poids d'au moins un monomère vinylaromatique et
P2.3.2.2) de 0 à 50% en poids d'au moins un monomère copolymérisable avec P2.3.2.1,
la somme des pourcentages pondéraux de P2.3.1.1 à P2.3.1.3 et de P2.3.2.1 à P2.3.2.2 totalisant à chaque fois 100.

8. Copolymères de greffage (P3) contenant au moins
P3.1) un segment mou d'une température de transition vitreuse de 0°C maximum, constitué d'au moins un acrylate et au moins un agent de réticulation en tant que base de greffage et
P3.2) Un copolymère de greffage P1 selon l'une des revendications 1 à 3, où P2 selon la revendication 6 ou 7 en tant que greffon.

9. Copolymères de greffage P3 selon la revendication 8, caractérisés en ce que le segment P3.1 contient au moins
P3.1.1) de 30 à 99.9% en poids d'au moins un acrylate,
P3.1.2) de 0 à 50% en poids d'au moins un monomère copolymérisable avec le monomère P3.1.1 et
P3.1.3) de 0.1 à 20% en poids d'au moins un agent de réticulation, la somme des pourcentages pondéraux de P3.1.1 à P3.1.3 totalisant 100

10. Procédé de préparation de copolymères de greffage P3 selon la revendication 8 ou 9, caractérisé en ce que l'agent de réticulation et les monomères formant les segments du copolymère de greffage P3 sont polymérisés en émulsion et en ce que lorsqu'un segment mou succède à un segment dur, le rapport du taux de mise en oeuvre de l'agent de réticulation et du monomère formant un segment dur à l'agent de réticulation et au monomère formant un segment mou, ainsi que le rapport du taux de mise en oeuvre des émulsifiants pour ce segment dur à celui du segment mou soit, indépendamment les uns des autres, de 0,05 à 20 à chaque fois.

11. Procédé selon la revendication 10, caractérisé en ce que la polymérisation est entreprise dans une plage de température de 20 à 100°C.

12. Utilisation d'un ou plusieurs copolymères de greffage selon l'une des revendications 1, 2, 3, 6, 7, 8 et 9 pour des masses thermoplastiques et/ou des mélanges contenant un copolymère de greffage.

13. Mélange (M1) contenant au moins
M1.1) un copolymère de greffage (P4) qui contient
P4.1) de 0.1 à 90% en poids d'au moins une base de greffage caoutchouteuse P4.1 à base d'un segment mou d'une température de transition vitreuse de 0°C maximum, constituée de
P4.1.1) 40 à 99,9% en poids d'au moins un acrylate, un diène ou un dialkylsiloxane,
P4.1.2) 0,1 à 10,1% en poids d'au moins un agent de réticulation et
P4.1.3) 0 à 49,9% d'au moins un autre monomère P4.1.3 copolymérisable avec le monomère P4.1.1, la somme des pourcentages pondéraux de P4.1.1 à P4.1.3 totalisant 100,
P4.2) 5 à 49,9% d'au moins un segment dur d'une température de transition vitreuse d'au moins 25°C en tant que greffon, constitué de
P4.2.1) 30 à 100% en poids d'au moins un monomère vinylaromatique,
P4.2.2) 0 à 20% en poids d'au moins un agent de réticulation et
P4.2.3) 0 à 50% en poids d'au moins un autre monomère copolymérisable avec P4.2.1, la somme des pourcentages pondéraux de P4.2.1à P4.2.3 totalisant 100, et
P4.3) 5 à 50% en poids d'au moins un segment dur d'une température de transition vitreuse d'au moins 25°C en tant que greffon, constitué de
P4.3.1) 0,1 à 99,9% en poids d'au moins un monomère vinylaromatique et
P4.3.2) 0,1 à 99,9% en poids d'au moins un monomère copolymérisable avec P4.3.1;
la somme des pourcentages pondéraux de P4.3.1 et P4.3.2 et la somme des pourcentages pondéraux de P4.1 à P4.3 totalisant à chaque fois 100,
et
M1.II) Un copolymère de greffage P1 selon l'une des revendications 1 à 3.

14. Mélange (M2) contenant au moins
M1.I) un copolymère de greffage P4 et
M2.II) un copolymère de greffage P2 selon la revendication 6 ou 7.

15. Mélange (M3) contenant au moins
(M3.I) un copolymère de greffage P4 et
M3.II) un copolymère de greffage P3 selon la revendication 8 ou 9.

16. Mélange (M4) contenant au moins
M4.I) un copolymère de greffage (P5) contenant
P5.1) 30 à 90% en poids d'au moins un segment mou P4.1 et
P5.2) 10 à 70% en poids d'au moins un segment dur P4.3, la somme des pourcentages pondéraux de P5.1 et P5.2 totalisant 100,
et
M4.II) un copolymère de greffage P1 selon l'une des revendications 1 à 3.

17. Mélange (M5) contenant au moins
M5.I) un copolymère de greffage P5 et
M5.II) un copolymère de greffage P2 selon la revendication 6 ou 7.

18. Mélange (M6) contenant au moins
M6.I) un copolymère de greffage P5 et
M6.II) un copolymère de greffage P3 selon la revendication 8 ou 9.

19. Procédé de préparation de mélanges selon l'une des revendications 13 à 18, caractérisé en ce que les copolymères de greffage contenus dans les mélanges sont mélangés dans une extrudeuse à des températures de 200 à 300°C et avec un temps de séjour moyen de 0,1 à 100 minutes.

20. Utilisation d'un ou plusieurs copolymères de greffage P1 à P3 et/ou de mélanges M1 à M6 pour des masses thermoplastiques.

21. Masses thermoplastiques (T1) contenant au moins
T1.i) 0,1 à 95% en poids d'au moins l'un des copolymères de greffage P1 à P3 et/ou au moins l'un des mélanges M1 à M6,
T1.ii) 0 à 94,9% en poids d'au moins un copolymère différent de T1.i et/ou mélange;
T1.iii) 5 à 99,9% en poids d'au moins un copolymère de
T1.iii.1) 50 à 100% en poids d'au moins un monomère vinylaromatique, un alkylacrylate en C₁ à C₁₈, un alkylméthacrylate en C₁ à C₁₈ ou leurs mélanges, et
T1.iii.2) 0 à 50% en poids d'acrylonitrile, de méthacrylonitrile, d'anhydride maléique, de maléimides n-substitués ou leurs mélanges, la somme des pourcentages pondéraux de T1.iii.1 et T1.iii.2 totalisant 100,
T1.iv) 0 à 90% en poids d'au moins un polycarbonate et
T1.v) 0 à 50% en poids d'additifs, la somme de T1.i à T1.v totalisant 100.

22. Articles façonnés, feuilles, fibres ou revêtements, contenant au moins un des copolymères de greffage P1 à P3 et/ou au moins un des mélanges M1 à M6 et/ou des masses thermoplastiques T1.

23. Utilisation d'au moins l'un des copolymères de greffage P1 à P3 et/ou au moins l'un des mélanges M1 à M6 et/ou des masses thermoplastiques T1 pour des articles façonnés, des feuilles, des fibres ou des revêtements.
